# EUROPEAN PATENT APPLICATION

(11) **EP 4 716 295 A1**
(43) Date of publication of application: **25.03.2026**
(21) Application number: 24822661.5
(22) Date of filing: 07.06.2024
(51) Int. Cl.: H04W 28/24

(54) **COMMUNICATION METHOD AND APPARATUS**

(30) Priority: 14.06.2023 CN 202310709389; 28.09.2023 CN 202311289041; 03.11.2023 CN 202311466498
(71) Applicant: Huawei Technologies Co., Ltd., Shenzhen, Guangdong 518129 (CN)
(72) Inventor: LI, Kuikui, Shenzhen, Guangdong 518129 (CN); ZENG, Qinghai, Shenzhen, Guangdong 518129 (CN)
(74) Representative: Goddar, Heinz J.
(86) International application number: PCT/CN2024/098207
(87) International publication number: WO 2024/255711

(57) **Abstract**

This application relates to the wireless communication field, and discloses a communication method and apparatus, to determine an appropriate quality of service profile. The method includes: obtaining a plurality of candidate quality of service profiles; when a function of actively modifying a quality of service profile is enabled, determining a target quality of service profile based on a current network status and a terminal load corresponding to one or more of the plurality of candidate quality of service profiles; and sending first information indicating the target quality of service profile.

## Description

This application claims priorities to Patent Application No. 202310709389.6, filed with the China National Intellectual Property Administration on June 14, 2023 and entitled "COMMUNICATION METHOD AND APPARATUS", to Patent Application No. 202311289041.2, filed with the China National Intellectual Property Administration on September 28, 2023 and entitled "COMMUNICATION METHOD AND APPARATUS", and to Patent Application No. 202311466498.6, filed with the China National Intellectual Property Administration on November 3, 2023 and entitled "COMMUNICATION METHOD AND APPARATUS", all of which are incorporated herein by reference in their entireties.

### TECHNICAL FIELD

This application relates to the wireless communication field, and in particular, to a communication method and apparatus.

### BACKGROUND

In a communication system, a radio access network (radio access network, RAN) node may obtain a quality of service (quality of service, QoS) profile (QoS profile), and perform mapping from a QoS flow to a data radio bearer (data radio bearer, DRB) based on the QoS profile. Then, a terminal and the RAN node may perform data transmission based on the QoS flow, to ensure quality of data transmission. However, with development of communication technologies, communication scenarios become increasingly complex. The foregoing method is inapplicable to a current increasingly complex communication scenario.

### SUMMARY

This application provides a communication method and apparatus, to determine an appropriate quality of service profile.

To achieve the foregoing objective, the following technical solutions are used in this application.

According to a first aspect, a communication method is provided. The method may be performed by a RAN node; may be performed by a module used in the RAN node, for example, a chip, a chip system, or a circuit; or may be implemented by a logical node, a logical module, or software that can implement all or some functions of the RAN node. This is not limited herein. For ease of description, the following uses an example in which the RAN node performs the method for description. The method includes: obtaining a plurality of candidate quality of service profiles; when a function of actively modifying a quality of service profile is enabled, determining a target quality of service profile based on a current network status and a terminal load corresponding to one or more of the plurality of candidate quality of service profiles; and sending first information, where the first information indicates the target quality of service profile.

Based on the method provided in the first aspect, when the function of actively modifying a quality of service profile is enabled, the RAN may determine the target quality of service profile based on the current network status and the terminal load corresponding to one or more of the plurality of candidate quality of service profiles. On one hand, the RAN node may actively modify a quality of service profile to obtain the target quality of service profile. Therefore, the RAN node may determine an appropriate quality of service profile for more communication scenarios based on a requirement. On the other hand, in a process of determining the target quality of service profile, the RAN node not only considers the current network status, but also considers the terminal load, to avoid running hot of a terminal or impact on standby time of the terminal due to an excessively high load of the terminal, thereby improving user experience. In addition, because load statuses of chips of different terminal types and terminal vendors are different, and a current terminal load is further related to many factors such as an environment and an external temperature, it is difficult to accurately obtain and standardize the current terminal load. In the method in the first aspect, the current terminal load does not need to be obtained, but a candidate quality of service profile is associated with a terminal load, and the terminal load is controlled by modifying a quality of service profile, thereby avoiding an excessively high load of the terminal. For example, when a terminal load corresponding to a quality of service profile is high, a quantity of times/frequency of selecting the quality of service profile may be controlled, and/or a use duration of the quality of service profile may be controlled, thereby controlling the terminal load. Therefore, in the method in the first aspect, the load of the terminal can be easily controlled.

In a possible implementation, determining the target quality of service profile based on the current network status and the terminal load corresponding to one or more of the plurality of candidate quality of service profiles includes: preferentially determining that the target quality of service profile is a first candidate quality of service profile, where the first candidate quality of service profile is a candidate quality of service profile that is in a candidate quality of service profile meeting the current network status in the plurality of candidate quality of service profiles and that corresponds to a highest terminal load; or determining that the target quality of service profile is a second candidate quality of service profile, where the second candidate quality of service profile is a candidate quality of service profile that is in a candidate quality of service profile meeting the current network status in the plurality of candidate quality of service profiles and that does not include a candidate quality of service profile with a lowest terminal load.

A higher load of the terminal indicates that a processing task of the terminal is heavier. Therefore, after the processing task is completed, an amount of data that needs to be transmitted by the terminal may be small, and the terminal has a low quality of service requirement. Therefore, if a terminal load corresponding to a candidate quality of service profile is high, a quality of service requirement corresponding to the candidate quality of service profile is low. In other words, the first candidate quality of service profile may also be described as a candidate quality of service profile that is in the candidate quality of service profile meeting the current network status in the plurality of candidate quality of service profiles and that corresponds to a lowest quality of service requirement. Correspondingly, a lower load of the terminal indicates that a processing task of the terminal is lighter. Therefore, after the processing task is completed, an amount of data that needs to be transmitted by the terminal may be larger, and the terminal has a higher quality of service requirement. Therefore, if a terminal load corresponding to a candidate quality of service profile is low, a quality of service requirement corresponding to the candidate quality of service profile is high. In other words, the second candidate quality of service profile may also be described as a candidate quality of service profile that is in the candidate quality of service profile meeting the current network status in the plurality of candidate quality of service profiles and that does not include a candidate quality of service profile with a highest quality of service requirement. Therefore, based on the foregoing possible implementation, the RAN node preferentially determines that the target quality of service profile is the first candidate quality of service profile, or the RAN node determines that the target quality of service profile is the second candidate quality of service profile. This can reduce a quality of service requirement for data transmission between the terminal and the RAN node, so that more terminals can access the RAN node, thereby increasing a quantity of transmitting users.

In a possible implementation, the candidate quality of service profile corresponding to the lowest terminal load is a candidate quality of service profile that meets at least one of the following in the plurality of candidate quality of service profiles: a corresponding priority being the highest, a corresponding uplink guaranteed flow bit rate being the largest, a corresponding downlink guaranteed flow bit rate being the largest, a corresponding terminal computation load being the smallest, a corresponding total uplink and downlink packet delay budget being the largest, a corresponding uplink packet delay budget being the largest, or a corresponding downlink packet delay budget being the largest.

Based on the foregoing possible implementation, the candidate quality of service profile with the lowest terminal load in the plurality of candidate quality of service profiles can be determined.

In a possible implementation, a maximum selected number of the first candidate quality of service profile in a first time period is less than or equal to a first value; a maximum selected percentage of the first candidate quality of service profile in the first time period is less than or equal to a second value; a maximum selected duration of the first candidate quality of service profile in the first time period is less than or equal to a third value; a maximum selected time of the first candidate quality of service profile in the first time period is less than or equal to a fourth value; and/or a minimum selected interval of the first candidate quality of service profile in the first time period is greater than or equal to a fifth value.

Based on the foregoing possible implementation, the RAN node can effectively control the load of the terminal, to avoid overheating of the terminal.

In a possible implementation, enabling the function of actively modifying a quality of service profile includes: receiving first indication information, where the first indication information indicates to actively modify a quality of service profile, and enabling the function based on the first indication information; and/or receiving second indication information, where the second indication information indicates that a terminal is overheating, and enabling the function based on the second indication information.

Based on the foregoing possible implementation, after receiving the first indication information and/or the second indication information, the RAN node may have more manners of determining the target quality of service profile, so that the determined target quality of service profile is applicable to different communication scenarios. For example, the RAN node may not select a quality of service profile with best quality of service that can be provided in a current radio channel condition, but select a quality of service profile other than the quality of service profile with the best quality of service from the plurality of candidate quality of service profiles without affecting service experience of a quality of service flow, thereby improving system performance, for example, reducing air interface resource consumption of a network and increasing a quantity of transmitting users.

In a possible implementation, the first indication information is carried in a session resource setup request message or a session resource setup modification message.

Based on the foregoing possible implementation, the RAN node may receive the first indication information by using the session resource setup request message or the session resource setup modification message. In this way, the first indication information may be carried in an existing message, so that a standard is slightly modified.

In a possible implementation, if the second indication information is received, determining the target quality of service profile based on the current network status and the terminal load corresponding to one or more of the plurality of candidate quality of service profiles includes: determining that the target quality of service profile is a third candidate quality of service profile, where a terminal load corresponding to the third candidate quality of service profile is lower than a current terminal load.

Based on the foregoing possible implementation, the RAN node may determine, based on the second indication information, that the terminal is overheating, and determine, as the target quality of service profile, the third candidate quality of service profile corresponding to the terminal load that is lower than the current terminal load, to reduce the load of the terminal and avoid continuous overheating of the terminal.

In a possible implementation, the first information is further for determining a first parameter, and the first parameter includes at least one of the following: a task split point, a task amount for task processing, a bit rate, a data rate, a frame rate, or resolution.

Based on the foregoing possible implementation, an apparatus that receives the first information may determine at least one parameter in the task split point, the task amount for task processing, the bit rate, the data rate, the frame rate, or the resolution.

In a possible implementation, the first parameter is related to first difference information. The first difference information indicates a difference between the target quality of service profile and a historical quality of service profile determined before the target quality of service profile.

Based on the foregoing possible implementation, the first parameter may be determined based on the difference between the target quality of service profile and the historical quality of service profile. For example, when the target quality of service profile does not change compared with the historical quality of service profile, the first parameter remains unchanged, to avoid deterioration of user experience caused by frequent changes of the first parameter. When the target quality of service profile changes compared with the historical quality of service profile, the first parameter is re-determined to provide a better service for users.

In a possible implementation, sending the first information includes: sending the first information to the terminal, where the first information is carried in downlink control information, a medium access control control element, or a radio resource control message; or sending a first data packet to a user plane function network element, where a header of the first data packet includes the first information.

Based on the foregoing possible implementation, the first information may be sent to the terminal by using the downlink control information, the medium access control control element, or the radio resource control message, or the first information may be sent to the user plane function network element by including the first information in a header of a data packet, thereby quickly sending the first information.

According to a second aspect, a communication method is provided. The method may be performed by a core network element; may be performed by a module used in the core network element, for example, a chip, a chip system, or a circuit; or may be implemented by a logical node, a logical module, or software that can implement all or some functions of the core network element. This is not limited herein. For ease of description, the following uses an example in which the core network element performs the method for description. The method includes: receiving information about a first session from a terminal; obtaining a plurality of candidate quality of service profiles based on the information about the first session; and sending the plurality of candidate quality of service profiles and first indication information to a radio access network node, where the first indication information indicates the radio access network node to actively modify a quality of service profile.

Based on the method provided in the second aspect, the core network element may send the plurality of candidate quality of service profiles and the first indication information to the radio access network node, so that the radio access network node actively determines an appropriate quality of service profile in a plurality of quality of service profiles based on the first indication information.

In a possible implementation, the first indication information is carried in a session resource setup request message or a session resource setup modification message.

Based on the foregoing possible implementation, the core network element may send the first indication information to the radio access network node by using the session resource setup request message or the session resource setup modification message. In this way, the first indication information may be carried in an existing message, so that a standard is slightly modified.

According to a third aspect, a communication method is provided. The method may be performed by a RAN node; may be performed by a module used in the RAN node, for example, a chip, a chip system, or a circuit; or may be implemented by a logical node, a logical module, or software that can implement all or some functions of the RAN node. This is not limited herein. For ease of description, the following uses an example in which the RAN node performs the method for description. The method includes: obtaining a plurality of candidate quality of service profiles, where any candidate quality of service profile in the plurality of candidate quality of service profiles includes at least one of the following: condition information for restricting selection of the candidate quality of service profile, computation load information of a terminal, a total uplink and downlink packet delay budget, an uplink packet delay budget, or a downlink packet delay budget; determining a target quality of service profile in the plurality of candidate quality of service profiles based on a current network status and information included in the candidate quality of service profile; and sending first information, where the first information indicates the target quality of service profile.

Based on the method provided in the third aspect, the RAN node may determine the target quality of service profile in the plurality of candidate quality of service profiles based on the current network status and at least one of the condition information for restricting selection of the candidate quality of service profile, the computation load information of the terminal, the total uplink and downlink packet delay budget, the uplink packet delay budget, or the downlink packet delay budget. Therefore, the RAN node may determine an appropriate quality of service profile for different communication scenarios.

In a possible implementation, the condition information includes at least one of the following: a maximum selected percentage in a first time period, a maximum selected time in the first time period, a maximum selected number in the first time period, a maximum selected duration in the first time period, or a minimum selected interval in the first time period.

Based on the foregoing possible implementation, a quantity of times, a frequency, or a duration of selecting the candidate quality of service profile may be restricted by one or more of the maximum selected percentage in the first time period, the maximum selected time in the first time period, the maximum selected number in the first time period, the maximum selected duration in the first time period, or the minimum selected interval in the first time period.

In a possible implementation, determining the target quality of service profile in the plurality of candidate quality of service profiles based on the current network status and the information included in the candidate quality of service profile includes: when the candidate quality of service profile includes the condition information, the current network status meets a quality of service requirement of the target quality of service profile, and the target quality of service profile meets condition information included in the target quality of service profile; when the candidate quality of service profile includes the computation load information of the terminal, the current network status meets a quality of service requirement of the target quality of service profile, and computation load information of the terminal included in the target quality of service profile meets a current computation load requirement of the terminal; when the candidate quality of service profile includes the total uplink and downlink packet delay budget, the current network status meets a quality of service requirement of the target quality of service profile, and a total uplink and downlink packet delay budget provided by the current network status is less than or equal to a total uplink and downlink packet delay budget included in the target quality of service profile; when the candidate quality of service profile includes the uplink packet delay budget, the current network status meets a quality of service requirement of the target quality of service profile, and an uplink packet delay budget provided by the current network status is less than or equal to an uplink packet delay budget included in the target quality of service profile; or when the candidate quality of service profile includes the downlink packet delay budget, the current network status meets a quality of service requirement of the target quality of service profile, and a downlink packet delay budget provided by the current network status is less than or equal to a downlink packet delay budget included in the target quality of service profile.

Based on the foregoing possible implementation, when the candidate quality of service profile includes the condition information, the current network status meets the quality of service requirement of the target quality of service profile, and the target quality of service profile meets the condition information included in the target quality of service profile, to control a quantity of times/frequency of selecting the target quality of service profile. When the candidate quality of service profile includes the computation load information of the terminal, the current network status meets the quality of service requirement of the target quality of service profile, and the computation load information of the terminal included in the target quality of service profile meets the current computation load requirement of the terminal, to control a terminal computation load by modifying a quality of service profile. When the candidate quality of service profile includes the total uplink and downlink packet delay budget, the current network status meets the quality of service requirement of the target quality of service profile, and the total uplink and downlink packet delay budget provided by the current network status is less than or equal to the total uplink and downlink packet delay budget included in the target quality of service profile, to determine, in a timely manner, the target quality of service profile based on a total uplink and downlink transmission delay. When the candidate quality of service profile includes the uplink packet delay budget, the current network status meets the quality of service requirement of the target quality of service profile, and the uplink packet delay budget provided by the current network status is less than or equal to the uplink packet delay budget included in the target quality of service profile, to determine, in a timely manner, the target quality of service profile based on an uplink transmission delay. When the candidate quality of service profile includes the downlink packet delay budget, the current network status meets the quality of service requirement of the target quality of service profile, and the downlink packet delay budget provided by the current network status is less than or equal to the downlink packet delay budget included in the target quality of service profile, to determine, in a timely manner, the target quality of service profile based on a downlink transmission delay.

In a possible implementation, the method further includes: receiving first indication information, where the first indication information indicates to actively modify a quality of service profile; and/or receiving second indication information, where the second indication information indicates that the terminal is overheating.

Based on the foregoing possible implementation, the RAN node may receive the first indication information, to determine to actively modify a quality of service profile, and/or the RAN node may receive the second indication information, to determine that the terminal is overheating.

In a possible implementation, the first indication information is carried in a session resource setup request message or a session resource setup modification message.

Based on the foregoing possible implementation, the RAN node may receive the first indication information by using the session resource setup request message or the session resource setup modification message. In this way, the first indication information may be carried in an existing message, so that a standard is slightly modified.

In a possible implementation, the first information includes at least one of the following: an identifier of the target quality of service profile, and the condition information for restricting selection of the target quality of service profile, the computation load information of the terminal, the total uplink and downlink packet delay budget, the uplink packet delay budget, or the downlink packet delay budget that is included in the target quality of service profile.

Based on the foregoing possible implementation, the RAN node may indicate the target quality of service profile based on at least one of the identifier of the target quality of service profile, and the condition information for restricting selection of the target quality of service profile, the computation load information of the terminal, the total uplink and downlink packet delay budget, the uplink packet delay budget, or the downlink packet delay budget that is included in the target quality of service profile.

In a possible implementation, the first information is further for determining a first parameter, and the first parameter includes at least one of the following: a task split point, a task amount for task processing, a bit rate, a data rate, a frame rate, or resolution.

Based on the foregoing possible implementation, an apparatus that receives the first information may determine at least one of the task split point, the task amount for task processing, the bit rate, the data rate, the frame rate, or the resolution based on the first information.

In a possible implementation, the first parameter is related to first difference information. The first difference information indicates a difference between the target quality of service profile and a historical quality of service profile determined before the target quality of service profile.

Based on the foregoing possible implementation, the first parameter may be determined based on the difference between the target quality of service profile and the historical quality of service profile. For example, when the target quality of service profile does not change compared with the historical quality of service profile, the first parameter remains unchanged, to avoid deterioration of user experience caused by frequent changes of the first parameter. When the target quality of service profile changes compared with the historical quality of service profile, the first parameter is re-determined to provide a better service for users.

In a possible implementation, sending the first information includes: sending the first information to the terminal, where the first information is carried in downlink control information, a medium access control control element, or a radio resource control message; or sending a first data packet to a user plane function network element, where a header of the first data packet includes the first information.

Based on the foregoing possible implementation, the first information may be sent to the terminal by using the downlink control information, the medium access control control element, or the radio resource control message, or the first information may be sent to the user plane function network element by including the first information in a header of a data packet, thereby quickly sending the first information.

According to a fourth aspect, a communication method is provided. The method may be performed by a core network element; may be performed by a module used in the core network element, for example, a chip, a chip system, or a circuit; or may be implemented by a logical node, a logical module, or software that can implement all or some functions of the core network element. This is not limited herein. For ease of description, the following uses an example in which the core network element performs the method for description. The method includes: receiving information about a first session from a terminal; obtaining a plurality of candidate quality of service profiles based on the information about the first session, where any candidate quality of service profile in the plurality of candidate quality of service profiles includes at least one of the following: condition information for restricting selection of the candidate quality of service profile, computation load information of the terminal, a total uplink and downlink packet delay budget, an uplink packet delay budget, or a downlink packet delay budget; and sending the plurality of candidate quality of service profiles to a radio access network node.

Based on the method provided in the fourth aspect, the core network element may send the plurality of candidate quality of service profiles to the radio access network node. Because any candidate quality of service profile in the plurality of candidate quality of service profiles includes at least one of the following: the condition information for restricting selection of the candidate quality of service profile, the computation load information of the terminal, the total uplink and downlink packet delay budget, the uplink packet delay budget, or the downlink packet delay budget, the radio access network node can determine an appropriate quality of service profile for different communication scenarios.

In a possible implementation, the condition information includes at least one of the following: a maximum selected percentage in a first time period, a maximum selected time in the first time period, a maximum selected number in the first time period, a maximum selected duration in the first time period, or a minimum selected interval in the first time period.

Based on the foregoing possible implementation, a quantity of times, a frequency, or a duration of selecting the candidate quality of service profile may be restricted by one or more of the maximum selected percentage in the first time period, the maximum selected time in the first time period, the maximum selected number in the first time period, the maximum selected duration in the first time period, or the minimum selected interval in the first time period.

In a possible implementation, the method further includes: sending first indication information to the radio access network node, where the first indication information indicates the radio access network node to actively modify a quality of service profile.

Based on the foregoing possible implementation, the radio access network node can actively determine an appropriate quality of service profile in a plurality of quality of service profiles based on the first indication information.

In a possible implementation, the first indication information is carried in a session resource setup request message or a session resource setup modification message.

Based on the foregoing possible implementation, the core network element may send the first indication information to the radio access network node by using the session resource setup request message or the session resource setup modification message. In this way, the first indication information may be carried in an existing message, so that a standard is slightly modified.

According to a fifth aspect, a communication method is provided. The method may be performed by a terminal/computing node; may be performed by a module used in the terminal/computing node, for example, a chip, a chip system, or a circuit; or may be implemented by a logical node, a logical module, or software that can implement all or some functions of the terminal/computing node. This is not limited herein. For ease of description, the following uses an example in which the terminal/computing node performs the method for description. The method includes: receiving first information from a radio access network node, where the first information indicates a target quality of service profile; and sending metadata, where the metadata includes the first information.

Based on the method according to the fifth aspect, after obtaining the first information, the terminal/computing node may send the first information by using the metadata, so that the first information is sent conveniently.

In a possible implementation, the first information includes at least one of the following: an identifier of the target quality of service profile, and an uplink guaranteed flow bit rate, a downlink guaranteed flow bit rate, a packet error rate, condition information for restricting selection of the target quality of service profile, computation load information of a terminal, a total uplink and downlink packet delay budget, an uplink packet delay budget, or a downlink packet delay budget that is included in the target quality of service profile.

Based on the foregoing possible implementation, the target quality of service profile may be indicated by using one or more of the identifier of the target quality of service profile, and the uplink guaranteed flow bit rate, the downlink guaranteed flow bit rate, the packet error rate, the condition information for restricting selection of the target quality of service profile, the computation load information of the terminal, the total uplink and downlink packet delay budget, the uplink packet delay budget, or the downlink packet delay budget that is included in the target quality of service profile.

In a possible implementation, the condition information includes at least one of the following: a maximum selected percentage in a first time period, a maximum selected time in the first time period, a maximum selected number in the first time period, a maximum selected duration in the first time period, or a minimum selected interval in the first time period.

Based on the foregoing possible implementation, a quantity of times, a frequency, or a duration of selecting the candidate quality of service profile may be restricted by one or more of the maximum selected percentage in the first time period, the maximum selected time in the first time period, the maximum selected number in the first time period, the maximum selected duration in the first time period, or the minimum selected interval in the first time period.

In a possible implementation, the first information is further for determining a first parameter, and the first parameter includes at least one of the following: a task split point, a task amount for task processing, a bit rate, a data rate, a frame rate, or resolution.

Based on the foregoing possible implementation, an apparatus that receives the first information may determine one or more of the task split point, the task amount for task processing, the bit rate, the data rate, the frame rate, or the resolution based on the first information.

In a possible implementation, the first parameter is related to first difference information. The first difference information indicates a difference between the target quality of service profile and a historical quality of service profile determined before the target quality of service profile.

Based on the foregoing possible implementation, the first parameter may be determined based on the difference between the target quality of service profile and the historical quality of service profile. For example, when the target quality of service profile does not change compared with the historical quality of service profile, the first parameter remains unchanged, to avoid deterioration of user experience caused by frequent changes of the first parameter. When the target quality of service profile changes compared with the historical quality of service profile, the first parameter is re-determined to provide a better service for users.

According to a sixth aspect, a communication method is provided. The method may be performed by a user plane function (user plane function, UPF) network element; may be performed by a module used in the UPF network element, for example, a chip, a chip system, or a circuit; or may be implemented by a logical node, a logical module, or software that can implement all or some functions of the UPF network element. This is not limited herein. For ease of description, the following uses an example in which the UPF network element performs the method for description. The method includes: receiving a first data packet from a radio access network node, where a header of the first data packet includes first information, and the first information indicates a target quality of service profile; and sending a second data packet, where the second data packet includes the first information, and the second data packet is a real-time transport protocol data packet, a real-time transport control protocol data packet, or a quick user datagram protocol internet connection data packet.

Based on the method according to the sixth aspect, the first information may be received, and the first information may be sent based on a real-time transport protocol, a real-time transport control protocol, or a quick user datagram protocol internet connection, to implement convenient sending of the first information.

In a possible implementation, the first information includes at least one of the following: an identifier of the target quality of service profile, and an uplink guaranteed flow bit rate, a downlink guaranteed flow bit rate, a packet error rate, condition information for restricting selection of the target quality of service profile, computation load information of a terminal, a total uplink and downlink packet delay budget, an uplink packet delay budget, or a downlink packet delay budget that is included in the target quality of service profile.

Based on the foregoing possible implementation, the target quality of service profile may be indicated by using one or more of the identifier of the target quality of service profile, and the uplink guaranteed flow bit rate, the downlink guaranteed flow bit rate, the packet error rate, the condition information for restricting selection of the target quality of service profile, the computation load information of the terminal, the total uplink and downlink packet delay budget, the uplink packet delay budget, or the downlink packet delay budget that is included in the target quality of service profile.

In a possible implementation, the condition information includes at least one of the following: a maximum selected percentage in a first time period, a maximum selected time in the first time period, a maximum selected number in the first time period, a maximum selected duration in the first time period, or a minimum selected interval in the first time period.

Based on the foregoing possible implementation, a quantity of times, a frequency, or a duration of selecting the candidate quality of service profile may be restricted by one or more of the maximum selected percentage in the first time period, the maximum selected time in the first time period, the maximum selected number in the first time period, the maximum selected duration in the first time period, or the minimum selected interval in the first time period.

In a possible implementation, the first information is further for determining a first parameter, and the first parameter includes at least one of the following: a task split point, a task amount for task processing, a bit rate, a data rate, a frame rate, or resolution.

Based on the foregoing possible implementation, an apparatus that receives the first information may determine at least one of the task split point, the task amount for task processing, the bit rate, the data rate, the frame rate, or the resolution based on the first information.

In a possible implementation, the first parameter is related to first difference information. The first difference information indicates a difference between the target quality of service profile and a historical quality of service profile determined before the target quality of service profile.

Based on the foregoing possible implementation, the first parameter may be determined based on the difference between the target quality of service profile and the historical quality of service profile. For example, when the target quality of service profile does not change compared with the historical quality of service profile, the first parameter remains unchanged, to avoid deterioration of user experience caused by frequent changes of the first parameter. When the target quality of service profile changes compared with the historical quality of service profile, the first parameter is re-determined to provide a better service for users.

According to a seventh aspect, a communication apparatus is provided, configured to implement the foregoing method. The communication apparatus may be the RAN node according to the first aspect or an apparatus including the RAN node, may be a module such as a chip, a chip system, or a circuit in the RAN node according to the first aspect, or may be a logical node, a logical module, or software that can implement some or all functions of the RAN node. Alternatively, the communication apparatus may be the core network element according to the second aspect or an apparatus including the core network element, may be a module such as a chip, a chip system, or a circuit in the core network element according to the second aspect, or may be a logical node, a logical module, or software that can implement some or all functions of the core network element. Alternatively, the communication apparatus may be the RAN node according to the third aspect or an apparatus including the RAN node, or may be a module such as a chip, a chip system, or a circuit in the RAN node according to the third aspect, or may be a logical node, a logical module, or software that can implement some or all functions of the RAN node. Alternatively, the communication apparatus may be the core network element according to the fourth aspect or an apparatus including the core network element, or may be a module such as a chip, a chip system, or a circuit in the core network element according to the fourth aspect, or may be a logical node, a logical module, or software that can implement some or all functions of the core network element. Alternatively, the communication apparatus may be the terminal/computing node according to the fifth aspect or an apparatus including the terminal/computing node, may be a module such as a chip, a chip system, or a circuit in the terminal/computing node according to the fifth aspect, or may be a logical node, a logical module, or software that can implement some or all functions of the terminal/computing node. Alternatively, the communication apparatus may be the UPF network element according to the sixth aspect or an apparatus including the UPF network element, or may be a module such as a chip, a chip system, or a circuit in the UPF network element according to the sixth aspect, or may be a logical node, a logical module, or software that can implement some or all functions of the UPF network element. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the seventh aspect, in a possible implementation, the communication apparatus may include an interface module. The interface module may also be referred to as an interface unit, and is configured to implement a sending function and/or a receiving function in any one of the foregoing aspects or the possible implementations of the foregoing aspects. The interface module may include an interface circuit, a transceiver machine, a transceiver, or a communication interface.

With reference to the seventh aspect, in a possible implementation, the interface module includes a sending module and a receiving module, which are respectively configured to implement the sending function and the receiving function in any one of the foregoing aspects and the possible implementations of the foregoing aspects.

With reference to the seventh aspect, in a possible implementation, the communication apparatus may further include a processing module. The processing module may be configured to implement a processing function in any one of the foregoing aspects or the possible implementations of the foregoing aspects. The processing module may be, for example, a processor.

According to an eighth aspect, a communication apparatus is provided, and includes a processor. The processor is configured to: after being coupled to a memory and reading instructions in the memory, perform, according to the instructions, the method according to any one of the foregoing aspects. The communication apparatus may be the RAN node according to the first aspect or an apparatus including the RAN node, may be a module such as a chip, a chip system, or a circuit in the RAN node according to the first aspect, or may be a logical node, a logical module, or software that can implement some or all functions of the RAN node. Alternatively, the communication apparatus may be the core network element according to the second aspect or an apparatus including the core network element, may be a module such as a chip, a chip system, or a circuit in the core network element according to the second aspect, or may be a logical node, a logical module, or software that can implement some or all functions of the core network element. Alternatively, the communication apparatus may be the RAN node according to the third aspect or an apparatus including the RAN node, or may be a module such as a chip, a chip system, or a circuit in the RAN node according to the third aspect, or may be a logical node, a logical module, or software that can implement some or all functions of the RAN node. Alternatively, the communication apparatus may be the core network element according to the fourth aspect or an apparatus including the core network element, or may be a module such as a chip, a chip system, or a circuit in the core network element according to the fourth aspect, or may be a logical node, a logical module, or software that can implement some or all functions of the core network element. Alternatively, the communication apparatus may be the terminal/computing node according to the fifth aspect or an apparatus including the terminal/computing node, may be a module such as a chip, a chip system, or a circuit in the terminal/computing node according to the fifth aspect, or may be a logical node, a logical module, or software that can implement some or all functions of the terminal/computing node. Alternatively, the communication apparatus may be the UPF network element according to the sixth aspect or an apparatus including the UPF network element, or may be a module such as a chip, a chip system, or a circuit in the UPF network element according to the sixth aspect, or may be a logical node, a logical module, or software that can implement some or all functions of the UPF network element.

With reference to the eighth aspect, in a possible implementation, the communication apparatus further includes the memory, and the memory is configured to store necessary program instructions and necessary data.

With reference to the eighth aspect, in a possible implementation, the communication apparatus is a chip or a chip system. Optionally, when the communication apparatus is a chip system, the communication apparatus may include a chip; or may include a chip and another discrete component.

According to a ninth aspect, a communication apparatus is provided, and includes a processor and an interface circuit. The interface circuit is configured to receive a computer program or instructions, and transmit the computer program or the instructions to the processor. The processor is configured to execute the computer program or the instructions, to enable the communication apparatus to perform the method according to any one of the foregoing aspects. The communication apparatus may be the RAN node according to the first aspect or an apparatus including the RAN node, may be a module such as a chip, a chip system, or a circuit in the RAN node according to the first aspect, or may be a logical node, a logical module, or software that can implement some or all functions of the RAN node. Alternatively, the communication apparatus may be the core network element according to the second aspect or an apparatus including the core network element, may be a module such as a chip, a chip system, or a circuit in the core network element according to the second aspect, or may be a logical node, a logical module, or software that can implement some or all functions of the core network element. Alternatively, the communication apparatus may be the RAN node according to the third aspect or an apparatus including the RAN node, or may be a module such as a chip, a chip system, or a circuit in the RAN node according to the third aspect, or may be a logical node, a logical module, or software that can implement some or all functions of the RAN node. Alternatively, the communication apparatus may be the core network element according to the fourth aspect or an apparatus including the core network element, or may be a module such as a chip, a chip system, or a circuit in the core network element according to the fourth aspect, or may be a logical node, a logical module, or software that can implement some or all functions of the core network element. Alternatively, the communication apparatus may be the terminal/computing node according to the fifth aspect or an apparatus including the terminal/computing node, may be a module such as a chip, a chip system, or a circuit in the terminal/computing node according to the fifth aspect, or may be a logical node, a logical module, or software that can implement some or all functions of the terminal/computing node. Alternatively, the communication apparatus may be the UPF network element according to the sixth aspect or an apparatus including the UPF network element, or may be a module such as a chip, a chip system, or a circuit in the UPF network element according to the sixth aspect, or may be a logical node, a logical module, or software that can implement some or all functions of the UPF network element.

With reference to the ninth aspect, in a possible implementation, the communication apparatus is a chip or a chip system. Optionally, when the communication apparatus is a chip system, the communication apparatus may include a chip; or may include a chip and another discrete component.

According to a tenth aspect, a computer-readable storage medium is provided. The computer-readable storage medium stores instructions. When the instructions are run on a computer, the computer is enabled to perform the method according to any one of the foregoing aspects.

According to an eleventh aspect, a computer program product including instructions is provided. When the computer program product runs on a computer, the computer is enabled to perform the method according to any one of the foregoing aspects.

According to a twelfth aspect, a communication system is provided. The communication system includes a RAN node configured to perform the method according to the first aspect and a core network element configured to perform the method according to the second aspect.

With reference to the twelfth aspect, in a possible implementation, the communication system further includes a terminal/computing node configured to perform the method according to the fifth aspect.

With reference to the twelfth aspect, in a possible implementation, the communication system further includes a UPF network element configured to perform the method according to the sixth aspect.

According to a thirteenth aspect, a communication system is provided. The communication system includes a RAN node configured to perform the method according to the third aspect and a core network element configured to perform the method according to the fourth aspect.

With reference to the thirteenth aspect, in a possible implementation, the communication system further includes a terminal/computing node configured to perform the method according to the fifth aspect.

With reference to the thirteenth aspect, in a possible implementation, the communication system further includes a UPF network element for performing the method according to the sixth aspect.

For technical effects achieved in any one of the possible implementations of the seventh aspect to the thirteenth aspect, refer to the technical effects achieved in any one of the first aspect to the sixth aspect or different possible implementations thereof. Details are not described herein again.

According to a fourteenth aspect, a communication method is provided. The method may be performed by a RAN node; may be performed by a module used in the RAN node, for example, a chip, a chip system, or a circuit; or may be implemented by a logical node, a logical module, or software that can implement all or some functions of the RAN node. This is not limited herein. For ease of description, the following uses an example in which the RAN node performs the method for description. The method includes: obtaining a plurality of candidate quality of service profiles and transmission mode indication information; determining a target quality of service profile in the plurality of candidate quality of service profiles; and sending first information based on the transmission mode indication information. The transmission mode indication information indicates to transmit the first information to a terminal by using air interface signaling, and/or transmit the first information to a user plane function network element in a user plane manner, where the first information indicates the target quality of service profile.

Based on the method provided in the fourteenth aspect, after determining the target quality of service profile, the RAN node may send the first information to the terminal and/or the user plane function network element based on the transmission mode indication information, to quickly send the first information.

In a possible implementation, when the transmission mode indication information indicates to transmit the first information to the terminal by using the air interface signaling, sending the first information based on the transmission mode indication information includes: sending the first information to the terminal by using the air interface signaling.

Based on the foregoing possible implementation, the RAN node may quickly send the first information to the terminal by using the air interface signaling.

In a possible implementation, the air interface signaling includes a radio resource control message, a packet data convergence protocol control protocol data unit message, a medium access control control element, or downlink control information.

Based on the foregoing possible implementation, the RAN node may send the first information to the terminal by using the radio resource control message, the packet data convergence protocol control protocol data unit message, the medium access control control element, or the downlink control information, so that flexibility and diversity of sending the first information by the RAN node can be improved.

In a possible implementation, when the transmission mode indication information indicates to transmit the first information to the user plane function network element in the user plane manner, sending the first information based on the transmission mode indication information includes: sending a first data packet to a user plane function network element, where a header of the first data packet includes the first information.

Based on the foregoing possible implementation, the RAN node may quickly send the first information to the user plane function network element by using the first data packet, so that the user plane function network element indicates the first information to a computing node.

In a possible implementation, the first data packet corresponds to a first session, and the first session is a session corresponding to the plurality of candidate quality of service profiles; or the first data packet corresponds to a first quality of service flow, and the first quality of service flow is a quality of service flow corresponding to the plurality of candidate quality of service profiles.

Based on the foregoing possible implementation, the RAN node may send the first information to the user plane function network element by using the data packet corresponding to the first session, or send the first information to the user plane function network element by using the data packet corresponding to the first quality of service flow, so that flexibility and diversity of sending the first information by the RAN node can be improved.

In a possible implementation, the first information includes at least one of the following: an index of the target quality of service profile, related information of the target quality of service profile, and a guaranteed flow bit rate, an uplink guaranteed flow bit rate, a downlink guaranteed flow bit rate, a packet error rate, condition information for restricting selection of the target quality of service profile, computation load information of the terminal, a total uplink and downlink packet delay budget, an uplink packet delay budget, or a downlink packet delay budget that is included in the target quality of service profile.

Based on the foregoing possible implementation, the target quality of service profile may be indicated by using one or more types of information, so that flexibility and diversity of indicating the target quality of service profile by the RAN node can be improved.

According to a fifteenth aspect, a communication method is provided. The method may be performed by a core network element; may be performed by a module used in the core network element, for example, a chip, a chip system, or a circuit; or may be implemented by a logical node, a logical module, or software that can implement all or some functions of the core network element. This is not limited herein. For ease of description, the following uses an example in which the core network element performs the method for description. The method includes: obtaining a plurality of candidate quality of service profiles; and sending the plurality of candidate quality of service profiles and transmission mode indication information to a radio access network node. The transmission mode indication information indicates to transmit first information to a terminal by using air interface signaling, and/or transmit the first information to a user plane function network element in a user plane manner. The first information indicates a target quality of service profile in the plurality of candidate quality of service profiles.

Based on the method provided in the fifteenth aspect, the core network element may indicate, to the radio access network node, a manner of transmitting the first information, so that the radio access network node quickly sends the first information to the terminal and/or the user plane function network element.

In a possible implementation, the air interface signaling includes a radio resource control message, a packet data convergence protocol control protocol data unit message, a medium access control control element, or downlink control information.

Based on the foregoing possible implementation, the core network element may indicate the RAN node to send the first information to the terminal by using the radio resource control message, the packet data convergence protocol control protocol data unit message, the medium access control control element, or the downlink control information, so that flexibility and diversity of sending the first information by the RAN node can be improved.

In a possible implementation, transmitting the first information to the user plane function network element in the user plane manner includes transmitting the first information to the user plane function network element by using a data packet corresponding to a first session, where the first session is a session corresponding to the plurality of candidate quality of service profiles; or transmitting the first information to the user plane function network element in the user plane manner includes transmitting the first information to the user plane function network element by using a data packet corresponding to a first quality of service flow, where the first quality of service flow is a quality of service flow corresponding to the plurality of candidate quality of service profiles.

Based on the foregoing possible implementation, the core network element may indicate the RAN node to send the first information to the user plane function network element by using the data packet corresponding to the first session, or send the first information to the user plane function network element by using the data packet corresponding to the first quality of service flow, so that flexibility and diversity of sending the first information by the RAN node can be improved.

According to a sixteenth aspect, a communication apparatus is provided, configured to implement the foregoing method. The communication apparatus may be the RAN node according to the fourteenth aspect or an apparatus including the RAN node, may be a module such as a chip, a chip system, or a circuit in the RAN node according to the fourteenth aspect, or may be a logical node, a logical module, or software that can implement some or all functions of the RAN node. Alternatively, the communication apparatus may be the core network element according to the fifteenth aspect or an apparatus including the core network element, or may be a module such as a chip, a chip system, or a circuit in the core network element according to the fifteenth aspect, or may be a logical node, a logical module, or software that can implement some or all functions of the core network element. The communication apparatus includes a corresponding module, unit, or means (means) for implementing the foregoing method. The module, unit, or means may be implemented by hardware, software, or hardware executing corresponding software. The hardware or the software includes one or more modules or units corresponding to the foregoing functions.

With reference to the sixteenth aspect, in a possible implementation, the communication apparatus may include a processing module and an interface module. The processing module may be configured to implement the processing function in the fourteenth aspect and any possible implementation thereof, or configured to implement the processing function in the fifteenth aspect and any possible implementation thereof. The processing module may be, for example, a processor. The interface module may also be referred to as an interface unit, and is configured to implement the sending and/or receiving function in the fourteenth aspect and any possible implementation thereof, or configured to implement the sending and/or receiving function in the fifteenth aspect and any possible implementation thereof. The interface module may include an interface circuit, a transceiver machine, a transceiver, or a communication interface.

With reference to the sixteenth aspect, in a possible implementation, the interface module includes a sending module and a receiving module, respectively configured to implement the sending and receiving functions in the fourteenth aspect and any possible implementation thereof, or respectively configured to implement the sending and receiving functions in the fifteenth aspect and any possible implementation thereof.

According to a seventeenth aspect, a communication apparatus is provided, and includes a processor. The processor is configured to: after being coupled to a memory and reading instructions in the memory, perform, according to the instructions, the method according to the fourteenth aspect or the fifteenth aspect. The communication apparatus may be the RAN node according to the fourteenth aspect or an apparatus including the RAN node, may be a module such as a chip, a chip system, or a circuit in the RAN node according to the fourteenth aspect, or may be a logical node, a logical module, or software that can implement some or all functions of the RAN node. Alternatively, the communication apparatus may be the core network element according to the fifteenth aspect or an apparatus including the core network element, or may be a module such as a chip, a chip system, or a circuit in the core network element according to the fifteenth aspect, or may be a logical node, a logical module, or software that can implement some or all functions of the core network element.

With reference to the seventeenth aspect, in a possible implementation, the communication apparatus further includes the memory, and the memory is configured to store necessary program instructions and necessary data.

With reference to the seventeenth aspect, in a possible implementation, the communication apparatus is a chip or a chip system. Optionally, when the communication apparatus is a chip system, the communication apparatus may include a chip; or may include a chip and another discrete component.

According to an eighteenth aspect, a communication apparatus is provided, and includes a processor and an interface circuit. The interface circuit is configured to receive a computer program or instructions and transmit the computer program or the instructions to the processor. The processor is configured to execute the computer program or the instructions, to enable the communication apparatus to perform the method according to the fourteenth aspect or the fifteenth aspect. The communication apparatus may be the RAN node according to the fourteenth aspect or an apparatus including the RAN node, may be a module such as a chip, a chip system, or a circuit in the RAN node according to the fourteenth aspect, or may be a logical node, a logical module, or software that can implement some or all functions of the RAN node. Alternatively, the communication apparatus may be the core network element according to the fifteenth aspect or an apparatus including the core network element, or may be a module such as a chip, a chip system, or a circuit in the core network element according to the fifteenth aspect, or may be a logical node, a logical module, or software that can implement some or all functions of the core network element.

With reference to the eighteenth aspect, in a possible implementation, the communication apparatus is a chip or a chip system. Optionally, when the communication apparatus is a chip system, the communication apparatus may include a chip; or may include a chip and another discrete component.

According to a nineteenth aspect, a computer-readable storage medium is provided. The computer-readable storage medium stores instructions. When the instructions are run on a computer, the computer is enabled to perform the method according to the fourteenth aspect or the method according to the fifteenth aspect.

According to a twentieth aspect, a computer program product including instructions is provided. When the computer program product runs on a computer, the computer is enabled to perform the method according to the fourteenth aspect or the method according to the fifteenth aspect.

According to a twenty-first aspect, a communication system is provided. The communication system includes the RAN node configured to perform the method according to the fourteenth aspect and the core network element configured to perform the method according to the fifteenth aspect.

For technical effects achieved in any one of the possible implementations of the sixteenth aspect to the twenty-first aspect, refer to the technical effects achieved in any one of the fourteenth aspect and the fifteenth aspect or different possible implementations thereof. Details are not described herein again.

It may be understood that the solutions in the foregoing aspects may be combined if the solutions are not contradictory.

### BRIEF DESCRIPTION OF DRAWINGS

FIG. 1A is a diagram of transmission of downlink data between layers;
FIG. 1B is a diagram of a central unit (central unit, CU) and a distributed unit (distributed unit, DU);
FIG. 1C is a first diagram of a RAN node;
FIG. 1D is a second diagram of a RAN node;
FIG. 1E is a diagram of an architecture of a core network;
FIG. 1F is a diagram of a transport layer protocol;
FIG. 1G is a diagram of end-cloud collaboration for an uplink service;
FIG. 1H is a diagram of end-cloud collaboration for an AI computing task;
FIG. 1I is a diagram of a deep neural network (deep neural network, DNN) model;
FIG. 2 is a diagram of an architecture of a communication system according to this application;
FIG. 3 is a diagram of a hardware structure of a communication apparatus according to this application;
FIG. 4 is a first schematic flowchart of a communication method according to this application;
FIG. 5 is a second schematic flowchart of a communication method according to this application;
FIG. 6 is a third schematic flowchart of a communication method according to this application;
FIG. 7 is a first diagram of a structure of a communication apparatus according to this application;
FIG. 8 is a second diagram of a structure of a communication apparatus according to this application; and
FIG. 9 is a fourth schematic flowchart of a communication method according to this application.

### DESCRIPTION OF EMBODIMENTS

Before technical solutions of this application are described, related technical terms in this application are described. It may be understood that the descriptions are intended to make this application easier to understand, but should not be construed as a limitation on the protection scope claimed in this application.

### 1. Terminal

The terminal in this application is a device with a wireless transceiver function and a computing function. The terminal may be deployed on land, including an indoor device, an outdoor device, a handheld device, or a vehicle-mounted device; or may be deployed on water (for example, on a ship); or may be deployed in the air (for example, on an airplane, a balloon, or a satellite). The terminal may also be referred to as a terminal device. The terminal device may be user equipment (user equipment, UE). The UE includes a handheld device, a vehicle-mounted device, a wearable device, or a computing device that has a wireless communication function. For example, the UE may be a mobile phone (mobile phone), a tablet computer, or a computer having a wireless transceiver function. Alternatively, the terminal device may be a virtual reality (virtual reality, VR) terminal device, an augmented reality (augmented reality, AR) terminal device, a wireless terminal in industrial control, a wireless terminal in self-driving, a wireless terminal in telemedicine, a wireless terminal in a smart grid, a wireless terminal in a smart city (smart city), a wireless terminal in a smart home (smart home), or the like.

By way of example but not limitation, the terminal in this application may be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. For example, the wearable device is not only a hardware device, but also a device that implements a powerful function through software support, data exchange, and cloud interaction. In a broad sense, wearable intelligent devices include full-featured and large-sized devices that can implement complete or partial functions without relying on smartphones, for example, smart watches or smart glasses; and include devices that focus only on one type of application function and that need to be used together with other devices such as smartphones, for example, various smart bands or smart jewelry for monitoring physical signs.

In this application, the terminal may alternatively be a terminal in an internet of things (internet of things, IoT) system. IoT is an important part of future information technology development. A main technical feature of the IoT is to connect an object to a network by using a communication technology, to implement an intelligent network of human-computer interconnection and thing-to-thing interconnection. The terminal in this application may be a terminal in machine type communication (machine type communication, MTC). The terminal in this application may be a vehicle-mounted module, a vehicle-mounted component, an onboard component, a vehicle-mounted chip, or a vehicle-mounted unit that is built in a vehicle as one or more components or units. The vehicle uses the vehicle-mounted module, the vehicle-mounted component, the onboard component, the vehicle-mounted chip, or the vehicle-mounted unit that is built in the vehicle, to implement the method in this application.

### 2. RAN node

The RAN node in this application may be any device with a wireless transceiver function, and may provide a wireless access service for a terminal. The RAN node may include but is not limited to an evolved NodeB (NodeB or eNB or eNodeB, evolved NodeB) in long term evolution (long term evolution, LTE), an evolved NodeB (next-generation eNB, ng-eNB) in next-generation LTE, a gNodeB (gNodeB or gNB) or a transmission reception point (transmission receiving point/transmission reception point, TRP) in new radio (new radio, NR), a future evolved base station of the 3rd generation partnership project (3rd generation partnership project, 3GPP), an access node in a wireless fidelity (wireless fidelity, Wi-Fi) system, a wireless relay node, a wireless backhaul node, and the like. A base station may be a macro base station, a micro base station, a pico base station, a small cell, a relay station, a balloon station, or the like. A plurality of base stations may support networks using a same technology mentioned above, or may support networks using different technologies mentioned above. The base station may include one or more co-site or non-co-site TRPs. The RAN node may alternatively be at least one of a radio controller, a CU, a DU, a central unit control plane (CU control plane, CU-CP) node, a central unit user plane (CU user plane, CU-UP) node, a baseband processing unit (baseband unit, BBU), a remote radio unit (remote radio unit, RRU), or the like in a cloud radio access network (cloud radio access network, CRAN) scenario. An example in which the RAN node is a base station is used below for description. A plurality of RAN nodes may be base stations of a same type, or may be base stations of different types. The base station may communicate with a terminal, or may communicate with the terminal through a relay station. The terminal may communicate with a plurality of base stations using different technologies. For example, the terminal may communicate with a base station supporting an LTE network, or may communicate with a base station supporting a 5G network, or may support dual connectivity to a base station in an LTE network and a base station in a 5G network.

### 3. Protocol layer

In this application, a terminal and a RAN node may communicate with each other through a protocol layer. The protocol layer may include a control plane (control panel, CP) protocol layer and a user plane (user panel, UP) protocol layer. The control plane protocol layer may include a radio resource control (radio resource control, RRC) layer, a packet data convergence protocol (packet data convergence protocol, PDCP) layer, a radio link control (radio link control, RLC) layer, a medium access control (medium access control, MAC) layer, a physical (physical, PHY) layer, and other protocol layers. The user plane protocol layer may include a PDCP layer, an RLC layer, a MAC layer, a physical layer, and other protocol layers. Optionally, a service data adaptation protocol (service data adaptation protocol, SDAP) layer may be further included above the PDCP layer.

The user plane protocol layer is used below as an example for description. User plane data between the RAN node and the terminal may pass through the user plane protocol layer, for example, the SDAP layer, the PDCP layer, the RLC layer, the MAC layer, and the physical layer. The SDAP layer, the PDCP layer, the RLC layer, the MAC layer, and the physical layer may also be collectively referred to as an access stratum. Based on a transmission direction of the user plane data, each layer is further divided into a sending part and a receiving part. Downlink data transmission is used below as an example for description.

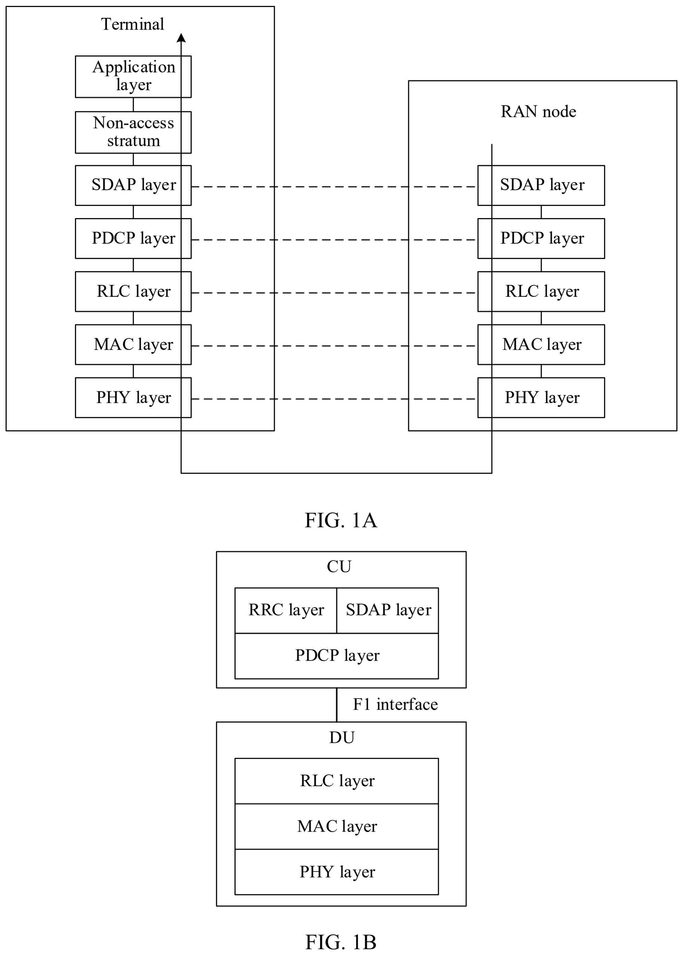

FIG. 1A is a diagram of transmission of downlink data between layers. An arrow in FIG. 1A indicates a transmission direction of the downlink data. To be specific, after obtaining the downlink data from an upper layer, an SDAP layer of the RAN node sequentially transmits the downlink data to a PDCP layer, an RLC layer, and a MAC layer, then the MAC layer generates a transport block, and then wireless transmission is performed through a physical layer, to transmit the transport block to a physical layer of the terminal. Subsequently, the physical layer of the terminal delivers the downlink data to an upper layer. It may be understood that data may be correspondingly encapsulated at each layer. For example, data received by a layer from an upper layer of the layer is considered as a service data unit (service data unit, SDU) of the layer and is encapsulated by the layer into a protocol data unit (protocol data unit, PDU), and then the protocol data unit is transmitted to a next layer.

Optionally, in addition to the access stratum, a protocol layer of the terminal further includes an application layer (app layer) and a non-access stratum (non-access stratum, NAS). The application layer may be configured to provide a service for an application installed on the terminal. For example, downlink data received by the terminal may be sequentially transmitted from the physical layer to the application layer, and then provided by the application layer for the application. For another example, the application layer may obtain data generated by an application, and sequentially deliver the data to the physical layer, and the data is sent to another communication apparatus through the physical layer. The non-access stratum may be used to forward user data. For example, the non-access stratum forwards uplink data received from the application layer to the SDAP layer, or forwards downlink data received from the SDAP layer to the application layer.

### 4. CU and DU

In this application, a RAN node may include a CU and a DU. To be specific, functions of the RAN node may be split, some functions of the RAN node are deployed on the CU, and a remaining function of the RAN node is deployed on the DU. Signaling generated by the CU may be sent to a terminal through the DU, or signaling generated by a terminal may be sent to the CU through the DU.

A quantity of CUs or DUs included in the RAN node is not limited in this application. For example, the RAN node may include one CU and a plurality of DUs. The plurality of DUs may be controlled by one CU in a centralized manner. An interface between the CU and the DU may be referred to as an F1 interface. The interface between the CU and the DU may be further classified into a control plane interface (F1-C) and a user plane interface (F1-U).

In this application, the CU and the DU may also be divided based on a protocol layer of a wireless network. For example, a PDCP layer and a protocol layer above the PDCP layer are deployed on the CU, and a protocol layer below the PDCP layer is deployed on the DU. Specifically, refer to FIG. 1B.

It may be understood that the foregoing is merely an example of dividing the CU and the CU based on protocol layers. During specific application, there may alternatively be another division form. This is not limited.

In a possible implementation, the CU may be further split into a CU-CP node and a CU-UP node, and the CU-CP node and the CU-UP node may be coupled to the DU to jointly perform a function of the RAN node.

### 5. RAN intelligent controller (RAN intelligent controller, RIC)

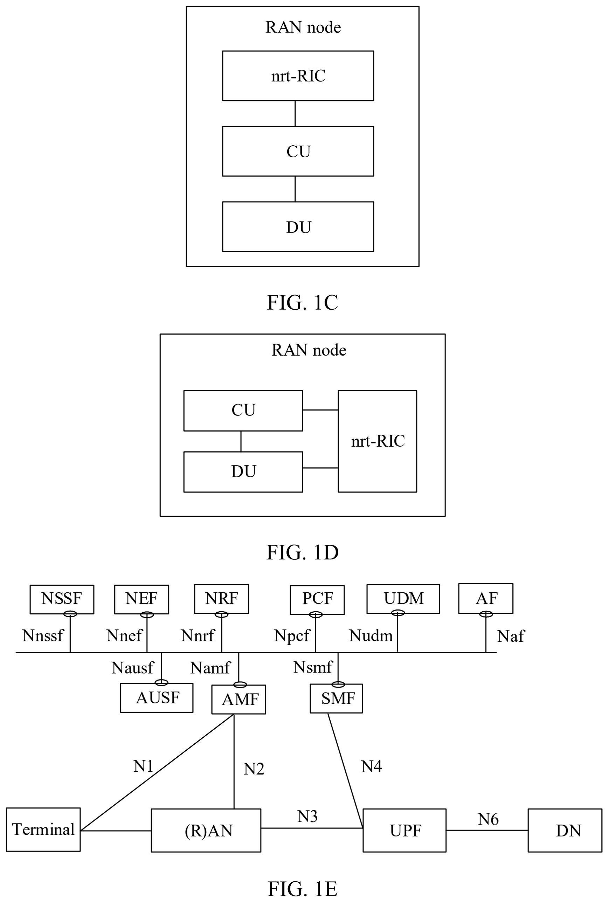

In an open radio access network (open radio access network, ORAN) architecture, a RAN node includes an RIC (for example, a near-real-time RIC (near-real-time RIC, nrt-RIC)), a CU, and a DU. To be specific, functions of the RAN node are split, and the functions of the RAN node are separately deployed on the RIC, the CU, and the DU. For example, in the ORAN architecture, the RAN node may be shown in FIG. 1C or FIG. 1D. In FIG. 1C or FIG. 1D, the CU may include an RRC layer and a PDCP layer, the DU may include an RLC layer, a MAC layer, and a physical layer, and the nrt-RIC may implement a function of an application layer. Optionally, the nrt-RIC may further implement a related function of AI.

### 6. Core network (core network, CN)

In this application, the core network may be configured to manage a terminal and provide a gateway for communicating with an external network. The core network may include one or more core network elements.

For example, FIG. 1E shows an architecture of the core network by using a network service architecture of a 5th-generation (5th generation, 5G) mobile communication system as an example. In FIG. 1E, the core network includes a UPF network element, a data network (data network, DN), an access management function (access management function, AMF) network element, a session management function (session management function, SMF) network element, an authentication server function (authentication server function, AUSF) network element, a policy control function (policy control function, PCF) network element, an application function (application function, AF) network element, a network slice selection function (network slice selection function, NSSF) network element, a unified data management (unified data management, UDM) network element, a network exposure function (network exposure function, NEF) network element, and a network repository function (NF repository function, NRF) network element. A RAN node may communicate with the AMF network element and the UPF network element, and the terminal may communicate with the AMF network element. The terminal and the RAN node may communicate with each other by using an air interface technology.

In FIG. 1E, N1 is a reference point between the terminal and the AMF network element, N2 is a reference point between the RAN node and the AMF network element, N3 is a reference point between the RAN node and the UPF network element, N4 is a reference point between the SMF network element and the UPF network element, N6 is a reference point between the UPF network element and the DN, Namf is a service-based interface provided by the AMF network element, Nsmf is a service-based interface provided by the SMF network element, Nausf is a service-based interface provided by the AUSF network element, Nnssf is a service-based interface provided by the NSSF network element, Nnef is a service-based interface provided by the NEF network element, Nnrf is a service-based interface provided by the NRF network element, Npcf is a service-based interface provided by the PCF network element, Nudm is a service-based interface provided by the UDM network element, and Naf is a service-based interface provided by the AF network element.

### 7. Bit rate (bit rate)

The bit rate is a quantity of bits (bit) of a digital signal transmitted per second over a digital channel. The digital signal may include encoded (or compressed) audio data and/or encoded (or compressed) video data. It may be understood that a higher bit rate indicates better audio/video quality but a larger encoded (or compressed) file. Common encoding schemes include variable bit rate (variable bit rate, VBR), average bit rate (average bit rate, ABR), and constant bit rate (constant bit rate, CBR).

### 8. Data rate (data rate)

A data rate may also be referred to as a data stream, and is data traffic used or occupied by a video file in a unit time, and is a most important part of picture quality control in video coding. At same resolution, a higher data rate of a video file indicates a lower compression ratio and better picture quality.

It may be understood that the data rate may be described as a video bit rate. Usually, a video file includes video information and audio information. Because audio and video have different sampling modes and bit rates, an audio bit rate and a video bit rate of a same video file are different. A data rate of a video file is usually a sum of data rates of audio information and video information in the video file. A video file with a real media variable bit rate (real media variable bit rate, RMVB) format is used as an example. The video file includes images and voices. VB in RMVB is VBR, and indicates that a dynamic encoding mode is used for RMVB. A higher sampling rate is used for complex dynamic images (such as songs and dances, flying cars, wars, and actions), and a lower sampling rate is used for static images. In this way, resources are properly used, and both image quality and a file size are considered. The sampling rate is a sampling frequency at which an analog signal is converted into a digital signal, to be specific, a quantity of points sampled per unit time. The sampling rate and a bit rate may satisfy the following formula: Bit rate = Sampling rate × Bit depth × Quantity of channels.

### 9. Real-time transport protocol (real-time transport protocol, RTP), RTP control protocol (RTP control protocol, RTCP), and fast user datagram protocol (user datagram protocol, UDP) internet connection (quick UDP internet connection, QUIC)

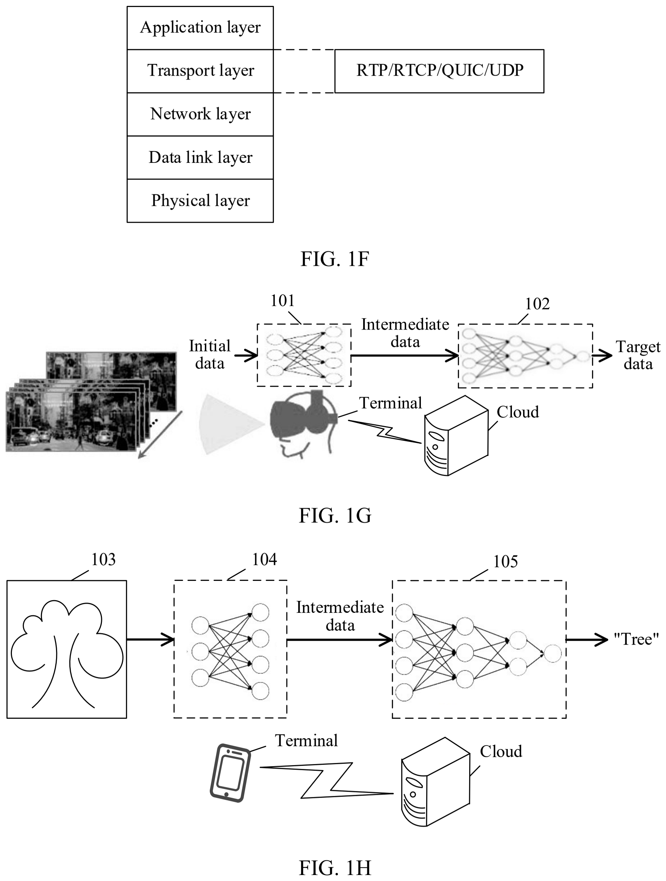

As shown in FIG. 1F, RTP, RTCP, and QUIC are all transport layer protocols. RTP was published by the multimedia transmission working group of the internet engineering task force (the internet engineering task force, IETF) in the request for comments (request for comments, RFC) 1889 in 1996. RTP provides end-to-end transmission services for multimedia data that needs to be transmitted in real time, such as voices and images, over the internet protocol (Internet Protocol, IP). However, RTP itself cannot ensure quality of service (QoS), and therefore, needs to be used together with RTCP. RTCP can monitor quality of service and transmit information about session participants. A server may use information about an RTCP data packet to change a transmission rate and a payload data type. QUIC is a UDP-based transport layer protocol, and may be applied to a scenario in which data transmission needs to be performed, such as a web page or an application. It was deployed and rolled out in 2012 and submitted to the IETF in 2013. In May 2021, the IETF released the standard RFC9000.

### 10. Extended reality (extended reality, XR)

The XR may be various environments that combine reality and virtuality and that are generated by using computing technologies and wearable devices, and human-computer interaction. The XR has advantages such as a plurality of views and strong interactivity, can provide brand-new experience for a user, and has great application value and commercial potential. The XR mainly includes virtual-reality interaction technologies such as VR, AR, and mixed reality (mixed reality, MR), and can be widely used in many fields such as entertainment, gaming, medical care, advertising, industry, online education, and engineering. The VR technology, the AR technology, and the MR technology are separately described below.

The VR technology integrates a plurality of technologies such as computer graphics and multimedia, to simulate functions of human sensory organs, for example, a visual sense, an auditory sense, and a tactile sense. In this way, people immerse in a virtual world generated by a computer, feeling as if they were there, and can perform real-time communication by using a language, a gesture, or the like. This enhances a sense of immersion. By using the VR technology, people feel reality of the real world, and can further break through restrictions of conditions such as time and space, to have wonderful experience of entering the virtual world. In the VR technology, a user usually needs to wear an XR terminal (for example, a head-mounted device), so that a visual sense, an auditory sense, and/or a tactile sense are/is simulated for the user. The VR technology may be further used to perform motion tracking on the user, to update simulated visual content, auditory content, and/or tactile content in a timely manner. For example, in the VR technology, status information of the user (for example, position information and posture information of the user) may be processed, to display, on the XR terminal, scene content corresponding to the status information of the user.

In the AR technology, virtual information may be superposed on the real world by using a computer technology, and displayed through a device, for example, a mobile phone, a tablet computer, or glasses, to be perceived by people. In this way, reality and virtuality are merged, to enrich the real world. In short, more information is given to a real object, to enhance a stereoscopic sense, and enhance a visual effect and interactive experience. For example, in the AR technology, perceived visual information (the visual information usually includes depth information) may be processed, to merge virtual information with the real world and enable the virtual information to be perceived by a user. In this way, the real world is "enhanced".

In the MR technology, the real world and a virtual world may be mixed to generate a new visual environment. The environment includes both a physical entity and virtual information, and content seen in the visual environment is "real-time" content.

### 11. Multi-node collaboration

In recent years, a terminal needs to process an increasingly large amount of data, and has an increasing high requirement for transmission bandwidth of a network. For example, a video rendering service represented by cloud gaming and VR and an artificial intelligence (artificial intelligence, AI) computing service represented by terminal visual cognition, AR, and MR have increasingly high requirements on picture quality (for example, a frame rate, a resolution, and light effect). Therefore, these services have increasingly high requirements on transmission bandwidth of a network and computing power of a terminal.

The video rendering service is used as an example. If video rendering is performed on a terminal, computing power of the terminal is insufficient to implement high-quality rendering of a pure local video. If video rendering is performed on a cloud, a low-latency requirement cannot be met, and a picture may be subject to black-border effect, distortion, or another phenomenon due to a limited network transmission capability.

The AI computing service is used an example. If the AI computing service is performed on a terminal, computing power and a quantity of electricity of the terminal are insufficient to support local AI inference. If the AI computing service is performed on a cloud, high uplink bandwidth is needed for AI inference on the cloud when a low-latency requirement is met, and consequently, uplink coverage and a quantity of users are limited.

Therefore, to achieve a balance between a computing capability of a terminal and a data transmission delay, a solution for handling a task through multi-node collaboration is proposed. In this application, a task may be an operation of processing data through a plurality of steps, for example, a video rendering operation (referred to as a video rendering task below) or an AI computing operation (referred to as an AI computing task below). The video rendering operation may be implemented by using an algorithm (for example, a video rendering algorithm or an AI algorithm), or the AI computing operation may be implemented by using a model (for example, an AI model). Any one of a plurality of nodes may be any device with a computing capability and a communication capability, for example, a terminal, a RAN node, a functional network element of a RAN node, a core network element, a server, a cloud server, a cloud, or a mobile edge computing (mobile edge computing, MEC) platform. This is not limited. To be specific, the terminal may collaborate with one or more of the foregoing devices to jointly handle a task. In this application, a terminal-cloud collaboration scenario is mainly used as an example for description. A case of another scenario is similar to that of the terminal-cloud collaboration scenario. Therefore, refer to descriptions of the terminal-cloud collaboration scenario in this application. Details are not described again.

In the terminal-cloud collaboration scenario, task handling steps may be split to obtain a plurality of subtasks, and the plurality of subtasks are deployed on a terminal and a cloud in a distributed manner. In this way, the terminal may perform some subtasks, and the cloud may perform other subtasks.

For example, FIG. 1G is a diagram of end-cloud collaboration for an uplink service. In FIG. 1G, a task is split into a subtask 101 and a subtask 102. A terminal may obtain initial data (for example, image information), input the initial data to the subtask 101 to obtain intermediate data, and send the intermediate data to the cloud. After receiving the intermediate data, the cloud may input the intermediate data to the subtask 102 to obtain target data. Similarly, for a downlink service, a task may also be split into a plurality of subtasks. The cloud may obtain initial data, input the initial data to some subtasks to obtain intermediate data, and send the intermediate data to the terminal. After receiving the intermediate data, the terminal may input the intermediate data to other subtasks to obtain target data.

For another example, FIG. 1H is a diagram of end-cloud collaboration for an AI computing task. In FIG. 1H, an AI computing task is split into a subtask 104 and a subtask 105. A terminal may obtain an image 103, input the image 103 into the subtask 104, to obtain intermediate data, and send the intermediate data to the cloud. After receiving the intermediate data, the cloud inputs the intermediate data into the subtask 105, to obtain a recognition result "tree" of the image 103.

It may be understood that during task splitting, a task may be split in a plurality of manners.

For example, the video rendering task is used as an example. The video rendering task may be split by separating a foreground from a background. For example, a foreground part of a picture is usually unpredictable with a small amount of rendering, and may be locally rendered by the terminal, and a background part of the picture is predictable with a large amount of rendering, and is rendered by the cloud. Alternatively, the video rendering task may be split based on a fixation point of a user. For example, a picture at a center of the fixation point may be locally rendered by the terminal, and a picture around the fixation point may be rendered by the cloud. Alternatively, the video rendering task may be split based on an object. For example, different nodes are selected, for rendering, based on rendering computing amounts and data amounts of different objects. It may be understood that an amount of video data to be transmitted by the cloud may be reduced through task splitting, to reduce a downlink transmission rate (for example, the downlink transmission rate may be reduced by more than 10 times). Therefore, a quantity of downlink transmitting users can be increased by selecting an appropriate task split point.

For example, the AI computing task is used as an example. An AI computing model may be split into a plurality of submodels, and the submodels are deployed on different nodes. For example, the AI computing model is a neural network (neural network, NN) model or a deep neural network (deep neural network, DNN) model. The NN model/DNN model may include a plurality of layers, for example, an input (input) layer, a convolution (convolution) layer, a pooling (pooling) layer, and a fully connected (fully connected) layer. The layers may be split. For example, the input layer and the convolution layer are deployed on the terminal, and the pooling layer and the fully connected layer are deployed on the cloud. In this way, the terminal may sense behavior data of a user (for example, position information, pose information, or voice information of the user) or data of a surrounding environment (for example, a video or an image of the surrounding environment) through a sensing module such as a radar, a camera, a handle, or a microphone, sequentially input the data to the input layer and the convolution layer to obtain intermediate data, and send the intermediate data to the cloud. Subsequently, after receiving the intermediate data, the cloud sequentially inputs the intermediate data to the pooling layer and the fully connected layer to obtain target data. Optionally, after obtaining the target data, the cloud may send the target data to the terminal.

It is found through further research that, during task splitting, a data amount of intermediate data may vary with a task split position (referred to as a task split point below).

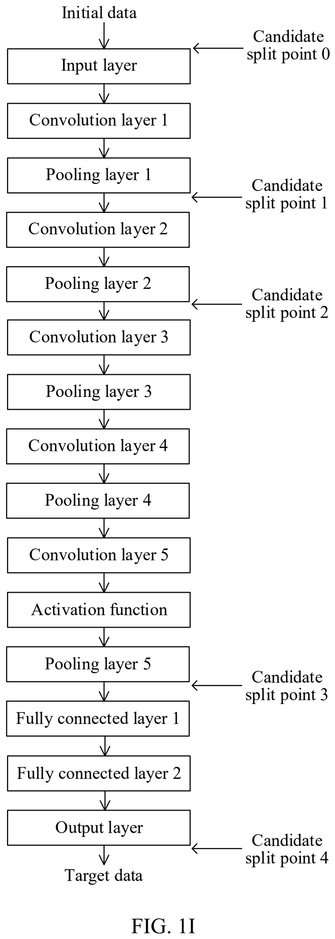

For example, a CNN model shown in FIG. 1I is used as an example. The CNN model includes an input layer, a convolution layer 1, a pooling layer 1, a convolution layer 2, a pooling layer 2, a convolution layer 3, a pooling layer 3, a convolution layer 4, a pooling layer 4, a convolution layer 5, an activation function (for example, a rectified linear unit (rectified linear unit, ReLU)), a pooling layer 5, a fully connected layer 1, a fully connected layer 2, and an output layer. Initial data may be sequentially input to the foregoing layers to obtain target data. FIG. 1I further shows five candidate split points (candidate split point): a candidate split point 0 to a candidate split point 4. The five candidate split points are at different positions in the CNN model. It may be understood that a layer located before a candidate split point may be deployed on the terminal, and a layer located after the candidate split point may be deployed on the cloud. The candidate split point 0 is located before the input layer. Therefore, the terminal sends initial data to the cloud without performing a task, and the cloud performs all tasks. The candidate split point 1 is located after the pooling layer 1. Therefore, the terminal performs a task located before the pooling layer 1, and the cloud performs a task located after the pooling layer 1. The candidate split point 2 is located after the pooling layer 2. Therefore, the terminal performs a task located before the pooling layer 2, and the cloud performs a task located after the pooling layer 2. The candidate split point 3 is located after the pooling layer 5. Therefore, the terminal performs a task located before the pooling layer 5, and the cloud performs a task located after the pooling layer 5. The candidate split point 4 is located after the output layer. Therefore, the terminal performs all tasks, the cloud does not perform a task, and the terminal does not send intermediate data to the cloud. An approximate output data size (approximate output data size) (namely, a data amount of intermediate data) and a required uplink (uplink, UL) data rate (required UL data rate) that correspond to each candidate split point may be shown in Table 1. It can be learned from Table 1 that a data size of intermediate data corresponding to the candidate split point 3 is the smallest, and a data amount of intermediate data corresponding to the candidate split point 1 is the largest.

**Table 1**

| Split point (split point) | Approximate output data size (MByte) | Required UL data rate (Mbit/s) |
|---|---|---|
| Candidate split point 0 | 0.15 | 36 |
| Candidate split point 1 | 0.27 | 65 |
| Candidate split point 2 | 0.17 | 41 |
| Candidate split point 3 | 0.02 | 4.8 |
| Candidate split point 4 | N/A | N/A |

It may be understood that, in addition to the approximate output data size and the required UL data rate, terminal computation loads (computation load) and/or approximate output UL data rates (approximate output UL data rate) corresponding to different task split points may also be different. For example, in Table 2, a candidate split point 1 corresponds to an approximate output UL data rate being 120 Mbit/s and a terminal computation load being low (low), and a candidate split point 2 corresponds to an approximate output UL data rate being 24 Mbit/s and a terminal computation load being high (high).

**Table 2**

| Split point (split point) | Approximate output UL data rate (Mbit/s) | Terminal computation load |
|---|---|---|
| Candidate split point 1 | 120 | Low |
| Candidate split point 2 | 24 | High |

It may be understood that the approximate output UL data rate is a transmission rate of the intermediate data obtained by the terminal through computation. Therefore, a larger approximate output UL data rate indicates more data that needs to be transmitted by the terminal, that is, a larger amount of intermediate data. Therefore, a computation amount of the terminal is smaller, that is, a terminal computation load is lower. On the contrary, a smaller approximate output UL data rate indicates less data that needs to be transmitted by the terminal, that is, a smaller amount of intermediate data. Therefore, a computation amount of the terminal is larger, that is, a terminal computation load is higher.

In this application, the terminal computation load may be described as a load of the terminal, a computation amount of the terminal, computation power consumption of the terminal, computation energy consumption of the terminal, or the like. In addition, in this application, a high or low level is used as an example to measure the terminal computation load. In actual application, the terminal computation load may be measured in another manner. For example, the terminal computation load is measured by using high, medium, or low levels, or the terminal computation load is measured by using a specific value, symbol, or the like. This is not limited. A unified description is provided herein, and details are not described below.

It may be understood that FIG. 1I shows merely an example of the CNN model. During specific application, the CNN model may include more or fewer layers than those in FIG. 1G. For example, the CNN model further includes a softmax function and/or an argmax function after the fully connected layer. This is not limited.

In conclusion, different task split points may correspond to different approximate output data sizes, required UL data rates, computation loads of the terminal, and/or approximate output UL data rates. Therefore, to improve flexibility of handling a task by each node, a requirement for modifying a task split point is further proposed.

### 12. QoS profile

The QoS profile is a file configured by a core network, and can ensure quality of data transmission between a terminal and a RAN node. Therefore, before data is transmitted between the terminal and the RAN node, the RAN node may obtain the QoS profile from the core network, and perform mapping from a QoS flow to a DRB based on the QoS profile. Then data may be transmitted between the terminal and the RAN node based on the QoS flow. In the foregoing process, the RAN node obtains the QoS profile in a single manner. However, with development of communication technologies, communication scenarios become increasingly complex. Therefore, the QoS profile obtained by the RAN node by using the foregoing process may not be suitable for a current increasingly complex communication scenario.

To obtain an appropriate QoS profile, this application provides the following four methods.

Method 1: A terminal indicates, to a first network element in a core network, that a first session may correspond to a plurality of candidate QoS profiles. The first network element obtains, based on an indication of the terminal, the plurality of candidate QoS profiles corresponding to the first session, and sends the plurality of candidate QoS profiles to a RAN node. After receiving the plurality of candidate QoS profiles, the RAN node actively modifies a QoS profile based on a current network status to obtain a target QoS profile. For example, the RAN node determines the target QoS profile based on the current network status and a terminal load corresponding to one or more of the plurality of candidate QoS profiles. After determining the target QoS profile, the RAN node may indicate the target QoS profile to the terminal and/or a cloud. Optionally, the first network element may be an SMF network element or a new core network element.

In this application, that the RAN node actively modifies a QoS profile is relative to that the RAN node passively modifies a QoS profile. That the RAN node passively modifies a QoS profile may be understood as that the RAN node modifies the QoS profile based on a radio channel condition. For example, when the current network status cannot meet a QoS requirement of a current QoS profile, the RAN node modifies the QoS profile, so that the modified QoS profile is a QoS profile with best QoS that can be provided in a current radio channel condition, thereby avoiding affecting service experience as much as possible. That the RAN node actively modifies a QoS profile may be understood as that the RAN node modifies a QoS profile based on an actual requirement, for example, a requirement of the terminal, a requirement of the cloud, and/or a requirement of the RAN node. For example, the RAN node may modify a current QoS profile when the current network status meets a quality of service requirement of the current QoS profile, so that the modified QoS profile meets an actual requirement. Therefore, when the RAN node actively modifies a QoS profile, the modified QoS profile may not be a QoS profile with best QoS that can be provided in a current radio channel condition. However, the manner in which the RAN node actively modifies a QoS profile may be adapted to more communication scenarios.

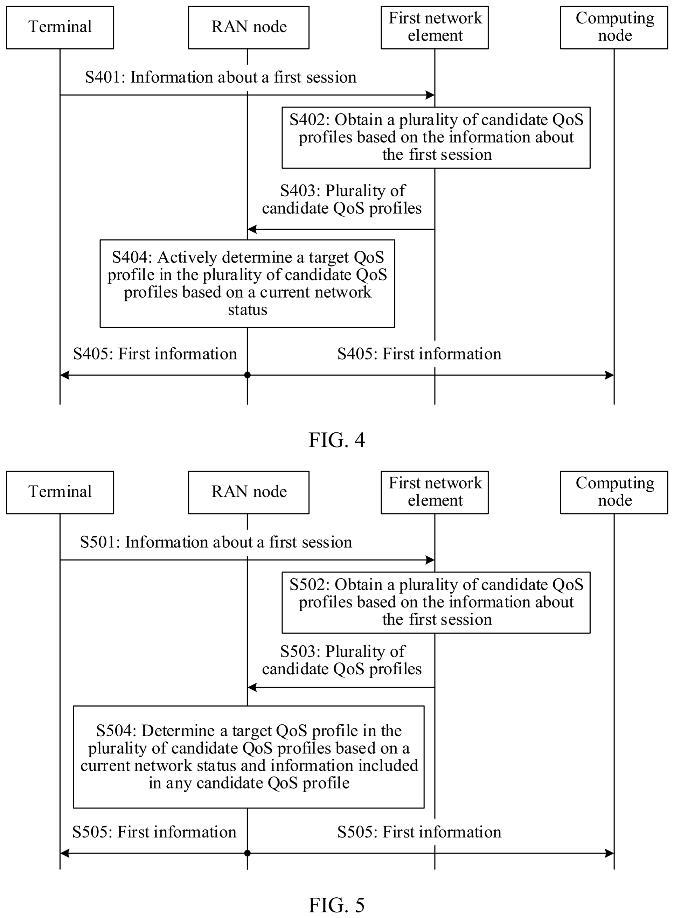

It may be understood that in the method 1, the RAN node may actively modify the QoS profile to obtain the target QoS profile, and indicate the target QoS profile to the terminal and/or the cloud. Because the RAN node has a capability of actively modifying a QoS profile, the RAN node may determine an appropriate QoS profile for more communication scenarios based on a requirement. For example, the RAN node may determine the target QoS profile based on the current network status and the terminal load corresponding to one or more of the plurality of candidate QoS profiles. In this way, in a process of determining the target QoS profile, the RAN node not only considers the current network status, but also considers the terminal load, to avoid running hot of the terminal or impact on standby time of the terminal due to an excessively high load of the terminal, thereby improving user experience. In addition, because load statuses of chips of different terminal types and terminal vendors are different, and a current terminal load is further related to many factors such as an environment and an external temperature, it is difficult to accurately obtain and standardize the current terminal load. In the foregoing method 1, the current terminal load does not need to be obtained, but a candidate QoS profile is associated with a terminal load, and the terminal load is controlled by modifying the QoS profile, thereby avoiding an excessively high load of the terminal. For example, when a terminal load corresponding to a QoS profile is high, a quantity of times/frequency of selecting the QoS profile may be controlled, and/or a use duration of the QoS profile may be controlled, thereby controlling the terminal load. Therefore, in the method 1, the load of the terminal can be easily controlled. A specific process of the method 1 is specifically described in the following embodiment shown in FIG. 4. Details are not described herein.

In the method 1, a device that determines the target QoS profile is the RAN node. During specific application, the device that determines the target QoS profile may alternatively be a device other than the RAN node, for example, any one or more network elements in the core network.

The following method 2 shows a process of determining a target QoS profile by a second network element in a core network. Optionally, the second network element may be any core network element, for example, an AMF network element, an SMF network element, or a PCF network element. This is not limited.

Method 2: A terminal indicates, to a first network element in the core network, that a first session may correspond to a plurality of candidate QoS profiles. The first network element obtains, based on an indication of the terminal, the plurality of candidate QoS profiles corresponding to the first session, and sends the plurality of candidate QoS profiles to the second network element. A RAN node sends a current network status to the second network element. After receiving the plurality of candidate QoS profiles and the current network status, the second network element actively modifies a QoS profile based on the current network status to obtain a target QoS profile. For example, the second network element determines the target QoS profile based on the current network status and a terminal load corresponding to one or more of the plurality of candidate QoS profiles. After determining the target QoS profile, the second network element may indicate the target QoS profile to the terminal and/or a cloud.

In this application, that the second network element actively modifies a QoS profile may be understood as that the second network element modifies a QoS profile based on an actual requirement, for example, a requirement of the terminal, a requirement of the cloud, and/or a requirement of the RAN node. For example, the second network element may modify a current QoS profile when the current network status meets a quality of service requirement of the current QoS profile, so that the modified QoS profile meets an actual requirement.

It may be understood that in the method 2, the second network element may actively modify the QoS profile to obtain the target QoS profile, and indicate the target QoS profile to the terminal and/or the cloud. Because the second network element has a capability of actively modifying a QoS profile, the second network element may determine an appropriate QoS profile for more communication scenarios based on a requirement. For example, the second network element may determine the target QoS profile based on the current network status and the terminal load corresponding to one or more of the plurality of candidate QoS profiles. In this way, in a process of determining the target QoS profile, the second network element not only considers the current network status, but also considers the terminal load, to avoid running hot of the terminal or impact on standby time of the terminal due to an excessively high load of the terminal, thereby improving user experience. In addition, in the foregoing method 2, a candidate QoS profile may be associated with a terminal load, and the terminal load is controlled by modifying the QoS profile, thereby avoiding an excessively high load of the terminal. Therefore, in the foregoing method 2, the load of the terminal can be easily controlled without obtaining the current terminal load.

It may be understood that, after determining the target QoS profile, the second network element may further indicate the target QoS profile to the RAN node, so that the RAN node transmits data based on the target QoS profile.

It may be understood that an idea of the method 2 is basically similar to an idea of the method 1. Therefore, for a specific process of the method 2, refer to corresponding descriptions in the following embodiment shown in FIG. 4. Details are not described.

It may be understood that, in specific application, in addition to the foregoing method 1 and method 2, a manner of including new information in a candidate QoS profile may be used. An appropriate QoS profile is determined based on the new information. For example, the appropriate QoS profile may be determined by using the following method 3 or method 4.

Method 3: A terminal indicates, to a first network element in a core network, that a first session may correspond to a plurality of candidate QoS profiles. The first network element obtains, based on an indication of the terminal, the plurality of candidate QoS profiles corresponding to the first session, and sends the plurality of candidate QoS profiles to a RAN node. Any one of the plurality of candidate QoS profiles includes at least one of the following: condition information for restricting selection of the candidate QoS profile, computation load information of the terminal, a total uplink and downlink packet delay budget (packet delay budget, PDB), an uplink PDB, or a downlink PDB. After receiving the plurality of candidate QoS profiles, the RAN node determines a target QoS profile in the plurality of candidate QoS profiles based on a current network status and information included in the candidate QoS profile, and indicates a parameter related to the target QoS profile to the terminal and/or a cloud. Optionally, the first network element may be an SMF network element or a new core network element.

It may be understood that, in the method 3, the RAN node may determine the target QoS profile in the plurality of candidate QoS profiles based on the current network status and at least one of the condition information for restricting selection of the candidate QoS profile, the computation load information of the terminal, the total uplink and downlink PDB, the uplink PDB, or the downlink PDB, and indicate the target QoS profile to the terminal and/or the cloud. It may be understood that, when the candidate QoS profile includes the condition information, the current network status meets a QoS requirement of the target QoS profile, and the target QoS profile meets condition information included in the target QoS profile, to control a quantity of times of selecting the target QoS profile. When the candidate QoS profile includes the computation load information of the terminal, the current network status meets a QoS requirement of the target QoS profile, and computation load information of the terminal included in the target QoS profile meets a current computation load requirement of the terminal, to control the terminal computation load by modifying the QoS profile. When the candidate QoS profile includes the total uplink and downlink PDB, the current network status meets a QoS requirement of the target QoS profile, and a total uplink and downlink PDB provided by the current network status is less than or equal to a total uplink and downlink PDB included in the target QoS profile, to determine, in a timely manner, the target QoS profile based on a total uplink and downlink transmission delay. When the candidate QoS profile includes the uplink PDB, the current network status meets the QoS requirement of the target QoS profile, and the uplink PDB provided by the current network status is less than or equal to the uplink PDB included in the target QoS profile, to determine, in a timely manner, the target QoS profile based on an uplink transmission delay. When the candidate QoS profile includes the downlink PDB, the current network status meets a QoS requirement of the target QoS profile, and a downlink PDB provided by the current network status is less than or equal to a downlink PDB included in the target QoS profile, to determine, in a timely manner, the target QoS profile based on a downlink transmission delay. Therefore, the RAN node may determine an appropriate QoS profile for different communication scenarios. A specific process of the method 3 is specifically described in the following embodiment shown in FIG. 5. Details are not described herein.

In the method 3, a device that determines the target QoS profile is the RAN node. During specific application, the device that determines the target QoS profile may alternatively be a device other than the RAN node, for example, any one or more network elements in the core network.

The following method 4 shows a process of determining a target QoS profile by a second network element in a core network.

Method 4: A terminal indicates, to a first network element in the core network, that a first session may correspond to a plurality of candidate QoS profiles. The first network element obtains, based on an indication of the terminal, the plurality of candidate QoS profiles corresponding to the first session, and sends the plurality of candidate QoS profiles to the second network element. A RAN node sends a current network status to the second network element. Any one of the plurality of candidate QoS profiles includes at least one of the following: condition information for restricting selection of the candidate QoS profile, computation load information of the terminal, a total PDB, an uplink PDB, or a downlink PDB. After receiving the plurality of candidate QoS profiles and the current network status, the second network element determines a target QoS profile in the plurality of candidate QoS profiles based on the current network status and information included in the candidate QoS profile, and indicates the target QoS profile to the terminal and/or a cloud.

It may be understood that, in the method 4, the second network element may determine the target QoS profile in the plurality of candidate QoS profiles based on the current network status and at least one of the condition information for restricting selection of the candidate QoS profile, the computation load information of the terminal, the total uplink and downlink PDB, the uplink PDB, or the downlink PDB, to determine an appropriate QoS profile for different communication scenarios.

It may be understood that, after determining the target QoS profile, the second network element may further indicate the target QoS profile to the RAN node, so that the RAN node transmits data based on the target QoS profile.

It may be understood that an idea of the method 4 is basically similar to an idea of the method 3. Therefore, for a specific process of the method 4, refer to corresponding descriptions in the following embodiment shown in FIG. 5. Details are not described.

In this application, the second network element and the first network element may be a same network element or different network elements. This is not limited. If the second network element and the first network element are a same network element, in the method 2 or the method 4, the first network element may not need to send the plurality of candidate QoS profiles to the second network element.

In this application, the QoS profile may be described as a QoS profile (QoS profile) or a QoS parameter set (QoS parameter set). For example, the candidate QoS profile may be described as a candidate QoS profile or a candidate QoS parameter set, and similar processing may also be performed on other QoS profiles (for example, a target QoS profile below). Details are not described again.

In this application, the candidate QoS profile may be described as an alternative QoS profile (Alternative QoS Profile). The plurality of candidate QoS profiles may be described as a candidate QoS profile set (candidate QoS profile set), a candidate QoS profile collection, a candidate QoS profile group, or the like. This is not limited.

The following describes the implementations of this application in detail with reference to the accompanying drawings.

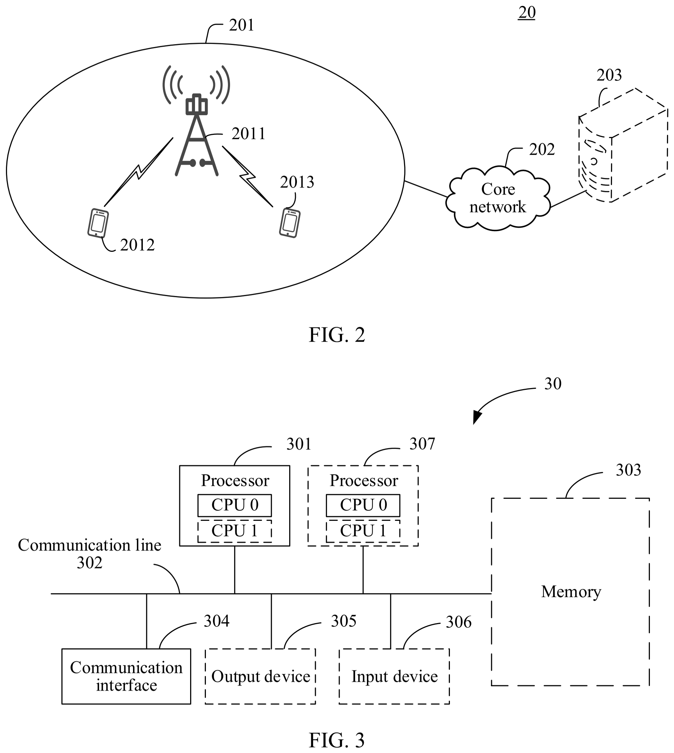

A method provided in this application may be applied to various communication systems. For example, the communication system may be a universal mobile telecommunications system (universal mobile telecommunications system, UMTS), an LTE system, a 5G communication system, a Wi-Fi system, a 3GPP-related communication system, a future evolved communication system (for example, a 6th-generation (6th generation, 6G) communication system), or a system integrating a plurality of systems. This is not limited. 5G may also be referred to as NR. The method provided in this application is described below by using a communication system 20 shown in FIG. 2 as an example. FIG. 2 is merely a diagram, and does not constitute a limitation on an application scenario of the technical solutions provided in this application.

FIG. 2 is a diagram of an architecture of a communication system 20 according to this application. In FIG. 2, the communication system 20 may include a RAN 201 and a core network 202. The RAN 201 includes at least one RAN node (for example, one RAN node 2011 shown in FIG. 2) and at least one terminal (for example, two terminals shown in FIG. 2: a terminal 2012 and a terminal 2013). In FIG. 2, the terminal may be connected to the RAN node 2011 in a wireless manner. The RAN node 2011 is connected to the core network 202 in a wireless or wired manner. A network element in the core network 202 and the RAN node 2011 in the RAN 201 may be respectively different physical devices, or may be a same physical device that integrates a logical function of the core network and a logical function of the radio access network.

The RAN 201 may be a 3GPP-related cellular system, for example, a 3G, 4G, or 5G mobile communication system, or a future-oriented evolved system (for example, a 6G mobile communication system). The RAN 201 may alternatively be an ORAN, a CRAN, or a Wi-Fi system. The RAN 201 may alternatively be a communication system that integrates two or more of the foregoing systems. The RAN node 2011 may also sometimes be referred to as an access network device, a RAN entity, an access node, or the like, and constitutes a part of a communication system, to help a terminal implement wireless access. It may be understood that, for specific descriptions of the terminal and the RAN node in FIG. 2, refer to the foregoing descriptions of the terminal, the RAN node, the protocol layer, the CU, the DU, or the RIC. Details are not described again.

An architecture of the core network 202 may be shown in FIG. 1E. The RAN node 2011 in FIG. 2 corresponds to the RAN node in FIG. 1E, and the terminal in FIG. 2, for example, the terminal 2012 or the terminal 2013, corresponds to the terminal in FIG. 1E. For other descriptions of the core network, refer to the foregoing descriptions of the core network. Details are not described again.

Optionally, the communication system 20 further includes a computing node 203. The computing node 203 may be any node that has a computing capability and a communication capability, for example, a server, a service node, an application server, a cloud server, a cloud, a MEC platform, or an AF. The computing node 203 may be located in a data network after a user plane function of the core network 202, exchange user plane application layer data with the core network 202 through an interface (for example, an N6 interface), and provide a computing service.

The communication system 20 shown in FIG. 2 is merely an example, and is not intended to limit the technical solutions of this application. A person skilled in the art should understand that, during specific implementation, the communication system 20 may further include another device, and a quantity of RAN nodes, terminals, core network elements, or computing nodes may alternatively be determined according to a specific requirement. This is not limited.

Optionally, in this application, each network element (for example, the terminal, the RAN node, the network element in the core network, or the computing node) in FIG. 2 may also be referred to as a communication apparatus, and may be a general-purpose device or a dedicated device. This is not specifically limited in this application.

Optionally, in this application, a related function of each network element (for example, the terminal, the RAN node, the network element in the core network, or the computing node) in FIG. 2 may be implemented by one device, may be jointly implemented by a plurality of devices, or may be implemented by one or more functional modules in one device. This is not specifically limited in this application. It may be understood that the foregoing function may be a network element in a hardware device, or may be a software function running on dedicated hardware, a combination of hardware and software, or an instantiated virtualized function on a platform (for example, a cloud platform).

During specific implementation, in this application, each network element (for example, the terminal, the RAN node, the network element in the core network, or the computing node) in FIG. 2 may use a composition structure shown in FIG. 3, or include a component shown in FIG. 3. FIG. 3 is a diagram of a hardware structure of a communication apparatus to which this application is applicable. The communication apparatus 30 includes at least one processor 301 and at least one communication interface 304, to implement the method provided in this application. The communication apparatus 30 may further include a communication line 302 and a memory 303.

The processor 301 may be a general-purpose central processing unit (central processing unit, CPU), a microprocessor, an application-specific integrated circuit (application-specific integrated circuit, ASIC), or one or more integrated circuits configured to control program execution of the solutions of this application.

The communication line 302 may include a path for transferring information between the foregoing components, for example, a bus.

The communication interface 304 is configured to communicate with another device or a communication network. The communication interface 304 may be any apparatus like a transceiver, for example, may be an Ethernet interface, a radio access network (radio access network, RAN) interface, a wireless local area network (wireless local area network, WLAN) interface, a transceiver, a pin, a bus, an interface circuit, or a transceiver circuit.

The memory 303 may be a read-only memory (read-only memory, ROM) or another type of static storage device that can store static information and instructions or a random access memory (random access memory, RAM) or another type of dynamic storage device that can store information and instructions; or may be an electrically erasable programmable read-only memory (electrically erasable programmable read-only memory, EEPROM), a compact disc read-only memory (compact disc read-only memory, CD-ROM) or another compact disc storage medium, an optical disc storage medium (including a compact disc, a laser disc, an optical disc, a digital versatile disc, a Blu-ray disc, or the like) and a magnetic disk storage medium or another magnetic storage device, or any other medium that can be configured to carry or store expected program code in a form of an instruction or a data structure and that is accessible by a computer, but is not limited thereto. The memory may exist independently, and is coupled to the processor 301 through the communication line 302. The memory 303 may alternatively be integrated with the processor 301. Usually, the memory provided in this application may be non-volatile.

The memory 303 is configured to store computer-executable instructions for performing the solutions provided in this application, and the processor 301 controls execution of the computer-executable instructions. The processor 301 is configured to execute the computer-executable instructions stored in the memory 303, to implement the method provided in this application. Alternatively, optionally, in this application, the processor 301 may perform a processing-related function in a method provided below in this application, and the communication interface 304 is responsible for communicating with another device or a communication network. This is not specifically limited in this application.

Optionally, the computer-executable instructions in this application may also be referred to as application program code. This is not specifically limited in this application.

The coupling in this application may be an indirect coupling or a communication connection between apparatuses, units, or modules in an electrical form, a mechanical form, or another form, and is used for information exchange between the apparatuses, the units, or the modules.

In an embodiment, the processor 301 may include one or more CPUs, for example, a CPU 0 and a CPU 1 in FIG. 3.

In an embodiment, the communication apparatus 30 may include a plurality of processors, for example, the processor 301 and a processor 307 in FIG. 3. Each of the processors may be a single-core (single-CPU) processor, or may be a multi-core (multi-CPU) processor. The processor herein may be one or more devices, circuits, and/or processing cores configured to process data (for example, computer program instructions).

In an embodiment, the communication apparatus 30 may further include an output device 305 and/or an input device 306. The output device 305 is coupled to the processor 301, and may display information in a plurality of manners. For example, the output device 305 may be a liquid crystal display (liquid crystal display, LCD), a light emitting diode (light emitting diode, LED) display device, a cathode ray tube (cathode ray tube, CRT) display device, or a projector (projector). The input device 306 is coupled to the processor 301, and may receive a user input in a plurality of manners. For example, the input device 306 may be a mouse, a keyboard, a touchscreen device, or a sensor device.

It may be understood that the composition structure shown in FIG. 3 does not constitute a limitation on the communication apparatus. In addition to the components shown in FIG. 3, the communication apparatus may include more or fewer components than those shown in the figure, or some components may be combined, or the components may be arranged differently.

The following describes the method provided in this application with reference to the accompanying drawings. Network elements in the following embodiments may have the components shown in FIG. 3, and details are not described again.

It may be understood that names of messages between network elements, names of parameters in messages, or the like in the following embodiments of this application are merely examples, and there may alternatively be other names during specific implementation. This is not specifically limited in this application.

It may be understood that, in this application, "/" may indicate an "or" relationship between associated objects. For example, A/B may indicate A or B. "And/or" may indicate that there are three relationships between associated objects. For example, A and/or B may indicate the following three cases: Only A exists, both A and B exist, and only B exists, where A and B may be in a singular form or a plural form. In addition, a representation similar to "at least one of A, B, and C" or "at least one of A, B, or C" is usually used to represent any one of the following: Only A exists; only B exists; only C exists; both A and B exist; both A and C exist; both B and C exist; and A, B, and C all exist. The foregoing uses three elements A, B, and C as an example to describe an optional item of the project. When there are more elements in the representation, a meaning of the representation may be obtained according to the foregoing rules.

For ease of description of the technical solutions of this application, in this application, the terms "first", "second", and the like may be used to distinguish between technical features with a same function or similar functions. The terms such as "first" and "second" are not intended to limit a quantity and an execution sequence, and the terms such as "first" and "second" are not intended to limit a definite difference. In this application, the term "in an example", "for example", or the like indicates an example, an illustration, or a description. Any embodiment or design scheme described with "in an example" or "for example" should not be construed as being more preferred or advantageous than another embodiment or design scheme. The term like "example" or "for example" is used to present a related concept in a specific manner for ease of understanding.

It may be understood that an "embodiment" mentioned throughout this specification means that particular features, structures, or characteristics related to embodiments are included in at least one embodiment of this application. Therefore, embodiments in the entire specification do not necessarily refer to a same embodiment. In addition, these particular features, structures, or characteristics may be combined in one or more embodiments by using any appropriate manner. It may be understood that sequence numbers of processes do not mean execution sequences in embodiments of this application. The execution sequences of the processes should be determined based on functions and internal logic of the processes, and should not be construed as any limitation on implementation processes of this application.

It may be understood that, in this application, both "when" and "if" mean that corresponding processing is performed in an objective case, but are not intended to limit time. In addition, the terms do not necessarily mean that a determining action is performed during implementation, and do not mean another limitation either.

In this application, "a plurality of" may be understood as two or more, unless otherwise specified. For example, a plurality of candidate QoS profiles may be two or more candidate QoS profiles.

In this application, unless otherwise specified, "greater than or equal to" may be described as "greater than" or "equal to", and "less than or equal to" may be described as "less than" or "equal to". For example, that A is greater than or equal to B may be described as that A is greater than B or that A is equal to B, and that A is less than or equal to B may be described as that A is less than B or that A is equal to B.

It may be understood that, in some scenarios, some optional features in this application may be independently implemented without relying on another feature, for example, a solution on which the optional features are currently based, to resolve a corresponding technical problem and achieve corresponding effects. Alternatively, in some scenarios, the optional features may be combined with another feature based on a requirement. Correspondingly, an apparatus provided in this application may also correspondingly implement these features or functions. Details are not described herein.

It may be understood that, in this application, same steps, or steps or technical features that have a same function may be mutually referenced in different embodiments.

It may be understood that, in this application, a terminal and/or a RAN node and/or a network element in a core network and/or a computing node may perform some or all of steps in this application. These steps are merely examples. In this application, other steps or variations of various steps may be further performed. In addition, the steps may be performed in an order different from an order shown in this application, and not all of the steps in this application are necessarily performed.

It may be understood that, in the following method provided in this application, the method is described by using an example in which a terminal, a RAN node, a network element in a core network, and a computing node serve as execution entities of interaction example. However, an execution entity of the interaction example is not limited in this application. For example, the terminal in the method provided in the following embodiments of this application may alternatively be a chip, a chip system, or a processor that supports the terminal in implementing the method, or may be a logical node, a logical module, or software that can implement all or some of functions of a server; the RAN node in the method provided below in this application may alternatively be a chip, a chip system, or a processor that supports the RAN node in implementing the method, or may be a logical node, a logical module, or software that can implement all or some of functions of an electronic device; the network element in the core network in the method provided below in this application may alternatively be a chip, a chip system, or a processor that supports the network element in the core network in implementing the method, or may be a logical node, a logical module, or software that can implement all or some of functions of the network element in the core network; and the computing node in the method provided below in this application may alternatively be a chip, a chip system, or a processor that supports the computing node in implementing the method, or may be a logical node, a logical module, or software that can implement all or some functions of the computing node.

FIG. 4 shows a communication method according to this application. The method may include the following steps.

S401: A terminal sends information about a first session to a first network element. Correspondingly, the first network element receives the information about the first session from the terminal.

In this application, the terminal may be any terminal in the RAN 201 shown in FIG. 2, for example, the terminal 2012 or the terminal 2013. The first network element may be any network element in the core network 202 shown in FIG. 2, or the first network element may be a new core network element.

In this application, the information about the first session indicates that the first session of the terminal corresponds to a plurality of candidate QoS profiles. In this way, the first network element can determine that the first session corresponds to the plurality of candidate QoS profiles, to obtain, for a RAN node, the plurality of candidate QoS profiles corresponding to the first session. In this application, the RAN node may be the RAN node 2011 in the RAN 201 shown in FIG. 2.

In this application, that the first session corresponds to the plurality of candidate QoS profiles may be understood as that the first session includes at least one QoS flow (QoS flow) that supports the plurality of candidate QoS profiles. For example, the first session includes one QoS flow, and the QoS flow supports a plurality of candidate QoS profiles; or the first session includes a plurality of QoS flows, and at least one of the plurality of QoS flows supports a plurality of candidate QoS profiles.

In a possible design, the information about the first session includes at least one of the following information: an identifier of the first session, an identifier (for example, a UE ID) of the terminal, an address of the terminal (an IP address or a MAC address of the terminal), a data network name (data network name, DNN), or single network slice selection assistance information (single network slice selection assistance information, S-NSSAI). Optionally, the first session is a PDU session. Therefore, the identifier of the first session may be a PDU session identifier (PDU session ID).

Optionally, one type of information or a combination of a plurality of types of information in the information about the first session may uniquely identify a PDU session. Therefore, the first network element may determine whether the PDU session includes a QoS flow that supports a plurality of candidate QoS profiles. For example, a new meaning may be specified for the one type of information or the combination of the plurality of types of information, so that the one type of information or the combination of the plurality of types of information indicates whether the PDU session includes a QoS flow that supports a plurality of candidate QoS profiles.

Optionally, the information about the first session is carried in a session establishment request (session establishment request) message.

It may be understood that the terminal may directly send the information about the first session to the first network element, or may send the information about the first session to the first network element via at least one intermediate network element. For example, the first session is a PDU session, and the first network element is an SMF network element. The terminal may send a session establishment request message to the SMF network element via an AMF network element. The session establishment request message includes the information about the first session. After receiving the session establishment request message, the SMF network element may identify the first session based on the information about the first session, and determine that the first session includes the QoS flow that supports the plurality of candidate QoS profiles.

S402: The first network element obtains the plurality of candidate QoS profiles based on the information about the first session.

In a possible design, any one of the plurality of candidate QoS profiles includes at least one of the following: an identifier of the candidate QoS profile, a guaranteed flow bit rate (guaranteed flow bit rate, GFBR), an uplink PDB, a downlink PDB, a total uplink and downlink PDB, a terminal computation load, a packet error rate (packet error rate, PER), a guaranteed bit rate (guaranteed bit rate, GBR), a packet error loss rate (packet error loss rate, PELR), a maximum data burst volume (maximum data burst volume, MDBV), or priority information (priority level).

In this application, the identifier of the candidate QoS profile is for identifying the candidate QoS profile, to distinguish between different candidate QoS profiles. For example, the identifier of the candidate QoS profile may be an index (index), for example, an index of the candidate QoS profile in the plurality of candidate QoS profiles. The GFBR may be an uplink GFBR or a downlink GFBR. For example, for an uplink service, the GFBR is an uplink GFBR; and for a downlink service, the GFBR is a downlink GFBR. The priority information indicates a priority of the candidate QoS profile. The MDBV indicates a maximum amount of data that can be served within a corresponding PDB and PELR.

In this application, the total uplink and downlink PDB is equal to a sum of an uplink PDB and a downlink PDB. The total uplink and downlink PDB may indicate a round trip time (round trip time, RTT) in which a data packet that can be guaranteed by a network is transmitted in the network, and is one of communication quality of service (QoS) parameters of the network. The total uplink and downlink PDB is critical to delay-sensitive human-machine interaction applications, such as cloud gaming, naked eye 3D, and XR applications. The network needs to provide a low RTT delay to ensure smooth high-definition experience of users. It may be understood that the total uplink and downlink PDB allows the uplink PDB and the downlink PDB to be the same or different. For example, if the total uplink and downlink PDB is 15 ms, the uplink PDB is 10 ms, and the downlink PDB is 5 ms, or both the uplink PDB and the downlink PDB are 7.5 ms. The network may flexibly configure, based on uplink and downlink network transmission statuses, a size of an uplink PDB reserved for an uplink data packet of a real-time interactive service and a size of a downlink PDB reserved for a downlink data packet corresponding to the uplink data packet. For example, if an uplink channel is in a poor state and a downlink channel is in a good state, the uplink PDB of the uplink data packet of the service may be configured to be 10 ms, and a downlink PDB of one or more downlink data packets corresponding to the uplink data packet of the service may be configured to be 5 ms. If statuses of both uplink and downlink channels are stable, the uplink PDB of the uplink data packet of the service and a downlink PDB of one or more downlink data packets corresponding to the service may be configured to be 7.5 ms.

It may be understood that the foregoing is merely an example of information or parameters included in the candidate QoS profile. During specific application, the candidate QoS profile may include more or less information or parameters than those described above. This is not limited.

It may be understood that, if the candidate QoS profile includes the identifier of the candidate QoS profile, different candidate QoS profiles may be distinguished by using identifiers. If the candidate QoS profile includes the GFBR, when subsequently determining a target QoS profile in the plurality of candidate QoS profiles, the RAN node may determine, based on the GFBR, whether the candidate QoS profile matches the current network status, for example, may determine the target QoS profile in a candidate QoS profile that can meet a GFBR of a current network. If the candidate QoS profile includes the total uplink and downlink PDB, when subsequently determining a target QoS profile in the plurality of candidate QoS profiles, the RAN node may determine, based on the total uplink and downlink PDB, whether the candidate QoS profile matches a current network status, for example, may determine the target QoS profile in a candidate QoS profile that can meet a total uplink and downlink PDB of the current network. If the candidate QoS profile includes the uplink PDB, when subsequently determining a target QoS profile in the plurality of candidate QoS profiles, the RAN node may determine, based on the uplink PDB, whether the candidate QoS profile matches a current network status, for example, may determine the target QoS profile in a candidate QoS profile that can meet an uplink PDB of the current network. If the candidate QoS profile includes the downlink PDB, when subsequently determining a target QoS profile in the plurality of candidate QoS profiles, the RAN node may determine, based on the downlink PDB, whether the candidate QoS profile matches a current network status, for example, may determine the target QoS profile in a candidate QoS profile that can meet a downlink PDB of the current network. If the candidate QoS profile includes the PER, when subsequently determining a target QoS profile in the plurality of candidate QoS profiles, the RAN node may determine, based on the PER, whether the candidate QoS profile matches a current network status, for example, may determine the target QoS profile in a candidate QoS profile that can meet a PER of the current network. If the candidate QoS profile includes the GBR, when subsequently determining a target QoS profile in the plurality of candidate QoS profiles, the RAN node may determine, based on the GBR, whether the candidate QoS profile matches a current network status, for example, may determine the target QoS profile in a candidate QoS profile that can meet a GBR of the current network. If the candidate QoS profile includes the PELR, when subsequently determining a target QoS profile in the plurality of candidate QoS profiles, the RAN node may determine, based on the PELR, whether the candidate QoS profile matches a current network status, for example, may determine the target QoS profile in a candidate QoS profile that can meet a PELR of the current network. If the candidate QoS profile includes the MDBV, when subsequently determining a target QoS profile in the plurality of candidate QoS profiles, the RAN node may determine, based on the MDBV, whether the candidate QoS profile matches a current network status, for example, may determine the target QoS profile in a candidate QoS profile that can meet an MDBV of the current network. If the candidate QoS profile includes the priority information, when subsequently determining a target QoS profile in the plurality of candidate QoS profiles, the RAN node may consider a priority indicated by the priority information.

In a possible implementation, the first network element obtains the plurality of candidate QoS profiles locally or from a network element in the core network other than the first network element.

For example, the first network element is an SMF network element. If the plurality of candidate QoS profiles are stored on the SMF network element, the SMF network element locally obtains the plurality of candidate QoS profiles. If the plurality of candidate QoS profiles are not stored on the SMF network element, the SMF network element sends, to a PCF network element or an AF network element, request information for requesting a candidate QoS profile. After receiving the request information, the PCF network element or the AF network element sends the plurality of candidate QoS profiles to the SMF network element.

S403: The first network element sends the plurality of candidate QoS profiles to the RAN node. Correspondingly, the RAN node obtains the plurality of candidate QoS profiles.

In this application, that the first network element sends the plurality of candidate QoS profiles to the RAN node may be described as that the first network element sends the plurality of candidate QoS profiles to a module in the RAN node. For example, the first network element sends the plurality of candidate QoS profiles to a CU or an RIC in the RAN node.

In this application, that the RAN node obtains the plurality of candidate QoS profiles may be understood as that the RAN node receives the plurality of candidate QoS profiles from another apparatus. For example, the RAN node receives the plurality of candidate QoS profiles from the first network element. Alternatively, that the RAN node obtains the plurality of candidate QoS profiles may be understood as that one module in the RAN node obtains the plurality of candidate QoS profiles from another module in the RAN node. For example, a DU of the RAN node obtains the plurality of candidate QoS profiles from a CU of the RAN node, or the CU or the DU of the RAN node obtains the plurality of candidate QoS profiles from an RIC of the RAN node.

It may be understood that, if the first session includes a plurality of QoS flows that support a plurality of candidate QoS profiles, the first network element sends, to the RAN node, the plurality of candidate QoS profiles supported by the plurality of QoS flows.

It may be understood that the first network element may directly send the plurality of candidate QoS profiles to the RAN node, or send the plurality of candidate QoS profiles to the RAN node via at least one intermediate network element.

For example, the first network element is an SMF network element, and the SMF network element may send the plurality of candidate QoS profiles to the RAN node via an AMF network element.

Optionally, the plurality of candidate QoS profiles are carried in a session resource setup request message (for example, a PDU session resource setup request message) or a session resource setup modification message (for example, a PDU session resource setup modification message).

Optionally, the first network element sends first indication information to the RAN node. Correspondingly, the RAN node receives the first indication information from the first network element. The first indication information indicates the RAN node to actively modify a QoS profile. In this way, after receiving the first indication information, the RAN node may have more manners of determining the target QoS profile, so that the determined target QoS profile is applicable to different communication scenarios. For example, the RAN node may not select a QoS profile with best QoS that can be provided in a current radio channel condition, but select a QoS profile other than the QoS profile with the best QoS from the plurality of candidate QoS profiles without affecting service experience of a QoS flow, thereby improving system performance, for example, reducing air interface resource consumption of a network and increasing a quantity of transmitting users. A manner in which the RAN node selects the QoS profile is described in the following S404.

Optionally, the first indication information is carried in the session resource setup request message or the session resource setup modification message.

For example, the session resource setup request message is used as an example to describe a case in which the session resource setup request message includes the plurality of candidate QoS profiles and the first indication information. For example, the session resource setup request message may include GBR QoS flow information (GBR QoS flow information). An information element (information element, IE)/group name (group name) included in the GBR QoS flow information may be shown in Table 3. The GBR QoS flow information shown in Table 3 includes three IEs/group names, which are respectively Notification Control (Notification Control), Autonomous QoS Selection (Autonomous QoS Selection), and Alternative QoS Parameters Set List (Alternative QoS Parameters Set List). An IE type of Notification Control and an IE type of Autonomous QoS Selection are enumerated types (ENUMERATED). It may be understood that the foregoing three IEs/group names are all optional. In a case of notification requested (notification requested), the GBR QoS flow information includes Notification Control. When a value of Autonomous QoS Selection is true (true), the GBR QoS flow information includes Autonomous QoS Selection. It may be understood that Autonomous QoS Selection is the first indication information, Alternative QoS Parameters Set List may include the plurality of candidate QoS profiles, and Notification Control may indicate the RAN node to reply to the first network element with a selected QoS profile, that is, the target QoS profile below.

**Table 3**

| IE/Group name | IE type (IE type) |
|---|---|
| Notification Control | ENUMERATED (notification requested...) |
| Autonomous QoS Selection | ENUMERATED (true...) |
| Alternative QoS Parameters Set List | |
| ... | |

It may be understood that Table 3 is merely an example of the GBR QoS flow information. In specific application, the GBR QoS flow information may include more or fewer columns than those in Table 3, or include more or fewer rows than those in Table 3. This is not limited.

In a possible implementation, after receiving the plurality of candidate QoS profiles, the RAN node performs mapping from a QoS flow to a DRB. For example, the RAN node performs mapping from a QoS flow to a DRB based on one of the plurality of candidate QoS profiles. The RAN node may further exchange air interface signaling related to a DRB configuration with the terminal.

Optionally, after completing the mapping, the RAN node sends, to the first network element, indication information indicating a resource setup result. It may be understood that, if the plurality of candidate QoS profiles are carried in the session resource setup request message, the indication information indicating the resource setup result may be carried in a session resource setup response message.

It may be understood that the RAN node may directly send, to the first network element, the indication information indicating the resource setup result; or send, to the first network element via at least one intermediate network element, the indication information indicating the resource setup result. For example, if the first network element is an SMF network element, the RAN node sends, to the SMF network element via an AMF network element, the indication information indicating the resource setup result.

S404: The RAN node actively determines a target QoS profile in the plurality of candidate QoS profiles based on a current network status.

In a possible implementation, when a function of actively modifying a QoS profile is enabled, the RAN node actively determines the target QoS profile in the plurality of candidate QoS profiles based on the current network status. Optionally, the RAN node periodically and actively determines the target QoS profile in the plurality of candidate QoS profiles based on the current network status. For example, for an uplink 60 FPS (an interframe space is 16.67 ms) video streaming service, the RAN node actively determines the target QoS profile in the plurality of candidate QoS profiles based on the current network status at an interval of 16.67 ms.

In a possible design, that the RAN node enables the function of actively modifying a QoS profile includes: The RAN node receives the first indication information, and enables, based on the first indication information, the function of actively modifying a QoS profile; and/or the RAN node receives second indication information, and enables, based on the second indication information, the function of actively modifying a QoS profile. The second indication information indicates that the terminal is overheating (over heating). In this way, the RAN node may determine, based on the first indication information and/or the second indication information, to enable the function of actively modifying a QoS profile. For example, the first indication information or the second indication information may include 1 bit. If a value of the 1 bit is "1", the RAN node enables the function of actively modifying a QoS profile. If the value of the 1 bit is "0", the RAN node does not enable the function of actively modifying a QoS profile. The reverse is also applicable.

It may be understood that, in specific application, the RAN node may not perform the operation of enabling the function of actively modifying a QoS profile. In other words, after receiving the first indication information and/or the second indication information, the RAN node directly and actively determines the target QoS profile in the plurality of candidate QoS profiles based on the current network status.

Optionally, the second indication information is carried in overheating assistance information (overheating assistance information). For example, the terminal sends the overheating assistance information to the RAN node, where the overheating assistance information includes the second indication information. In this way, after receiving the second indication information, the RAN node may determine that the terminal is overheating, and then modify a QoS profile, so that the modified target QoS profile can reduce a load of the terminal or a terminal computation load.

Optionally, the RAN node sets an overheating assistance configuration (overheatingAssistanceConfig) in an RRC reconfiguration message to "setup". In this way, the terminal may report the overheating assistance information to the RAN node based on the configuration when detecting internal overheating. The overheating assistance information may be carried in an overheating assistance (overheatingAssistance) field in assistance information (UEAssistanceInformation) reported by the terminal.

It may be understood that because load statuses of chips of different terminal types and terminal vendors are different, and a current terminal load is further related to many factors such as an environment and an external temperature, it is difficult to accurately obtain and standardize the current terminal load. Therefore, when the current terminal load is not obtained, to control the load of the terminal, and avoid running hot of the terminal or impact on standby time of the terminal due to an excessively high load of the terminal, in this application, any one of the plurality of candidate QoS profiles is designed to correspond to the load of the terminal (which may be described as the terminal computation load, and the load of the terminal is used as an example for description below). In this way, the RAN node may control the load of the terminal by modifying a QoS profile, to avoid an excessively high load of the terminal, thereby improving user experience.

In a possible implementation, the RAN node determines the target QoS profile based on the current network status and the terminal load corresponding to one or more of the plurality of candidate QoS profiles.

In a possible design, the RAN node preferentially determines that the target QoS profile is a first candidate QoS profile, or the RAN node determines that the target QoS profile is a second candidate QoS profile. The first candidate QoS profile is a candidate QoS profile that is in a candidate QoS profile meeting the current network status in the plurality of candidate QoS profiles and that corresponds to a highest load of the terminal. The second candidate QoS profile is a candidate QoS profile that is in the candidate QoS profile meeting the current network status in the plurality of candidate QoS profiles and that does not include a candidate QoS profile with a lowest load of the terminal.

It may be understood that a higher load of the terminal indicates that a processing task of the terminal is heavier. Therefore, after the processing task is completed, an amount of data that needs to be transmitted by the terminal may be small, and the terminal has a low QoS requirement. Therefore, if a terminal load corresponding to a candidate QoS profile is high, a QoS requirement corresponding to the candidate QoS profile is low. In other words, the first candidate QoS profile may also be described as a candidate QoS profile that is in the candidate QoS profile meeting the current network status in the plurality of candidate QoS profiles and that corresponds to a lowest QoS requirement. Correspondingly, a lower load of the terminal indicates that a processing task of the terminal is lighter. Therefore, after the processing task is completed, an amount of data that needs to be transmitted by the terminal may be larger, and the terminal has a higher QoS requirement. Therefore, if a terminal load corresponding to a candidate QoS profile is low, a QoS requirement corresponding to the candidate QoS profile is high. In other words, the second candidate QoS profile may also be described as a candidate QoS profile that is in the candidate QoS profile meeting the current network status in the plurality of candidate QoS profiles and that does not include a candidate QoS profile with a highest QoS requirement.

In a possible design, the candidate QoS profile corresponding to the lowest terminal load (or the candidate QoS profile corresponding to the highest QoS requirement) is a candidate QoS profile that meets at least one of the following in the plurality of candidate QoS profiles: a corresponding priority being the highest, a corresponding uplink GFBR being the largest, a corresponding downlink GFBR being the largest, a corresponding terminal computation load being the smallest, a corresponding total uplink and downlink PDB being the largest, a corresponding uplink PDB being the largest, or a corresponding downlink PDB being the largest.

In conclusion, the RAN node preferentially determines that the target QoS profile is the first candidate QoS profile, or the RAN node determines that the target QoS profile is the second candidate QoS profile. This can reduce a QoS requirement for data transmission between the terminal and the RAN node, so that more terminals can access the RAN node, thereby increasing a quantity of transmitting users.

It may be understood that, in this application, that the RAN node preferentially determines the target QoS profile as the first candidate QoS profile does not mean that the target QoS profile is definitely the first candidate QoS profile. As described above, the first candidate QoS profile may increase the load of the terminal. Therefore, to avoid overheating of the terminal, the RAN node does not select the first candidate QoS profile excessively, or the RAN node may control a quantity of times/frequency of selecting the first candidate QoS profile, control a duration of using the first candidate QoS profile, or the like.

For example, the plurality of candidate QoS profiles include a candidate QoS profile 1, a candidate QoS profile 2, and candidate QoS profile 3, and terminal load corresponding to the candidate QoS profile 1 < terminal load corresponding to the candidate QoS profile 2 < terminal load corresponding to the candidate QoS profile 3, that is, the candidate QoS profile 3 is the first candidate QoS profile. The RAN node may first determine that the target QoS profile is the candidate QoS profile 3; after a period of time, determine that the target QoS profile is the candidate QoS profile 2; and after another period of time, determines that the target QoS profile is the candidate QoS profile 3. It may be understood that the RAN node may alternatively determine that the target QoS profile is the candidate QoS profile 1.

In a possible design, a maximum selected number of the first candidate QoS profile in a first time period is less than or equal to a first value; a maximum selected percentage of the first candidate QoS profile in the first time period is less than or equal to a second value; a maximum selected duration of the first candidate QoS profile in the first time period is less than or equal to a third value; a maximum selected time of the first candidate QoS profile in the first time period is less than or equal to a fourth value; and/or a minimum selected interval of the first candidate QoS profile in the first time period is greater than or equal to a fifth value. In this way, the RAN node can effectively control the load of the terminal, to avoid overheating of the terminal.

The maximum selected number of the first candidate QoS profile in the first time period is a maximum quantity of times that the first candidate QoS profile can be selected in the first time period. The maximum selected percentage of the first candidate QoS profile in the first time period is a ratio of a maximum quantity of times that the first candidate QoS profile can be selected in the first time period to a total quantity of times that the RAN node selects the target QoS profile from the plurality of candidate QoS profiles in the first time period. The maximum selected duration of the first candidate QoS profile in the first time period is a maximum duration in which the first candidate QoS profile is continuously used in the first time period. The maximum selected time of the first candidate QoS profile in the first time period is a maximum duration in which the first candidate QoS profile is used in the first time period. The minimum selected interval of the first candidate QoS profile in the first time period is a minimum interval between two consecutive times of selecting the first candidate QoS profile by the RAN node in the first time period. Any one of the first value to the fifth value may be preset, defined in a protocol, or indicated by a network element (for example, the first network element) in the core network.

For example, the first time period is a time period between a moment 1 and a moment 2, the plurality of candidate QoS profiles include a candidate QoS profile 1, a candidate QoS profile 2, and candidate QoS profile 3, and terminal load corresponding to the candidate QoS profile 1 < terminal load corresponding to the candidate QoS profile 2 < terminal load corresponding to the candidate QoS profile 3, that is, the candidate QoS profile 3 is the first candidate QoS profile. If a quantity of times that the candidate QoS profile 3 is selected in a time period from the moment 1 to a moment 3 (the moment 3 is a moment between the moment 1 and the moment 2) is already equal to the first value, in a time period from the moment 3 to the moment 2, the RAN node does not select the candidate QoS profile 3, and the RAN node may determine that the target QoS profile is the candidate QoS profile 2 or the candidate QoS profile 1. Alternatively, if a ratio of a quantity of times that the candidate QoS profile 3 is selected in a time period from the moment 1 to a moment 3 to a total quantity of times that the RAN node selects the target QoS profile from the plurality of candidate QoS profiles in the time period from the moment 1 to the moment 3 is already greater than or equal to the second value, in a time period from the moment 3 to the moment 2, the RAN node does not select the candidate QoS profile 3, and the RAN node may determine that the target QoS profile is the candidate QoS profile 2 or the candidate QoS profile 1. Alternatively, if a duration in which the candidate QoS profile 3 is continuously used in a time period from the moment 1 to a moment 3 is already greater than or equal to the third value, in a time period from the moment 3 to the moment 2, the RAN node does not select the candidate QoS profile 3, and the RAN node may determine that the target QoS profile is the candidate QoS profile 2 or the candidate QoS profile 1. Alternatively, if a duration in which the candidate QoS profile 3 is used in a time period from the moment 1 to a moment 3 is already greater than or equal to the fourth value, in a time period from the moment 3 to the moment 2, the RAN node does not select the candidate QoS profile 3, and the RAN node may determine that the target QoS profile is the candidate QoS profile 2 or the candidate QoS profile 1. Alternatively, if the RAN node determines, at a moment 3, that the target QoS profile is the candidate QoS profile 3, and the RAN node further needs to determine the target QoS profile at a moment 4 after the moment 3, but an interval between the moment 4 and the moment 3 is less than the fifth value, at the moment 4, the RAN node does not select the candidate QoS profile 3, and the RAN node may determine that the target QoS profile is the candidate QoS profile 2 or the candidate QoS profile 1. Alternatively, if the RAN node determines, at a moment 3, that the target QoS profile is the candidate QoS profile 3, the RAN node further needs to determine the target QoS profile at a moment 4 after the moment 3, and an interval between the moment 4 and the moment 3 is greater than or equal to the fifth value, but a duration in which the candidate QoS profile 3 is continuously used in a time period from the moment 1 to a moment 3 is already greater than or equal to the third value, at the moment 4, the RAN node does not select the candidate QoS profile 3, and the RAN node may determine that the target QoS profile is the candidate QoS profile 2 or the candidate QoS profile 1. Alternatively, if the RAN node determines, at a moment 3, that the target QoS profile is the candidate QoS profile 3, the RAN node further needs to determine the target QoS profile at a moment 4 after the moment 3, an interval between the moment 4 and the moment 3 is greater than or equal to the fifth value, and a duration in which the candidate QoS profile 3 is continuously used in a time period from the moment 1 to the moment 4 is less than the third value, the RAN node may select the candidate QoS profile at the moment 4. Alternatively, if a quantity of times that the candidate QoS profile 3 is selected in a time period from the moment 1 to a moment 3 is less than the first value, but a duration in which the candidate QoS profile 3 is continuously used is already greater than or equal to the third value, in a time period from the moment 3 to the moment 2, the RAN node does not select the candidate QoS profile 3, and the RAN node may determine that the target QoS profile is the candidate QoS profile 2 or the candidate QoS profile 1.

It may be understood that, based on the foregoing descriptions, it can be learned that if the RAN node receives the second indication information, the RAN node determines that the terminal is overheating. To reduce the load of the terminal and avoid continuous overheating of the terminal, the RAN node may determine that the target QoS profile is a third candidate QoS profile. A terminal load corresponding to the third candidate QoS profile is lower than the current terminal load.

For example, the RAN node initially determines that the target QoS profile is the candidate QoS profile 1. Then the RAN node receives the second indication information, and determines, based on the second indication information, that the terminal is overheating. In this case, it may be considered that a terminal load corresponding to the candidate QoS profile 1 is the current terminal load. Subsequently, the RAN node may modify the target QoS profile to the candidate QoS profile 2. It may be understood that, for the foregoing example, a terminal load corresponding to the candidate QoS profile 2 is lower than the terminal load corresponding to the candidate QoS profile 1. It may be understood that a priority corresponding to the candidate QoS profile 2 is higher than that corresponding to the candidate QoS profile 1, an uplink GFBR corresponding to the candidate QoS profile 2 is greater than that corresponding to the candidate QoS profile 1, a downlink GFBR corresponding to the candidate QoS profile 2 is greater than that corresponding to the candidate QoS profile 1, a terminal computation load corresponding to the candidate QoS profile 2 is less than that corresponding to the candidate QoS profile 1, a total uplink and downlink PDB corresponding to the candidate QoS profile 2 is greater than that corresponding to the candidate QoS profile 1, an uplink PDB corresponding to the candidate QoS profile 2 is greater than that corresponding to the candidate QoS profile 1, and/or a downlink PDB corresponding to the candidate QoS profile 2 is greater than that corresponding to the candidate QoS profile 1.

In this application, the first time period may be preset, defined in a protocol, or indicated by a network element (for example, the first network element) in the core network. For example, the first time period is indicated by the first network element. The first network element may send information about the first time period to the RAN node, to indicate the first time period. Correspondingly, the RAN node receives the information about the first time period from the first network element. Optionally, the information about the first time period is carried in the session resource setup request message or the session resource setup modification message. The information about the first time period includes a length (for example, 1 second) of the first time period. Optionally, the information about the first time period further includes start time of the first time period, or the information about the first time period further includes start time and end time of the first time period.

It may be understood that, if the target QoS profile is different from the candidate QoS profile for mapping the QoS flow to the DRB in S403, the RAN node may update, based on the target QoS profile, an air interface transmission parameter or a scheduling parameter, such as a resource configuration, a scheduling priority, a preemption capability, or a preemption vulnerability, that is between the terminal and the RAN node and that is associated with the DRB.

It may be understood that, after determining the target QoS profile, the RAN node may transmit data based on the target QoS profile.

It may be understood that, if the first session includes a plurality of QoS flows that support a plurality of candidate QoS profiles, the RAN node actively determines, based on the current network status, a target QoS profile of each QoS flow in the plurality of candidate QoS profiles supported by the QoS flow. Target QoS profiles of different QoS flows may be the same or different.

S405: The RAN node sends first information to the terminal and/or a computing node. Correspondingly, the terminal and/or the computing node receive/receives the first information from the RAN node.

In this application, the computing node may be the computing node 203 in the communication system 20 shown in FIG. 2.

In this application, the first information indicates the target QoS profile. In this way, after receiving the first information, the terminal and/or the computing node may determine the target QoS profile based on the first information. Optionally, the first information is further for determining a first parameter. For example, there is a correspondence between the first parameter and the target QoS profile, and the terminal and/or the computing node may determine the first parameter based on the first information and the correspondence. In this way, after receiving the first information, the terminal and/or the computing node may determine the first parameter based on the first information, to provide a better service for users. The foregoing correspondence may be stored in the terminal and/or the computing node, or the terminal and/or the computing node obtain/obtains the correspondence from another device. For example, the AF network element may determine the correspondence, and the terminal and/or the computing node obtain/obtains the correspondence from the AF network element.

Optionally, there is a correspondence between the first parameter and one or more pieces of information included in the target QoS profile. For example, there is a correspondence between the first parameter and an identifier of the target QoS profile, there is a correspondence between the first parameter and a GFBR included in the target QoS profile, there is a correspondence between the first parameter and a total uplink and downlink PDB included in the target QoS profile, there is a correspondence between the first parameter and an uplink PDB or a downlink PDB included in the target QoS profile, there is a correspondence between the first parameter and a PER included in the target QoS profile, there is a correspondence between the first parameter and a PELR included in the target QoS profile, there is a correspondence between the first parameter and a GBR included in the target QoS profile, and/or there is a correspondence between the first parameter and an MDBV included in the target QoS profile.

In this application, the first information may include a parameter related to the target QoS profile. For example, in S405, the first information may include at least one of the following: the identifier of the target QoS profile, the GFBR included in the target QoS profile, the total uplink and downlink PDB included in the target QoS profile, the uplink PDB included in the target QoS profile, the downlink PDB included in the target QoS profile, the PELR included in the target QoS profile, the PER included in the target QoS profile, the GBR included in the target QoS profile, the MDBV included in the target QoS profile, or priority information included in the target QoS profile.

In this application, the first parameter includes at least one of the following: a task split point, a task amount for task processing, a bit rate, a data rate (or a source coding bit rate), a frame rate, or resolution. The task amount of task processing may be understood as enabling or disabling one or more functions, for example, enabling or disabling reflection rendering and/or dynamic diffuse global illumination (dynamic diffuse global illumination, DDGI) rendering. Methods such as the reflection rendering or the DDGI rendering may be applied to high-definition mobile games or cloud games to improve a lifelike sense of a person, an environment, and a skill effect in an image. Specifically, the reflection rendering may reflect a shadow of a character role on a smooth object surface, and the DDGI may generate diffuse global illumination in real time in a dynamic scene and illumination. Therefore, these rendering technologies have a large computing amount, resulting in longer image rendering time and a higher requirement on a network transmission delay. For descriptions of the task split point, the bit rate, the data rate, the frame rate, and the resolution, refer to the foregoing descriptions of the technical terms in this application. Details are not described again.

For example, if the plurality of candidate QoS profiles include a candidate QoS profile 1, a candidate QoS profile 2, and a candidate QoS profile 3, and the target QoS profile is the candidate QoS profile 3, the first information may include at least one of the following: an identifier of the candidate QoS profile 3, a GFBR included in the candidate QoS profile 3, a total uplink and downlink PDB included in the candidate QoS profile 3, a downlink PDB included in the candidate QoS profile 3, an uplink PDB included in the candidate QoS profile 3, a PELR included in the candidate QoS profile 3, a PER included in the candidate QoS profile 3, a GBR included in the candidate QoS profile 3, an MDBV included in the candidate QoS profile 3, or priority information included in the candidate QoS profile 3. The terminal and/or the computing node may determine, based on the first information, that the target QoS profile is the candidate QoS profile 3. The terminal and/or the computing node may further determine, based on the first information, at least one of a task split point corresponding to the candidate QoS profile 3, a task amount for task processing corresponding to the candidate QoS profile 3, a bit rate corresponding to the candidate QoS profile 3, a data rate corresponding to the candidate QoS profile 3, a frame rate corresponding to the candidate QoS profile 3, or resolution corresponding to the candidate QoS profile 3. Subsequently, the terminal and/or the computing node may process data based on the first parameter, to improve service experience.

For example, if the first parameter includes the task split point, the terminal and/or the computing node may determine the task split point corresponding to the candidate QoS profile 3 as a current task split point, and execute a task based on the current task split point, to obtain intermediate data. Alternatively, if the first parameter includes the task amount for task processing, the terminal and/or the computing node may determine the task amount for task processing corresponding to the candidate QoS profile 3 as a current task amount for task processing, and execute a task based on the current task amount for task processing. For example, if the task amount for task processing corresponding to the candidate QoS profile 3 indicates to enable reflection rendering, the terminal and/or the computing node enable/enables reflection rendering; or if the task amount for task processing corresponding to the candidate QoS profile 3 indicates to disable DDGI rendering, the terminal and/or the computing node disable/disables DDGI rendering. Alternatively, if the first parameter includes the bit rate, the terminal and/or the computing node may determine the bit rate corresponding to the candidate QoS profile 3 as a current bit rate, and process data based on the current bit rate. Alternatively, if the first parameter includes the data rate, the terminal and/or the computing node may determine the data rate corresponding to the candidate QoS profile 3 as a current data rate, and process data based on the current data rate. Alternatively, if the first parameter includes the frame rate, the terminal and/or the computing node may determine the frame rate corresponding to the candidate QoS profile 3 as a current frame rate, and process data based on the current frame rate. Alternatively, if the first parameter includes the resolution, the terminal and/or the computing node may determine the resolution corresponding to the candidate QoS profile 3 as current resolution, and process data based on the current resolution.

Optionally, the first parameter is related to first difference information. The first difference information indicates a difference between the target QoS profile and a historical QoS profile determined before the target QoS profile. For example, the historical QoS profile is a QoS profile that is last determined before the target QoS profile.

It may be understood that after obtaining the first information, the terminal and/or the computing node may determine the target QoS profile based on the first information, determine the first difference information based on the target QoS profile and the historical QoS profile, and determine the first parameter based on the first difference information.

In a possible design, the first difference information indicates whether the target QoS profile is the same as the historical QoS profile. Specifically, the first difference information indicates whether the identifier of the target QoS profile is the same as an identifier of the historical QoS profile, whether the GFBR included in the target QoS profile is the same as a GFBR included in the historical QoS profile, whether the uplink PDB included in the target QoS profile is the same as an uplink PDB included in the historical QoS profile, whether the downlink PDB included in the target QoS profile is the same as a downlink PDB included in the historical QoS profile, whether the total uplink and downlink PDB included in the target QoS profile is the same as a total uplink and downlink PDB included in the historical QoS profile, whether the terminal computation load included in the target QoS profile is the same as a terminal computation load included in the historical QoS profile, whether the PER included in the target QoS profile is the same as a PER included in the historical QoS profile, whether the GBR included in the target QoS profile is the same as a GBR included in the historical QoS profile, whether the PELR included in the target QoS profile is the same as a PELR included in the historical QoS profile, whether the MDBV included in the target QoS profile is the same as an MDBV included in the historical QoS profile, and/or whether the priority information included in the target QoS profile is the same as priority information included in the historical QoS profile.

In an example, when the first difference information indicates that the target QoS profile is the same as the historical QoS profile, the first parameter remains unchanged, to be specific, the first parameter corresponding to the target QoS profile is the same as a first parameter corresponding to the historical QoS profile; or when the first difference information indicates that the target QoS profile is different from the historical QoS profile, the terminal and/or the computing node determine/determines, based on the target QoS profile and the correspondence between the first parameter and the target QoS profile, the first parameter corresponding to the target QoS profile. In this way, when the first difference information indicates that the target QoS profile is the same as the historical QoS profile, the first parameter may not be modified, to avoid deterioration of user experience caused by frequent changes of the first parameter; or when the first difference information indicates that the target QoS profile is different from the historical QoS profile, the first parameter may be modified in a timely manner, to provide a better service for users.

In another possible design, the first difference information indicates a difference between the target QoS profile and the historical QoS profile. Specifically, the first difference information may indicate a difference between the GFBR included in the target QoS profile and a GFBR included in the historical QoS profile, a difference between the uplink PDB included in the target QoS profile and an uplink PDB included in the historical QoS profile, a difference between the downlink PDB included in the target QoS profile and a downlink PDB included in the historical QoS profile, a difference between the total uplink and downlink PDB included in the target QoS profile and a total uplink and downlink PDB included in the historical QoS profile, a difference between the terminal computation load included in the target QoS profile and a terminal computation load included in the historical QoS profile, a difference between the PER included in the target QoS profile and a PER included in the historical QoS profile, a difference between the GBR included in the target QoS profile and a GBR included in the historical QoS profile, a difference between the PELR included in the target QoS profile and a PELR included in the historical QoS profile, and/or a difference between the MDBV included in the target QoS profile and an MDBV included in the historical QoS profile.

In an example, the first difference information indicates the difference between the total uplink and downlink PDB included in the target QoS profile and the total uplink and downlink PDB included in the historical QoS profile, and the first parameter is the task amount for task processing. If a first parameter corresponding to the historical QoS profile is disabling reflection rendering/DDGI rendering, and the difference is a negative number (to be specific, the total uplink and downlink PDB decreases, and a network status improves), the first parameter corresponding to the target QoS profile is enabling reflection rendering/DDGI rendering. To be specific, the terminal and/or the computing node enable/enables reflection rendering/DDGI rendering, to improve visual quality of users. If the first parameter corresponding to the historical QoS profile is disabling reflection rendering/DDGI rendering, and the difference is 0 (to be specific, the total uplink and downlink PDB remains unchanged, and the network status remains unchanged), the first parameter remains unchanged. To be specific, the terminal and/or the computing node maintain/maintains a state of disabling reflection rendering/DDGI rendering. If the first parameter corresponding to the historical QoS profile is enabling reflection rendering/DDGI rendering, and the difference is a positive number (to be specific, the total uplink and downlink PDB increases, and the network status deteriorates), the first parameter corresponding to the target QoS profile is disabling reflection rendering/DDGI rendering. To be specific, the terminal and/or the computing node disable/disables reflection rendering/DDGI rendering, to avoid an air interface resource waste and a visual quality lag for users caused by a frame transmission failure.

In another example, the first difference information indicates the difference between the total uplink and downlink PDB included in the target QoS profile and the total uplink and downlink PDB included in the historical QoS profile, and the first parameter is the task amount for task processing. If a first parameter corresponding to the historical QoS profile is disabling reflection rendering/DDGI rendering, the difference is a negative number, and the difference is less than or equal to a first threshold (to be specific, the total uplink and downlink PDB decreases significantly, and the network status improves significantly), the first parameter corresponding to the target QoS profile is enabling reflection rendering/DDGI rendering. To be specific, the terminal and/or the computing node enable reflection rendering/DDGI rendering, to improve visual quality of users. If the first parameter corresponding to the historical QoS profile is enabling reflection rendering/DDGI rendering, the difference is a positive number, and the difference is greater than or equal to a second threshold (to be specific, the total uplink and downlink PDB increases significantly, and the network status deteriorates significantly), the first parameter corresponding to the target QoS profile is disabling reflection rendering/DDGI rendering. To be specific, the terminal and/or the computing node disable/disables reflection rendering/DDGI rendering, to avoid an air interface resource waste and a visual quality lag for users caused by a frame transmission failure. The first threshold is a negative number, and the second threshold is a positive number. Optionally, an absolute value of the first threshold is the same as an absolute value of the second threshold. For example, the first threshold is -50 ms, and the second threshold is 50 ms.

It may be understood that the total uplink and downlink PDB in the foregoing example may also be described as one or more QoS indicators in the uplink PDB, the downlink PDB, the PER, the GFBR, the PELR, or the MDBV

It may be understood that, if the first session includes a plurality of QoS flows that support a plurality of candidate QoS profiles, the first information may further indicate a target QoS profile of each QoS flow. Therefore, the first information may further include a related identifier of a QoS flow corresponding to the target QoS profile, for example, a DRB identifier (DRB identifier) to which the QoS flow is mapped over an air interface, a logical channel identifier (logical channel identifier, LCID), or an identifier of the first session.

It may be understood that if the target QoS profile determined in S404 is the same as a target QoS profile determined last time, the RAN node may not send the first information to the terminal or the computing node, to reduce signaling overheads. If the target QoS profile determined in S404 is different from the target QoS profile determined last time, the RAN node may send the first information to the terminal and/or the computing node, so that the terminal and/or the computing node determine/determines the target QoS profile based on the first information, or determine/determines the target QoS profile and the first parameter based on the first information.

The following separately describes a case in which the RAN node sends the first information to the terminal and a case in which the RAN node sends the first information to the computing node. First, the case in which the RAN node sends the first information to the terminal is described.

In a possible implementation, for an uplink service, the RAN node sends the first information to the terminal. Correspondingly, the terminal receives the first information from the RAN node.

In a possible design, the RAN node sends the first information to the SMF network element via the AMF network element. The first information may be carried in a current QoS parameters set index (Current QoS Parameters Set Index) IE in a session resource notification (for example, a PDU Session Resource Notify) message, a session resource setup response (for example, a PDU Session Resource Setup Response) message, or a session resource modification response (for example, a PDU Session Resource Modify Response) message. Subsequently, the SMF network element may send the first information to the terminal. For example, the SMF network element sends the first information to the terminal by using NAS signaling.

In another possible design, the first information is carried in downlink control information (downlink control information, DCI), a medium access control control element (medium access control control element, MAC CE), a PDCP control PDU (PDCP Control PDU) message, or an RRC message. In other words, the RAN node may quickly send the first information to the terminal over an air interface, so that the terminal determines the target QoS profile or the target QoS profile and the first parameter in a timely manner.

As described above, functions of the RAN node may be split. For example, the RAN node may be split into a CU and a DU, or may be split into an nrt-RIC, a CU, and a DU. Further, the CU may be further split into a CU-CP and a CU-UP. The RRC message or the PDCP control PDU message may be sent by the CU, and the MAC CE or the DCI may be sent by the DU. Different RAN node splitting scenarios are separately described below.

In a possible implementation, the RAN node includes a CU and a DU. If the target QoS profile is determined by the CU, the CU sends the first information to the DU through an F1 interface. In this way, the DU may send the first information to the terminal, where the first information may be carried in a MAC CE message or DCI sent by the DU. The CU and the DU shown in FIG. 1B are used as an example. An RRC layer or a PDCP layer of the CU sends the first information to an RLC layer of the DU through an F1 interface. After receiving the first information, the RLC layer of the DU delivers the first information to a MAC layer. After obtaining the first information, the MAC layer of the DU sends a MAC CE or DCI to the terminal. The MAC CE or the DCI includes the first information. If the target QoS profile is determined by the DU, the DU sends the first information to the CU. In this way, the CU can send the first information to the terminal, where the first information may be carried in an RRC message or a PDCP control PDU message sent by the CU. The CU and the DU shown in FIG. 1B are used as an example. An RLC layer of the DU sends the first information to a PDCP layer of the CU through an F1 interface. After receiving the first information, the PDCP layer of the CU sends a PDCP control PDU to the terminal, where the PDCP control PDU includes the first information. Alternatively, after receiving the first information, the PDCP layer of the CU delivers the first information to an RRC layer. After obtaining the first information, the RRC layer of the CU sends an RRC message to the terminal, where the RRC message includes the first information. It may be understood that the RRC message may be further included in a PDCP data PDU message at the PDCP layer. It should be understood that, if the target QoS profile is determined by the DU, in S403, the CU receives the plurality of candidate QoS profiles from the first network element, and sends the plurality of candidate QoS profiles to the DU, so that the DU determines the target QoS profile in the plurality of candidate QoS profiles.

In a possible implementation, the RAN node includes a CU and a DU, and the CU is further split into a CU-CP and a CU-UP. If the target QoS profile is determined by the CU-CP, the CU-CP sends the first information to the CU-UP. In this way, the CU-UP can send the first information to the terminal. For example, the CU-UP includes the first information to be sent to the terminal in a PDCP PDU, where the PDCP PDU may be a PDCP control PDU. If the target QoS profile is determined by the DU, the DU first sends the first information to the CU, and then the CU-CP sends the received first information to the CU-UP. In this way, the CU-UP can send the first information to the terminal. For example, the CU-UP includes the first information to be sent to the terminal in a PDCP PDU, where the PDCP PDU may be a PDCP control PDU.

In a possible implementation, the RAN node includes an nrt-RIC, a CU, and a DU. If the target QoS profile is determined by the nrt-RIC, the nrt-RIC sends the first information to the DU, so that the DU sends the first information to the terminal. For example, the DU includes the first information to be sent to the terminal in a MAC CE or DCI. Alternatively, the nrt-RIC sends the first information to the CU, so that the CU sends the first information to the terminal. For example, the CU directly includes the first information to be sent to the terminal in an RRC message; or includes the first information to be sent to the terminal in a PDCP PDU, where the PDCP PDU may be a PDCP control PDU.

In a possible implementation, the RAN node includes an nrt-RIC, a CU, and a DU, and the CU is further split into a CU-CP and a CU-UP. If the target QoS profile is determined by the nrt-RIC, the nrt-RIC sends the first information to the CU-UP. In this way, the CU-UP can send the first information to the terminal. For example, the CU-UP includes the first information to be sent to the terminal in a PDCP PDU, where the PDCP PDU may be a PDCP control PDU. Alternatively, the nrt-RIC sends the first information to the CU-CP. In this way, the CU-CP can send the first information to the terminal. For example, the CU-CP includes the first information to be sent to the terminal in an RRC message. Alternatively, the nrt-RIC first sends the first information to the CU-CP, and then the CU-CP sends the first information to the CU-UP. In this way, the CU-UP can send the first information to the terminal. For example, the CU-UP includes the first information to be sent to the terminal in a PDCP PDU.

Optionally, after receiving the first information, the terminal delivers the first information to an application layer of the terminal. The application layer determines the target QoS profile or the target QoS profile and the first parameter based on the first information. Then, the application layer may process data based on the first parameter, and send the processed data to the computing node.

Optionally, for the uplink service, the RAN node may not send the first information to the computing node. Optionally, after receiving the first information, the terminal may indicate the target QoS profile or the first parameter to the computing node. For example, the terminal sends metadata (metadata) to the computing node. Correspondingly, the computing node receives the metadata from the terminal. The metadata includes the first information. The metadata is descriptive and contextual information about data, and is used to organize, locate, and understand the data. In addition to the first information, the metadata may further indicate at least one of the following: a title of the metadata, a description of the metadata, a tag of the metadata, a category of the metadata, who creates the metadata, creation time of the metadata, who last modifies the metadata, when modifies the metadata, or who can access/update the metadata. For another example, the terminal sends the first information to the computing node. Correspondingly, the computing node receives the first information from the terminal. The first information is encapsulated by using RTP, RTCP, QUIC, or another protocol above an IP layer.

It may be understood that the metadata may not include the first information, but include second information. Alternatively, the terminal encapsulates the second information by using RTP, RTCP, QUIC, or another protocol above an IP layer, and sends the encapsulated second information to the computing node. The second information may indicate the first parameter. In this way, after receiving the second information, the computing node may determine the first parameter based on the second information. For example, if the terminal determines the task split point based on the first information, the second information may indicate the determined task split point. For example, the second information includes an identifier of the determined task split point. Alternatively, if the terminal determines, based on the first information, to disable reflection rendering, the second information may indicate to disable reflection rendering. For example, the second information includes 1 bit, and a value of the 1 bit is "0", indicating to disable reflection rendering. Alternatively, if the terminal determines the bit rate based on the first information, the second information may indicate the determined bit rate. Alternatively, if the terminal determines the data rate based on the first information, the second information indicates the determined data rate. Alternatively, if the terminal determines the frame rate based on the first information, the second information indicates the determined frame rate. Alternatively, if the terminal determines the resolution based on the first information, the second information indicates the determined resolution.

Optionally, for the uplink service, the RAN node may alternatively send the first information to the computing node. After receiving the first information, the computing node indicates the target QoS profile to the terminal. For descriptions of this process, refer to the following corresponding descriptions in a case in which for a downlink service, the RAN node sends the first information to the computing node, and the computing node indicates the target QoS profile to the terminal after receiving the first information. Details are not described herein again.

The following describes the case in which the RAN node sends the first information to the computing node.

In a possible implementation, for a downlink service, the RAN node sends the first information to the computing node. Correspondingly, the computing node receives the first information from the RAN node.

In a possible design, the RAN node sends the first information to the SMF network element via the AMF network element. After receiving the first information, the SMF network element sends the first information to the computing node via an AF network element. For example, the RAN node sends the first information to the SMF network element via the AMF network element. The first information may be carried in a current QoS parameters set index IE in a session resource notification message, a session resource setup response message, or a session resource modification response message. Subsequently, the SMF network element may send the first information to the PCF network element. After receiving the first information, the PCF network element may send the first information to the computing node via the AF network element.

In another possible design, the RAN node sends the first information to the computing node via a UPF network element. Specifically, the RAN node sends a first data packet to the UPF network element. Correspondingly, the UPF network element receives the first data packet from the RAN node. A header of the first data packet includes the first information. For example, a tunneling protocol user plane part (for example, a user plane part of general packet radio service (general packet radio service, GPRS) tunneling protocol (user plane part of GPRS tunneling protocol, GTP-U)) header of the first data packet includes the first information, to implement quick sending of the first information. After receiving the first data packet, the UPF network element detects a GTP-U header of the first data packet to obtain the first information, and then sends the first information to the computing node. For example, the UPF sends the first information to the computing node through an application programming interface (application programming interface, API) via an NEF or a local NEF (local-NEF). For another example, the UPF network element sends a second data packet to the computing node. Correspondingly, the computing node receives the second data packet from the UPF. The second data packet includes the first information. The second data packet is an RTP data packet, an RTCP data packet, a QUIC data packet, or another data packet of a protocol above an IP layer.

Optionally, the first data packet includes uplink data of a QoS flow that supports a plurality of candidate QoS profiles, or the first data packet includes dummy (dummy) uplink data generated by the RAN node to transmit the first information. Optionally, the second data packet includes uplink data of a QoS flow that supports a plurality of candidate QoS profiles, or the second data packet includes dummy uplink data generated by a UPF node to transmit the first information. The uplink data included in the second data packet is encapsulated by using RTP, RTCP, QUIC, or another protocol above an IP layer.

As described above, functions of the RAN node may be split. For example, the RAN node may be split into a CU and a DU, or may be split into an nrt-RIC, a CU, and a DU. Further, the CU may be further split into a CU-CP and a CU-UP. Different RAN node splitting scenarios are separately described below.

In a possible implementation, the RAN node includes a CU and a DU. If the target QoS profile is determined by the DU, the DU sends the first information to the CU. In this way, the CU can send the first information to the computing node. It should be understood that, if the target QoS profile is determined by the DU, in S403, the CU receives the plurality of candidate QoS profiles from the first network element, and sends the plurality of candidate QoS profiles to the DU, so that the DU determines the target QoS profile in the plurality of candidate QoS profiles.

In a possible implementation, the RAN node includes a CU and a DU, and the CU is further split into a CU-CP and a CU-UP. If the target QoS profile is determined by the DU, the DU sends the first information to the CU-UP through the CU-CP, or the DU sends the first information to the CU-UP through an F1-u interface (for example, the first information is carried in a GTP-U header of uplink data over the F1-u interface). In this way, the CU-UP can send the first information to the computing node.

In a possible implementation, the RAN node includes an nrt-RIC, a CU, and a DU. If the target QoS profile is determined by the nrt-RIC, the nrt-RIC sends the first information to the CU, so that the CU sends the first information to the computing node.

In a possible implementation, the RAN node includes an nrt-RIC, a CU, and a DU, and the CU is further split into a CU-CP and a CU-UP. If the target QoS profile is determined by the nrt-RIC, the nrt-RIC sends the first information to the CU-UP. In this way, the CU-UP may include the first information in a GTP-U header, and send the GTP-U header to the computing node.

It may be understood that, after receiving the first information, the computing node may determine the target QoS profile or the target QoS profile and the first parameter based on the first information. Then, the computing node may process data based on the first parameter, and send the processed data to the terminal.

Optionally, for the downlink service, the RAN node does not send the first information to the terminal. Optionally, after receiving the first information, the computing node may indicate the target QoS profile to the terminal. For example, the computing node sends metadata to the terminal. Correspondingly, the terminal receives the metadata from the computing node. The metadata includes the first information.

It may be understood that the metadata may not include the first information, but include second information. The second information may indicate the first parameter. In this way, the terminal may determine the first parameter based on the second information. For example, if the computing node determines the task split point based on the first information, the second information may indicate the determined task split point. For example, the second information includes an identifier of the determined task split point. Alternatively, if the computing node determines, based on the first information, to disable reflection rendering, the second information may indicate to disable reflection rendering. For example, the second information includes 1 bit, and a value of the 1 bit is "0", indicating to disable reflection rendering. Alternatively, if the computing node determines the bit rate based on the first information, the second information may indicate the determined bit rate. Alternatively, if the computing node determines the data rate based on the first information, the second information indicates the determined data rate. Alternatively, if the computing node determines the frame rate based on the first information, the second information indicates the determined frame rate. Alternatively, if the computing node determines the resolution based on the first information, the second information indicates the determined resolution.

Optionally, for the downlink service, the RAN node may alternatively send the first information to the terminal. After receiving the first information, the terminal indicates the target QoS profile to the computing node. For descriptions of this process, refer to the foregoing corresponding descriptions in the case in which for the uplink service, the RAN node sends the first information to the terminal, and the terminal indicates the target QoS profile to the computing node after receiving the first information. Details are not described herein again.

The actions of the terminal, the first network element, the RAN node, the UPF network element, or the computing node in S401 to S405 may be performed by the processor 301 in the communication apparatus 30 shown in FIG. 3 by invoking the application program code stored in the memory 303. This is not limited in this application.

Based on the method shown in FIG. 4, the RAN node may actively modify a QoS profile to obtain the target QoS profile, and indicate the target QoS profile to the terminal and/or the computing node. Because the RAN node has a capability of actively modifying a QoS profile, the RAN node may determine an appropriate QoS profile for more communication scenarios based on a requirement. For example, the RAN node may determine the target QoS profile based on the current network status and the terminal load corresponding to one or more of the plurality of candidate QoS profiles. In this way, in a process of determining the target QoS profile, the RAN node not only considers the current network status, but also considers the terminal load, to avoid running hot of the terminal or impact on standby time of the terminal due to an excessively high load of the terminal, thereby improving user experience. Because the RAN node considers the load of the terminal when determining the target QoS profile, the method shown in FIG. 4 may be applicable to a communication scenario in which there is a requirement on a load of a terminal. In addition, because load statuses of chips of different terminal types and terminal vendors are different, and a current terminal load is further related to many factors such as an environment and an external temperature, it is difficult to accurately obtain and standardize the current terminal load. In the method shown in FIG. 4, the current terminal load does not need to be obtained, but a candidate QoS profile is associated with a terminal load, and the terminal load is controlled by modifying the QoS profile, thereby avoiding an excessively high load of the terminal. For example, when a terminal load corresponding to a QoS profile is high, a quantity of times/frequency of selecting the QoS profile may be controlled, and/or a use duration of the QoS profile may be controlled, thereby controlling the terminal load. Therefore, in the method shown in FIG. 4, the load of the terminal can be easily controlled.

It may be understood that, in the method shown in FIG. 4, the RAN node actively modifies a QoS profile to obtain an appropriate QoS profile. In specific application, in addition to the method shown in FIG. 4, a manner of including new information in a candidate QoS profile may be used. The RAN node determines an appropriate QoS profile based on the new information. For example, the appropriate QoS profile may be determined by using a method shown in FIG. 5.

FIG. 5 shows a communication method according to this application. The method may include the following steps.

S501: A terminal sends information about a first session to a first network element. Correspondingly, the first network element receives the information about the first session from the terminal.

It may be understood that a specific process of S501 is similar to that of S401. Therefore, refer to corresponding descriptions in S401. Details are not described again.

S502: The first network element obtains a plurality of candidate QoS profiles based on the information about the first session.

In a possible design, any one of the plurality of candidate QoS profiles includes at least one of the following: condition information for restricting selection of the candidate QoS profile, computation load information of the terminal (or load information of the terminal), a total uplink and downlink PDB, an uplink PDB, or a downlink PDB.

In this application, the computation load information of the terminal may indicate a computation load consumed when the terminal processes data based on a first parameter corresponding to the candidate QoS profile. There is a correspondence between the first parameter and one or more pieces of information included in the candidate QoS profile. For other descriptions of the first parameter, refer to the descriptions in the method shown in FIG. 4.

In this application, the condition information for restricting selection of the candidate QoS profile includes at least one of the following: a maximum selected percentage in a first time period, a maximum selected time in the first time period, a maximum selected number in the first time period, a maximum selected duration in the first time period, or a minimum selected interval in the first time period. The following uses an example in which the candidate QoS profile is a candidate QoS profile 1 to describe information included in the foregoing condition information. The maximum selected percentage in the first time period is a ratio of a maximum quantity of times that the candidate QoS profile 1 can be selected in the first time period to a total quantity of times that a RAN node selects a target QoS profile from the plurality of candidate QoS profiles in the first time period. The maximum selected time in the first time period is a maximum duration in which the candidate QoS profile 1 is used in the first time period. The maximum selected number in the first time period is a maximum quantity of times that the candidate QoS profile 1 can be selected in the first time period. The maximum selected duration in the first time period is a maximum duration in which the candidate QoS profile 1 is continuously used in the first time period. The minimum selected interval in the first time period is a minimum interval between two consecutive times of selecting the candidate QoS profile 1 by the RAN node in the first time period.

Optionally, the maximum selected duration in the first time period or the minimum selected interval in the first time period is information related to a quantity of slots (slot) or frames (frame). For example, the maximum selected duration in the first time period includes four slots or one frame. The minimum selected interval in the first time period includes two slots or one frame.

It may be understood that, if the candidate QoS profile includes the condition information for restricting selection of the candidate QoS profile, when determining the target QoS profile in the plurality of candidate QoS profiles, the RAN node may consider the condition information, to avoid an excessively high load of the terminal or a decrease in a quantity of terminals accessed by the RAN node due to excessive selection of the candidate QoS profile. Alternatively, if the candidate QoS profile includes the computation load information of the terminal, when determining the target QoS profile in the plurality of candidate QoS profiles, the RAN node may consider the terminal computation load, to avoid running hot of the terminal or impact on standby time of the terminal due to an excessively high terminal computation load, thereby improving user experience. Alternatively, if the candidate QoS profile includes the total uplink and downlink PDB, when determining the target QoS profile in the plurality of candidate QoS profiles, the RAN node may consider the total uplink and downlink PDB, to ensure uplink and downlink transmission delays of data. Alternatively, if the candidate QoS profile includes the uplink PDB, when determining the target QoS profile in the plurality of candidate QoS profiles, the RAN node may consider the uplink PDB, to ensure an uplink transmission delay of data. Alternatively, if the candidate QoS profile includes the downlink PDB, when determining the target QoS profile in the plurality of candidate QoS profiles, the RAN node may consider the downlink PDB, to ensure a downlink transmission delay of data.

Optionally, the candidate QoS profile further includes at least one of the following: an identifier of the candidate QoS profile, a GFBR, a PER, a GBR, a PELR, an MDBV, or priority information. It may be understood that the foregoing is merely an example of information or parameters included in the candidate QoS profile. During specific application, the candidate QoS profile may include more or less information or parameters than those described above. This is not limited.

It may be understood that, if the candidate QoS profile includes the identifier of the candidate QoS profile, different candidate QoS profiles may be distinguished by using identifiers. If the candidate QoS profile includes the GFBR, when subsequently determining a target QoS profile in the plurality of candidate QoS profiles, the RAN node may determine, based on the GFBR, whether the candidate QoS profile matches a current network status, for example, may determine the target QoS profile in a candidate QoS profile that can meet a GFBR of the current network. If the candidate QoS profile includes the PER, when subsequently determining a target QoS profile in the plurality of candidate QoS profiles, the RAN node may determine, based on the PER, whether the candidate QoS profile matches a current network status, for example, may determine the target QoS profile in a candidate QoS profile that can meet a PER of the current network. If the candidate QoS profile includes the PELR, when subsequently determining a target QoS profile in the plurality of candidate QoS profiles, the RAN node may determine, based on the PELR, whether the candidate QoS profile matches a current network status, for example, may determine the target QoS profile in a candidate QoS profile that can meet a PELR of the current network. If the candidate QoS profile includes the GBR, when subsequently determining a target QoS profile in the plurality of candidate QoS profiles, the RAN node may determine, based on the GBR, whether the candidate QoS profile matches a current network status, for example, may determine the target QoS profile in a candidate QoS profile that can meet a GBR of the current network. If the candidate QoS profile includes the MDBV, when subsequently determining a target QoS profile in the plurality of candidate QoS profiles, the RAN node may determine, based on the MDBV, whether the candidate QoS profile matches a current network status, for example, may determine the target QoS profile in a candidate QoS profile that can meet an MDBV of the current network. If the candidate QoS profile includes the priority information, when subsequently determining the target QoS profile in the plurality of candidate QoS profiles, the RAN node may consider a priority indicated by the priority information.

For example, a candidate QoS profile may be described in a manner shown in Table 4. In Table 4, a value range of a quantity of candidate QoS profiles is 1 to a maximum value (maxnoofQoSparaSets) of the quantity of candidate QoS profiles. The candidate QoS profile includes: an identifier (for example, Alternative QoS Parameters Set Index) of the candidate QoS profile, a downlink GFBR, an uplink GFBR, a PELR, a PER, a GBR, an MDBV, a maximum selected percentage (Maximum Selected Percentage) in the first time period, a maximum selected time (Maximum Selected Time) in the first time period, a maximum selected number (Maximum Selected Number) in the first time period, a maximum selected duration (Maximum Selected Duration) in the first time period, and a minimum selected interval (Minimum Selected Interval) in the first time period, computation load information (Computation load in UE) of the terminal, the first time period (QoS Selection Period), a total uplink and downlink PDB (Total PDB), an uplink PDB, or a downlink PDB. A value of the maximum selected percentage ranges from 0 to 100. A value of the maximum selected time ranges from 1 ms to a maximum value (maxSelectedTime) of the maximum selected time. A value of the maximum selected number ranges from 1 to a maximum value (maxSelectedNumber) of the maximum selected number. A value of the maximum selected duration ranges from 5 ms to a maximum value (maxSelectedDuration) of the maximum selected duration. A value of the minimum selected interval ranges from 1 ms to a maximum value (minSelectedInterval) of the minimum selected interval. A value of the computation load in UE is low (low), medium (medium), and high (high). A value of the QoS selection period ranges from 1 second to a maximum value (maxSelectedPeriod) of the QoS selection period.

**Table 4**

| IE/Group name | Value range (range) | Semantics description (Semantics description) |
|---|---|---|
| Item of the candidate QoS profile set | 1 to <maxnoofQoSparaSets> | |
| Alternative QoS parameters set index | | |
| Downlink GFBR | | |
| Uplink GFBR | | |
| PELR | | |
| PER | | |
| GBR | | |
| MDBV | | |
| Maximum selected percentage | 0 to 100 | Percentage of the candidate QoS profile that can be selected in the first time period |
| Maximum selected time | 1 to <maxSelectedTime> | Accumulated time (unit: ms) in which the candidate QoS profile can be selected in the first time period |
| Maximum selected number | 1 to <maxSelectedNumber> | Quantity of times that the candidate QoS profile can be selected in the first time period |
| Maximum selected duration | 5 to <maxSelectedDuration> | Duration (unit: ms) in which the candidate QoS profile can be selected in the first time period |
| Minimum selected interval | 1 to <minSelectedInterval> | Minimum interval (unit: ms) for selecting the candidate QoS profile in the first time period |
| Computation load in UE | Low, medium, high | Computation load consumed when a terminal processes data based on a first parameter corresponding to the candidate QoS profile |
| QoS selection period | 1 to <maxSelectedPeriod> | Time period (unit: second) for selecting the target QoS profile |
| Total PDB | | |
| Uplink PDB | | |
| Downlink PDB | | |

It may be understood that Table 4 is merely an example of the information included in the candidate QoS profile. In specific application, the candidate QoS profile may include more or fewer columns than those in Table 4, or include more or fewer rows than those in Table 4. This is not limited.

In a possible implementation, the first network element obtains the plurality of candidate QoS profiles locally or from a network element in a core network other than the first network element.

For example, the first network element is an SMF network element. If the plurality of candidate QoS profiles are stored on the SMF network element, the SMF network element locally obtains the plurality of candidate QoS profiles. If the plurality of candidate QoS profiles are not stored on the SMF network element, the SMF network element sends, to a PCF network element or an AF network element, request information for requesting a candidate QoS profile. After receiving the request information, the PCF network element or the AF network element sends the plurality of candidate QoS profiles to the SMF network element.

S503: The first network element sends the plurality of candidate QoS profiles to the RAN node. Correspondingly, the RAN node obtains the plurality of candidate QoS profiles.

In this application, that the first network element sends the plurality of candidate QoS profiles to the RAN node may be described as that the first network element sends the plurality of candidate QoS profiles to a module in the RAN node. For example, the first network element sends the plurality of candidate QoS profiles to a CU or an RIC in the RAN node.

In this application, that the RAN node obtains the plurality of candidate QoS profiles may be understood as that the RAN node receives the plurality of candidate QoS profiles from another apparatus. For example, the RAN node receives the plurality of candidate QoS profiles from the first network element. Alternatively, that the RAN node obtains the plurality of candidate QoS profiles may be understood as that one module in the RAN node obtains the plurality of candidate QoS profiles from another module in the RAN node. For example, a DU of the RAN node obtains the plurality of candidate QoS profiles from a CU of the RAN node, or the CU or the DU of the RAN node obtains the plurality of candidate QoS profiles from an RIC of the RAN node.

It may be understood that, if the first session includes a plurality of QoS flows that support a plurality of candidate QoS profiles, the first network element sends, to the RAN node, the plurality of candidate QoS profiles supported by the plurality of QoS flows.

It may be understood that the first network element may directly send the plurality of candidate QoS profiles to the RAN node, or send the plurality of candidate QoS profiles to the RAN node via at least one intermediate network element.

For example, the first network element is an SMF network element, and the SMF network element may send the plurality of candidate QoS profiles to the RAN node via an AMF network element.

Optionally, the plurality of candidate QoS profiles are carried in a session resource setup request message or a session resource setup modification message.

In a possible implementation, after receiving the plurality of candidate QoS profiles, the RAN node performs mapping from a QoS flow to a DRB. For example, the RAN node performs mapping from a QoS flow to a DRB based on one of the plurality of candidate QoS profiles. The RAN node may further exchange air interface signaling related to a DRB configuration with the terminal.

Optionally, after completing the mapping, the RAN node sends, to the first network element, indication information indicating a resource setup result. It may be understood that, if the plurality of candidate QoS profiles are carried in the session resource setup request message, the indication information indicating the resource setup result may be carried in a session resource setup response message.

It may be understood that the RAN node may directly send, to the first network element, the indication information indicating the resource setup result; or send, to the first network element via at least one intermediate network element, the indication information indicating the resource setup result. For example, if the first network element is an SMF network element, the RAN node sends, to the SMF network element via an AMF network element, the indication information indicating the resource setup result.

S504: The RAN node determines the target QoS profile in the plurality of candidate QoS profiles based on a current network status and the information included in the candidate QoS profile.

In this application, the current network status may include at least one of the following: a GFBR of a current network, an uplink PDB of the current network, a downlink PDB of the current network, a total uplink and downlink PDB of the current network, a PER of the current network, a PELR of the current network, a GBR of the current network, an MDBV of the current network, channel state information (channel state information, CSI) of the current network, buffer status report information of the current network, or congestion status information of the current network.

It may be understood that, when the candidate QoS profile includes the condition information, the current network status meets a QoS requirement of the target QoS profile, and the target QoS profile meets condition information included in the target QoS profile. In this way, when determining the target QoS profile in the plurality of candidate QoS profiles, the RAN node may consider the condition information, to avoid an excessively high load of the terminal or a decrease in a quantity of terminals accessed by the RAN node due to excessive selection of the candidate QoS profile. It may be understood that if a candidate QoS profile causes a high load of the terminal, it indicates that a processing task of the terminal is heavy. Therefore, after completing task processing, the terminal may need to transmit a small amount of data. Therefore, a QoS requirement corresponding to the QoS profile is low. The RAN node determines that the candidate QoS profile is the target QoS profile, so that a quantity of accessed terminals can be increased. If a candidate QoS profile causes a low load of the terminal, it indicates that a processing task of the terminal is light. Therefore, after completing task processing, the terminal may need to transmit a large amount of data. Therefore, a QoS requirement corresponding to the QoS profile is high. The RAN node determines that the candidate QoS profile is the target QoS profile, so that a quantity of accessed terminals can be decreased.

For example, the current network status includes the GFBR of the current network, and the candidate QoS profile includes the GFBR and the condition information. If the condition information includes a maximum selected number N in the first time period, the GFBR of the current network is greater than or equal to a GFBR included in the target QoS profile, and a quantity of times of selecting the target QoS profile in the first time period is less than or equal to N. If the condition information includes a maximum selected percentage B in the first time period, the GFBR of the current network is greater than or equal to a GFBR included in the target QoS profile, and a ratio of a quantity of times of selecting the target QoS profile in the first time period to a total quantity of times of selecting the target QoS profile from the plurality of candidate QoS profiles in the first time period is less than or equal to B. If the condition information includes a maximum selected time T1 in the first time period, the GFBR of the current network is greater than or equal to a GFBR included in the target QoS profile, and an accumulated duration in which the target candidate QoS profile is used in the first time period is less than or equal to T1. If the condition information includes a maximum selected duration T2 in the first time period, the GFBR of the current network is greater than or equal to a GFBR included in the target QoS profile, and a duration in which the target candidate QoS profile is continuously used in the first time period is less than or equal to T2. If the condition information includes a minimum selected interval T3 in the first time period, the GFBR of the current network is greater than or equal to a GFBR included in the target QoS profile, and an interval between a current moment and a moment at which the target QoS profile is selected last time is greater than or equal to T3. The current moment and the moment at which the target QoS profile is selected last time are included in the first time period.

It may be understood that when the candidate QoS profile includes the computation load information of the terminal, the current network status meets a QoS requirement of the target QoS profile, and computation load information of the terminal included in the target QoS profile meets a current computation load requirement of the terminal. Alternatively, when the candidate QoS profile includes the computation load information of the terminal, a network status in the first time period meets a QoS requirement of each target QoS profile selected in the first time period, and an associated value such as an average value, an accumulated value, or a weighted average value of computation loads of the terminal included in all target QoS profiles selected in the first time period is less than or equal to a first threshold. The first threshold is a computation load threshold that causes the terminal to become hot or overheat. In this way, when determining the target QoS profile in the plurality of candidate QoS profiles, the RAN node may consider the terminal computation load, to avoid running hot of the terminal or impact on standby time of the terminal due to an excessively high terminal computation load, thereby improving user experience.

For example, if the current network status includes the PER of the current network, and any candidate QoS profile includes the PER and the computation load information of the terminal, the PER of the current network is less than or equal to a PER included in the target QoS profile, and a terminal computation load included in the target QoS profile is less than or equal to a current terminal computation load.

For example, an example in which the RAN node determines a target QoS profile 1, a target QoS profile 2, and a target QoS profile 3 respectively at a moment 1, a moment 2, and a moment 3 in the first time period is used for description. If the current network status includes the PER of the current network, and any candidate QoS profile includes the PER and the computation load information of the terminal, a PER of the network at the moment 1 is less than or equal to the PER included in the target QoS profile 1, a PER of the network at the moment 2 is less than or equal to the PER included in the target QoS profile 2, and a PER of the network at the moment 3 is less than or equal to the PER included in the target QoS profile 3. In addition, an average value of a terminal computation load included in the target QoS profile 1, a terminal computation load included in the target QoS profile 2, and a computation load included in the target QoS profile 3 is less than or equal to the first threshold. In this way, when the terminal processes data by using a first parameter corresponding to the target QoS profile 1, a first parameter corresponding to the target QoS profile 2, and a first parameter corresponding to the target QoS profile 3, the terminal is not running hot or overheating.

It may be understood that, when the candidate QoS profile includes the total uplink and downlink PDB, the current network status meets a QoS requirement of the target QoS profile, and a total uplink and downlink PDB provided by the current network status is less than or equal to a total uplink and downlink PDB included in the target QoS profile. In this way, when determining the target QoS profile in the plurality of candidate QoS profiles, the RAN node may consider the total uplink and downlink PDB, to ensure uplink and downlink transmission delays of data.

For example, if the current network status includes the total uplink and downlink PDB of the current network, and any candidate QoS profile includes a total uplink and downlink PDB, the total uplink and downlink PDB of the current network (namely, the total uplink and downlink PDB provided by the current network status) is less than or equal to a total uplink and downlink PDB included in the target QoS profile.

It may be understood that when the candidate QoS profile includes the uplink PDB, the current network status meets a QoS requirement of the target QoS profile, and the uplink PDB provided by the current network status is less than or equal to an uplink PDB included in the target QoS profile. In this way, when determining the target QoS profile in the plurality of candidate QoS profiles, the RAN node may consider the uplink PDB, to ensure an uplink transmission delay of data.

For example, if the current network status includes the uplink PDB of the current network, and any candidate QoS profile includes the uplink PDB, the uplink PDB of the current network (namely, the uplink PDB provided by the current network status) is less than or equal to an uplink PDB included in the target QoS profile.

It may be understood that when the candidate QoS profile includes the downlink PDB, the current network status meets a QoS requirement of the target QoS profile, and the downlink PDB provided by the current network status is less than or equal to a downlink PDB included in the target QoS profile. In this way, when determining the target QoS profile in the plurality of candidate QoS profiles, the RAN node may consider the downlink PDB, to ensure a downlink transmission delay of data.

For example, if the current network status includes the downlink PDB of the current network, and any candidate QoS profile includes the downlink PDB, the downlink PDB of the current network (namely, the downlink PDB provided by the current network status) is less than or equal to a downlink PDB included in the target QoS profile.

It may be understood that, if the target QoS profile is different from the candidate QoS profile for mapping the QoS flow to the DRB in S503, the RAN node may update, based on the target QoS profile, an air interface transmission parameter or a scheduling parameter, such as a resource configuration, a scheduling priority, a preemption capability, or a preemption vulnerability, that is between the terminal and the RAN node and that is associated with the DRB.

It may be understood that, after determining the target QoS profile, the RAN node may transmit data based on the target QoS profile.

It may be understood that, if the first session includes a plurality of QoS flows that support a plurality of candidate QoS profiles, the RAN node determines, based on the current network status, a target QoS profile of each QoS flow in a plurality of candidate QoS profiles supported by the QoS flow. Target QoS profiles of different QoS flows may be the same or different.

S505: The RAN node sends first information to the terminal and/or a computing node. Correspondingly, the terminal and/or the computing node receive/receives the first information from the RAN node.

In this application, the computing node may be the computing node 203 in the communication system 20 shown in FIG. 2.

In this application, the first information indicates the target QoS profile. In this way, after receiving the first information, the RAN node may determine the target QoS profile based on the first information. Optionally, the first information is further for determining a first parameter. For example, there is a correspondence between the first parameter and the target QoS profile, and the terminal and/or the computing node may determine the first parameter based on the first information and the correspondence. In this way, after receiving the first information, the RAN node may determine the first parameter based on the first information, to provide a better service for users. The foregoing correspondence may be stored in the terminal and/or the computing node, or the terminal and/or the computing node obtain/obtains the correspondence from another device. For example, the AF network element may determine the correspondence, and the terminal and/or the computing node obtain/obtains the correspondence from the AF network element.

Optionally, there is a correspondence between the first parameter and one or more pieces of information included in the target QoS profile. For example, there is a correspondence between the first parameter and an identifier of the target QoS profile, there is a correspondence between the first parameter and the GFBR included in the target QoS profile, there is a correspondence between the first parameter and the PELR included in the target QoS profile, there is a correspondence between the first parameter and the PER included in the target QoS profile, there is a correspondence between the first parameter and the GBR included in the target QoS profile, there is a correspondence between the first parameter and the MDBV included in the target QoS profile, there is a correspondence between the first parameter and the condition information that is included in the target QoS profile and that is for restricting selection of the candidate QoS profile, there is a correspondence between the first parameter and the computation load information of the terminal included in the target QoS profile, there is a correspondence between the first parameter and the total uplink and downlink PDB included in the target QoS profile, there is a correspondence between the first parameter and the uplink included in the target QoS profile, and/or there is a correspondence between the first parameter and the downlink PDB included in the target QoS profile.

In this application, the first information may include a parameter related to the target QoS profile. For example, in S505, the first information may include at least one of the following: the identifier of the target QoS profile, the GFBR included in the target QoS profile, the PELR included in the target QoS profile, the PER included in the target QoS profile, the GBR included in the target QoS profile, the MDBV included in the target QoS profile, the priority information included in the target QoS profile, the condition information included in the target QoS profile, the computation load information of the terminal included in the target QoS profile, the total uplink and downlink PDB included in the target QoS profile, the uplink PDB included in the target QoS profile, or the downlink PDB included in the target QoS profile.

In this application, the first parameter includes at least one of the following: a task split point, a task amount for task processing, a bit rate, a data rate (or a source coding bit rate), a frame rate, or resolution.

It may be understood that, if the network can provide a high delay guarantee, for example, a total provided uplink and downlink packet delay budget PDB is less than or equal to 100 ms (that is, indicating that an RTT delay guarantee is less than or equal to 100 ms), the task amount for task processing is enabling reflection rendering/DDGI rendering, to improve visual quality for users without compromising fluency. If the network can provide a low delay guarantee, for example, a total provided uplink and downlink delay budget PDB is greater than 100 ms (that is, indicating that an RTT delay guarantee is greater than 100 ms), the task amount for task processing is disabling reflection rendering/DDGI rendering, to avoid visual jitter and delay problems. It may be understood that the total uplink and downlink delay budget PDB may also be described as or combined with one or more QoS indicators such as an uplink PDB, a downlink PDB, a PER, a GFBR, a PELR, an MDBV, or a priority.

Optionally, the first parameter is related to first difference information. The first difference information indicates a difference between the target QoS profile and a historical QoS profile determined before the target QoS profile. For example, the historical QoS profile is a QoS profile that is last determined before the target QoS profile.

It may be understood that after obtaining the first information, the terminal and/or the computing node may determine the target QoS profile based on the first information, determine the first difference information based on the target QoS profile and the historical QoS profile, and determine the first parameter based on the first difference information.

In a possible design, the first difference information indicates whether the target QoS profile is the same as the historical QoS profile.

In another possible design, the first difference information indicates a difference between the target QoS profile and the historical QoS profile.

It may be understood that a specific process of S505 is similar to that of S405. Therefore, for other descriptions of S505, refer to corresponding descriptions in S405. Details are not described again.

The actions of the terminal, the first network element, the RAN node, the UPF network element, or the computing node in S501 to S505 may be performed by the processor 301 in the communication apparatus 30 shown in FIG. 3 by invoking the application program code stored in the memory 303. This is not limited in this application.

Based on the method shown in FIG. 5, the RAN node may determine the target QoS profile in the plurality of candidate QoS profiles based on the current network status and at least one of the condition information for restricting selection of the candidate QoS profile, the computation load information of the terminal, the total uplink and downlink PDB, the uplink PDB, or the downlink PDB, and indicate the target QoS profile to the terminal and/or the computing node. It may be understood that, when the candidate QoS profile includes the condition information, the current network status meets the QoS requirement of the target QoS profile, and the target QoS profile meets the condition information included in the target QoS profile, to control a quantity of times of selecting the target QoS profile. When the candidate QoS profile includes computation load information of the terminal, a current network status meets a QoS requirement of the target QoS profile, and the computation load information of the terminal included in the target QoS profile meets a current computation load requirement of the terminal, to control the terminal computation load by modifying the QoS profile. When the candidate QoS profile includes the total uplink and downlink PDB, the current network status meets the QoS requirement of the target QoS profile, and the total uplink and downlink PDB provided by the current network status is less than or equal to the total uplink and downlink PDB included in the target QoS profile, to determine, in a timely manner, the target QoS profile based on a total uplink and downlink transmission delay. When the candidate QoS profile includes the uplink PDB, the current network status meets the QoS requirement of the target QoS profile, and the uplink PDB provided by the current network status is less than or equal to the uplink PDB included in the target QoS profile, to determine, in a timely manner, the target QoS profile based on an uplink transmission delay. When the candidate QoS profile includes the downlink PDB, the current network status meets the QoS requirement of the target QoS profile, and the downlink PDB provided by the current network status is less than or equal to the downlink PDB included in the target QoS profile, to determine, in a timely manner, the target QoS profile based on a downlink transmission delay. Therefore, the RAN node may determine an appropriate QoS profile for different communication scenarios.

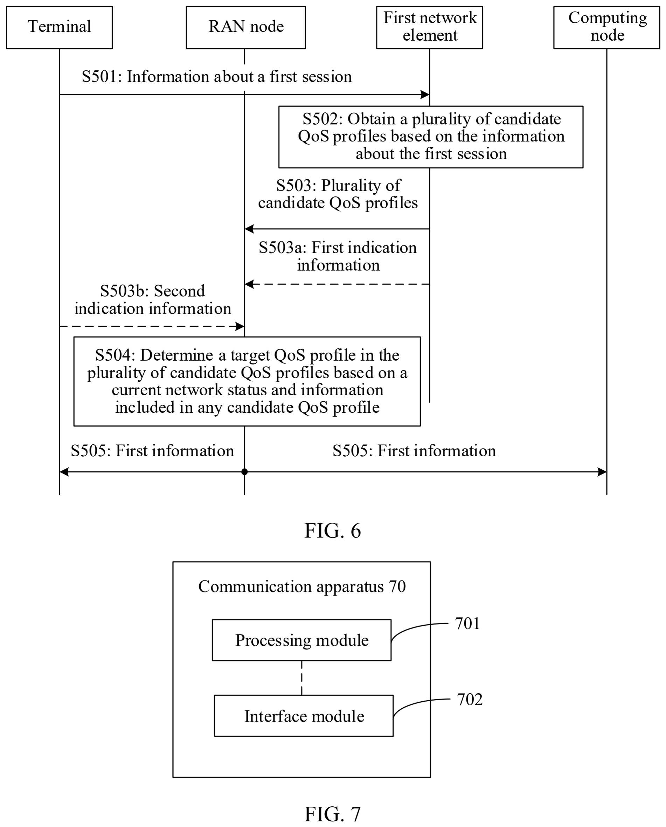

Optionally, in a possible implementation of the method shown in FIG. 5, the first network element may indicate the RAN node to actively modify a QoS profile. Specifically, as shown in FIG. 6, the method shown in FIG. 5 further includes S503a.

S503a: The first network element sends first indication information to the RAN node. Correspondingly, the RAN node receives the first indication information from the first network element.

It may be understood that for a specific process of S503a, refer to the descriptions of sending the first indication information by the first network element to the RAN node in S403. Details are not described again.

It may be understood that, after receiving the first indication information, the RAN node may actively modify a QoS profile. For a process in which the RAN node actively modifies a QoS profile, refer to the descriptions in S404. Details are not described again.

Optionally, the first network element further sends information about the first time period to the RAN node. Correspondingly, the RAN node receives the information about the first time period from the first network element. For this specific process, refer to the corresponding descriptions in S404. Details are not described again.

Optionally, in a possible implementation of the method shown in FIG. 5, the terminal may indicate, to the RAN node, that the terminal is overheating, so that the RAN node actively modifies a QoS profile based on an indication of the terminal. Specifically, as shown in FIG. 6, the method shown in FIG. 5 further includes S503b.

S503b: The terminal sends second indication information to the RAN node. Correspondingly, the RAN node receives the second indication information from the terminal.

It may be understood that for a specific process of S503b, refer to the descriptions of sending the second indication information by the terminal to the RAN node in S404. Details are not described again.

It may be understood that when the method shown in FIG. 6 includes both S503a and S503b, an execution sequence of S503a and S503b is not limited in this application. For example, S503a may be performed before S503b, or S503b may be performed before S503a.

It may be understood that, in the foregoing embodiments, support for a candidate QoS profile is described at a granularity of a QoS flow. During specific application, support for a candidate QoS profile may alternatively be described by using another granularity, for example, a session granularity, a slice granularity, or a task granularity. This is not limited.

The foregoing mainly describes the solutions provided in this application from a perspective of interaction between network elements. Correspondingly, this application further provides a communication apparatus. The communication apparatus may be the RAN node in the foregoing method embodiments, an apparatus including the foregoing RAN node, or a component that can be used in the RAN node. Alternatively, the communication apparatus may be the terminal in the foregoing method embodiments, an apparatus including the foregoing terminal, or a component that can be used in the terminal. Alternatively, the communication apparatus may be the first network element in the foregoing method embodiments, an apparatus including the first network element, or a component that can be used in the first network element. Alternatively, the communication apparatus may be the UPF network element in the foregoing method embodiments, an apparatus including the UPF network element, or a component that can be used in the UPF network element. Alternatively, the communication apparatus may be the computing node in the foregoing method embodiments, an apparatus including the computing node, or a component that can be used in the computing node. It may be understood that, to implement the foregoing functions, the RAN node, the terminal, the first network element, the UPF network element, the computing node, or the like includes a corresponding hardware structure and/or software module for performing the functions. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this application, the RAN node, the terminal, the first network element, the UPF network element, the computing node, or the like may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It may be understood that division into the modules in this application is an example, and is merely logical function division. During actual implementation, another division manner may be used.

For example, when the functional modules are obtained through division in an integrated manner, FIG. 7 is a diagram of a structure of a communication apparatus 70. The communication apparatus 70 includes a processing module 701 and an interface module 702. The processing module 701 may also be referred to as a processing unit, and is configured to perform an operation other than receiving and sending operations. For example, the processing module may be a processing circuit or a processor. The interface module 702 may also be referred to as an interface unit, and is configured to perform receiving and sending operations. For example, the interface module 702 may be an interface circuit, a transceiver machine, a transceiver, or a communication interface.

In some embodiments, the communication apparatus 70 may further include a storage module (not shown in FIG. 7), configured to store program instructions and data.

For example, the communication apparatus 70 is configured to implement a function of a RAN node. For example, the communication apparatus 70 is the RAN node in the embodiment shown in FIG. 4.

The processing module 701 is configured to obtain a plurality of candidate quality of service profiles. For example, the processing module 701 is configured to perform S403.

The processing module 701 is further configured to: when a function of actively modifying a quality of service profile is enabled, determine a target quality of service profile based on a current network status and a terminal load corresponding to one or more of the plurality of candidate quality of service profiles. For example, the processing module 701 is configured to perform S404.

The interface module 702 is configured to send first information. The first information indicates the target quality of service profile. For example, the interface module 702 is configured to perform S405.

In a possible implementation, the processing module 701 is specifically configured to preferentially determine that the target quality of service profile is a first candidate quality of service profile, where the first candidate quality of service profile is a candidate quality of service profile that is in a candidate quality of service profile meeting the current network status in the plurality of candidate quality of service profiles and that corresponds to a highest terminal load. Alternatively, the processing module 701 is specifically configured to determine that the target quality of service profile is a second candidate quality of service profile, where the second candidate quality of service profile is a candidate QoS profile that is in a candidate quality of service profile meeting the current network status in the plurality of candidate quality of service profiles and that does not include a candidate quality of service profile with a lowest terminal load.

In a possible implementation, the candidate quality of service profile corresponding to the lowest terminal load is a candidate quality of service profile that meets at least one of the following in the plurality of candidate quality of service profiles: a corresponding priority being the highest, a corresponding uplink guaranteed flow bit rate being the largest, a corresponding downlink guaranteed flow bit rate being the largest, a corresponding terminal computation load being the smallest, a corresponding total uplink and downlink packet delay budget being the largest, a corresponding uplink packet delay budget being the largest, or a corresponding downlink packet delay budget being the largest.

In a possible implementation, a maximum selected number of the first candidate quality of service profile in a first time period is less than or equal to a first value; a maximum selected percentage of the first candidate quality of service profile in the first time period is less than or equal to a second value; a maximum selected duration of the first candidate quality of service profile in the first time period is less than or equal to a third value; a maximum selected time of the first candidate quality of service profile in the first time period is less than or equal to a fourth value; and/or a minimum selected interval of the first candidate quality of service profile in the first time period is greater than or equal to a fifth value.

In a possible implementation, enabling the function of actively modifying a quality of service profile includes: receiving first indication information, where the first indication information indicates to actively modify a quality of service profile, and enabling the function based on the first indication information; and/or receiving second indication information, where the second indication information indicates that a terminal is overheating, and enabling the function based on the second indication information.

In a possible implementation, the first indication information is carried in a session resource setup request message or a session resource setup modification message.

In a possible implementation, if the second indication information is received, the processing module 701 is specifically configured to determine that the target quality of service profile is a third candidate quality of service profile, where a terminal load corresponding to the third candidate quality of service profile is lower than a current terminal load.

In a possible implementation, the first information is further for determining a first parameter, and the first parameter includes at least one of the following: a task split point, a task amount for task processing, a bit rate, a data rate, a frame rate, or resolution.

In a possible implementation, the interface module 702 is specifically configured to send the first information to the terminal, where the first information is carried in downlink control information, a medium access control control element, or a radio resource control message; or the interface module 702 is specifically configured to send a first data packet to a user plane function network element, where a header of the first data packet includes the first information.

When the communication apparatus is configured to implement the function of the RAN node, for other functions that can be implemented by the communication apparatus 70, refer to related descriptions in the embodiment shown in FIG. 4. Details are not described again.

Alternatively, for example, the communication apparatus 70 is configured to implement a function of a first network element. For example, the communication apparatus 70 is the first network element in the embodiment shown in FIG. 4.

The interface module 702 is configured to receive information about a first session from a terminal. For example, the interface module 702 may be configured to perform S401.

The processing module 701 is configured to obtain a plurality of candidate quality of service profiles based on the information about the first session. For example, the processing module 701 may be configured to perform S402.

The interface module 702 is further configured to send the plurality of candidate quality of service profiles and first indication information to a radio access network node, where the first indication information indicates the radio access network node to actively modify a quality of service profile. For example, the interface module 702 may be configured to perform S403.

In a possible implementation, the first indication information is carried in a session resource setup request message or a session resource setup modification message.

When the communication apparatus is configured to implement the function of the first network element, for other functions that can be implemented by the communication apparatus 70, refer to related descriptions in the embodiment shown in FIG. 4. Details are not described again.

Alternatively, for example, the communication apparatus 70 is configured to implement a function of a RAN node. For example, the communication apparatus 70 is the RAN node in the embodiment shown in FIG. 5 or the embodiment shown in FIG. 6.

The processing module 701 is configured to obtain a plurality of candidate quality of service profiles. Any candidate quality of service profile in the plurality of candidate quality of service profiles includes at least one of the following: condition information for restricting selection of the candidate quality of service profile, computation load information of a terminal, a total uplink and downlink packet delay budget, an uplink packet delay budget, or a downlink packet delay budget. For example, the processing module 701 may be configured to perform S503.

The processing module 701 is further configured to determine a target quality of service profile in the plurality of candidate quality of service profiles based on a current network status and information included in the candidate quality of service profile. For example, the processing module 701 may be configured to perform S504.

The interface module 702 is configured to send first information, where the first information indicates the target quality of service profile. For example, the interface module 702 may be configured to perform S505.

In a possible implementation, the condition information includes at least one of the following: a maximum selected percentage in a first time period, a maximum selected time in the first time period, a maximum selected number in the first time period, a maximum selected duration in the first time period, or a minimum selected interval in the first time period.

In a possible implementation, the processing module 701 is specifically configured to: when the candidate quality of service profile includes the condition information, the current network status meets a quality of service requirement of the target quality of service profile, and the target quality of service profile meets condition information included in the target quality of service profile; the processing module 701 is specifically configured to: when the candidate quality of service profile includes the computation load information of the terminal, the current network status meets a quality of service requirement of the target quality of service profile, and computation load information of the terminal included in the target quality of service profile meets a current computation load requirement of the terminal; the processing module 701 is specifically configured to: when the candidate quality of service profile includes the total uplink and downlink packet delay budget, the current network status meets a quality of service requirement of the target quality of service profile, and a total uplink and downlink packet delay budget provided by the current network status is less than or equal to a total uplink and downlink packet delay budget included in the target quality of service profile; the processing module 701 is specifically configured to: when the candidate quality of service profile includes the uplink packet delay budget, the current network status meets a quality of service requirement of the target quality of service profile, and an uplink packet delay budget provided by the current network status is less than or equal to an uplink packet delay budget included in the target quality of service profile; or the processing module 701 is specifically configured to: when the candidate quality of service profile includes the downlink packet delay budget, the current network status meets a quality of service requirement of the target quality of service profile, and a downlink packet delay budget provided by the current network status is less than or equal to a downlink packet delay budget included in the target quality of service profile.

In a possible implementation, the interface module 702 is further configured to receive first indication information, where the first indication information indicates to actively modify a quality of service profile; and/or the interface module 702 is further configured to receive second indication information, where the second indication information indicates that the terminal is overheating.

In a possible implementation, the first indication information is carried in a session resource setup request message or a session resource setup modification message.

In a possible implementation, the first information includes at least one of the following: an identifier of the target quality of service profile, and the condition information for restricting selection of the target quality of service profile, the computation load information of the terminal, the total uplink and downlink packet delay budget, the uplink packet delay budget, or the downlink packet delay budget that is included in the target quality of service profile.

In a possible implementation, the first information is further for determining a first parameter, and the first parameter includes at least one of the following: a task split point, a task amount for task processing, a bit rate, a data rate, a frame rate, or resolution.

In a possible implementation, the interface module 702 is specifically configured to send the first information to the terminal, where the first information is carried in downlink control information, a medium access control control element, or a radio resource control message; or the interface module 702 is specifically configured to send a first data packet to a user plane function network element, where a header of the first data packet includes the first information.

When the communication apparatus is configured to implement the function of the RAN node, for other functions that can be implemented by the communication apparatus 70, refer to related descriptions in the embodiment shown in FIG. 5 or the embodiment shown in FIG. 6. Details are not described again.

Alternatively, for example, the communication apparatus 70 is configured to implement a function of a first network element. For example, the communication apparatus 70 is the first network element in the embodiment shown in FIG. 5 or the embodiment shown in FIG. 6.

The interface module 702 is configured to receive information about a first session from a terminal. For example, the interface module 702 may be configured to perform S501.

The processing module 701 is configured to obtain a plurality of candidate quality of service profiles based on the information about the first session, where any candidate quality of service profile in the plurality of candidate quality of service profiles includes at least one of the following: condition information for restricting selection of the candidate quality of service profile, computation load information of the terminal, a total uplink and downlink packet delay budget, an uplink packet delay budget, or a downlink packet delay budget. For example, the processing module 701 may be configured to perform S502.

The interface module 702 is further configured to send the plurality of candidate quality of service profiles to a radio access network node. For example, the interface module 702 may be configured to perform S503.

In a possible implementation, the condition information includes at least one of the following: a maximum selected percentage in a first time period, a maximum selected time in the first time period, a maximum selected number in the first time period, a maximum selected duration in the first time period, or a minimum selected interval in the first time period.

In a possible implementation, the interface module 702 is further configured to send first indication information to the radio access network node, where the first indication information indicates the radio access network node to actively modify a quality of service profile.

In a possible implementation, the first indication information is carried in a session resource setup request message or a session resource setup modification message.

When the communication apparatus is configured to implement the function of the first network element, for other functions that can be implemented by the communication apparatus 70, refer to related descriptions in the embodiment shown in FIG. 5 or the embodiment shown in FIG. 6. Details are not described again.

In a simple embodiment, a person skilled in the art may figure out that the communication apparatus 70 may be in a form shown in FIG. 3. For example, the processor 301 in FIG. 3 may invoke the computer-executable instructions stored in the memory 303, to enable the communication apparatus 70 to perform the method in the foregoing method embodiments.

For example, functions/implementation processes of the processing module 701 and the interface module 702 in FIG. 7 may be implemented by the processor 301 in FIG. 3 by invoking the computer-executable instructions stored in the memory 303. Alternatively, a function/an implementation process of the processing module 701 in FIG. 7 may be implemented by the processor 301 in FIG. 3 by invoking the computer-executable instructions stored in the memory 303, and a function/an implementation process of the interface module 702 in FIG. 7 may be implemented by using the communication interface 304 in FIG. 3.

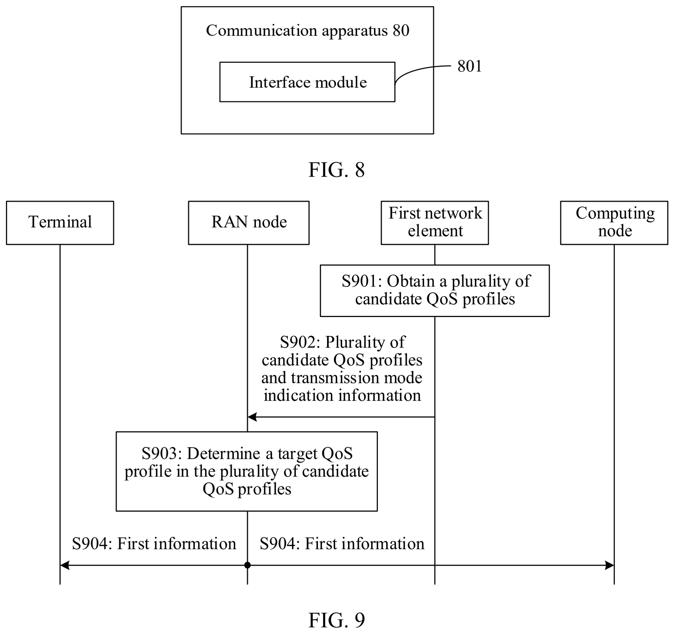

For example, when functional modules are obtained through division in an integrated manner, FIG. 8 is a diagram of a structure of a communication apparatus 80. The communication apparatus 80 includes an interface module 801. The interface module 801 may also be referred to as an interface unit, and is configured to perform receiving and sending operations. For example, the interface module may be an interface circuit, a transceiver machine, a transceiver, or a communication interface.

In some embodiments, the communication apparatus 80 may further include a storage module (not shown in FIG. 8), configured to store program instructions and data.

For example, the communication apparatus 80 is configured to implement a function of a terminal/computing node. The communication apparatus 80 is, for example, the terminal/computing node in the embodiment shown in FIG. 4, the embodiment shown in FIG. 5, or the embodiment shown in FIG. 6.

The interface module 801 is configured to receive first information from a radio access network node, where the first information indicates a target quality of service profile.

The interface module 801 is further configured to send metadata, where the metadata includes the first information.

In a possible implementation, the first information includes at least one of the following: an identifier of the target quality of service profile, and an uplink guaranteed flow bit rate, a downlink guaranteed flow bit rate, a packet error rate, condition information for restricting selection of the target quality of service profile, computation load information of a terminal, a total uplink and downlink packet delay budget, an uplink packet delay budget, or a downlink packet delay budget that is included in the target quality of service profile.

In a possible implementation, the condition information includes at least one of the following: a maximum selected percentage in a first time period, a maximum selected time in the first time period, a maximum selected number in the first time period, a maximum selected duration in the first time period, or a minimum selected interval in the first time period.

In a possible implementation, the first information is further for determining a first parameter, and the first parameter includes at least one of the following: a task split point, a task amount for task processing, a bit rate, a data rate, a frame rate, or resolution.

When the communication apparatus is configured to implement the function of the terminal/computing node, for other functions that can be implemented by the communication apparatus 80, refer to related descriptions in the embodiment shown in FIG. 4, the embodiment shown in FIG. 5, or the embodiment shown in FIG. 6. Details are not described again.

Alternatively, for example, the communication apparatus 80 is configured to implement a function of a user plane function network element. The communication apparatus 80 is, for example, the user plane function network element in the embodiment shown in FIG. 4, the embodiment shown in FIG. 5, or the embodiment shown in FIG. 6.

The interface module 801 is configured to receive a first data packet from a radio access network node, where a header of the first data packet includes first information, and the first information indicates a target quality of service profile.

The interface module 801 is configured to send a second data packet, where the second data packet includes the first information, and the second data packet is a real-time transport protocol data packet, a real-time transport control protocol data packet, or a quick user datagram protocol internet connection data packet.

In a possible implementation, the first information includes at least one of the following: an identifier of the target quality of service profile, and an uplink guaranteed flow bit rate, a downlink guaranteed flow bit rate, a packet error rate, condition information for restricting selection of the target quality of service profile, computation load information of a terminal, a total uplink and downlink packet delay budget, an uplink packet delay budget, or a downlink packet delay budget that is included in the target quality of service profile.

In a possible implementation, the condition information includes at least one of the following: a maximum selected percentage in a first time period, a maximum selected time in the first time period, a maximum selected number in the first time period, a maximum selected duration in the first time period, or a minimum selected interval in the first time period.

In a possible implementation, the first information is further for determining a first parameter, and the first parameter includes at least one of the following: a task split point, a task amount for task processing, a bit rate, a data rate, a frame rate, or resolution.

When the communication apparatus is configured to implement the function of the user plane function network element, for other functions that can be implemented by the communication apparatus 80, refer to related descriptions in the embodiment shown in FIG. 4, the embodiment shown in FIG. 5, or the embodiment shown in FIG. 6. Details are not described again.

In a simple embodiment, a person skilled in the art may figure out that the communication apparatus 80 may be in a form shown in FIG. 3. For example, the processor 301 in FIG. 3 may invoke the computer-executable instructions stored in the memory 303, to enable the communication apparatus 80 to perform the method in the foregoing method embodiment.

For example, a function/implementation process of the interface module 801 in FIG. 8 may be implemented by the processor 301 in FIG. 3 by invoking the computer-executable instructions stored in the memory 303. Alternatively, a function/implementation process of the interface module 801 in FIG. 8 may be implemented by using the communication interface 304 in FIG. 3.

It may be understood that one or more of the foregoing modules or units may be implemented by using software, hardware, or a combination thereof. When any one of the foregoing modules or units is implemented by software, the software exists in a form of a computer program instruction, and is stored in the memory. The processor may be configured to execute the program instruction and implement the foregoing method procedure. The processor may be disposed in a SoC (system-on-a-chip) or an ASIC, or may be an independent semiconductor chip. In addition to a core configured to perform an operation or processing by executing software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by using hardware, the hardware may be any one or any combination of a CPU, a microprocessor, a digital signal processing (digital signal processing, DSP) chip, a microcontroller unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

In addition to the foregoing methods, this application further provides a communication method. In the communication method, a core network may indicate, to a RAN node, a manner of transmitting first information, for example, transmitting the first information to a terminal by using air interface signaling, so that the RAN node quickly sends the first information to the terminal based on an indication of the core network, and/or transmits the first information to a UPF network element in a user plane manner, so that the RAN node quickly sends the first information to the UPF network element based on an indication of the core network. In this way, the UPF network element can send the first information to a computing node. The following describes the method in detail. It should be understood that descriptions of same steps or features in the method shown in FIG. 4, the method shown in FIG. 5, the method shown in FIG. 6, and the method shown in FIG. 9 may be mutually referenced.

FIG. 9 shows another communication method according to this application. The method may include the following steps.

S901: A first network element obtains a plurality of candidate QoS profiles.

In this application, the first network element may be any network element in the core network 202 shown in FIG. 2, or the first network element may be a new core network element.

In a possible design, any one of the plurality of candidate QoS profiles includes at least one of the following: an index (for example, alternative QoS parameter set index) of the candidate QoS profile, related information (for example, alternative QoS reference) of the candidate QoS profile, a GFBR, an uplink GFBR, a downlink GFBR, a PDB, an uplink PDB, a downlink PDB, a total uplink and downlink PDB, a terminal computation load, a PER, a GBR, a PELR, an MDBV, priority information, condition information for restricting selection of the candidate QoS profile, or computation load information of the terminal (or load information of the terminal).

In this application, the index of the candidate QoS profile may be for identifying the candidate QoS profile, to distinguish between different candidate QoS profiles. The related information of the candidate QoS profile is associated with the candidate QoS profile, and is QoS reference information associated with the candidate QoS profile; or the related information of the candidate QoS profile matches the candidate QoS profile, and is QoS reference information matching the candidate QoS profile. For example, the related information of the candidate QoS profile is for identifying the candidate QoS profile between the core network and an AF network element. For specific descriptions of the GFBR, the uplink GFBR, the downlink GFBR, the PDB, the uplink PDB, the downlink PDB, the total uplink and downlink PDB, the terminal computation load, the PER, the GBR, the PELR, the MDBV, the priority information, the condition information for restricting selection of the candidate QoS profile, the computation load information of the terminal, and the load information of the terminal, refer to corresponding descriptions in the methods shown in FIG. 4 to FIG. 6. Details are not described again.

In a possible design, the plurality of candidate QoS profiles correspond to a first session. For details, refer to corresponding descriptions in the methods shown in FIG. 4 to FIG. 6.

In a possible implementation, the first network element obtains the plurality of candidate QoS profiles locally or from a network element in a core network other than the first network element.

In a possible implementation, the terminal triggers the first network element to obtain the plurality of candidate QoS profiles. The terminal may be any terminal in the RAN 201 shown in FIG. 2, for example, the terminal 2012 or the terminal 2013. For example, the terminal sends information about the first session to the first network element. After receiving the information about the first session, the first network element obtains the plurality of candidate QoS profiles based on the information about the first session. For details, refer to corresponding descriptions in S401, S402, S501, and S502.

S902: The first network element sends the plurality of candidate QoS profiles and transmission mode indication information to the RAN node. Correspondingly, the RAN node obtains the plurality of candidate QoS profiles and the transmission mode indication information.

In this application, the RAN node may be the RAN node 2011 in the RAN 201 shown in FIG. 2. The transmission mode indication information indicates to transmit first information to a terminal by using air interface signaling, and/or transmit the first information to a user plane function network element in a user plane manner. Optionally, the transmission mode indication information belongs to notification control (Notification Control) indication information.

In a possible design, the first information indicates a target QoS profile in the plurality of candidate QoS profiles. For example, the first information includes at least one of the following: an index of the target QoS profile, related information of the target QoS profile, and a GFBR, an uplink GFBR, a downlink GFBR, an uplink PDB, a downlink PDB, a total uplink and downlink PDB, a terminal computation load, a PER, a GBR, a PELR, an MDBV, priority information, condition information for restricting selection of the candidate QoS profile, or computation load information of the terminal (or load information of the terminal) included in the target QoS profile.

In this application, the air interface signaling includes an RRC message, a PDCP control PDU message, a MAC CE, or DCI. Transmitting the first information to a UPF network element in a user plane manner includes transmitting the first information to the UPF network element by using a data packet (for example, the following first data packet) corresponding to the first session. The data packet corresponding to the first session may be understood as that the data packet may be transmitted by using the first session. Alternatively, transmitting the first information to a UPF network element in a user plane manner includes transmitting the first information to the UPF network element by using a data packet (for example, the following first data packet) corresponding to a first QoS flow. The first QoS flow is a QoS flow corresponding to the plurality of candidate QoS profiles, or the first QoS flow supports the plurality of candidate QoS profiles.

In this application, that the first network element sends the plurality of candidate QoS profiles and the transmission mode indication information to the RAN node may be described as that the first network element sends the plurality of candidate QoS profiles and the transmission mode indication information to a module in the RAN node. For example, the first network element sends the plurality of candidate QoS profiles and the transmission mode indication information to a CU or an RIC in the RAN node.

In this application, that the RAN node obtains the plurality of candidate QoS profiles and the transmission mode indication information may be understood as that the RAN node receives the plurality of candidate QoS profiles and the transmission mode indication information from another apparatus. For example, the RAN node receives the plurality of candidate QoS profiles and the transmission mode indication information from the first network element. Alternatively, that the RAN node obtains the plurality of candidate QoS profiles and the transmission mode indication information may be understood as that one module in the RAN node obtains the plurality of candidate QoS profiles and the transmission mode indication information from another module in the RAN node. For example, a DU of the RAN node obtains the plurality of candidate QoS profiles and the transmission mode indication information from a CU of the RAN node, or the CU or the DU of the RAN node obtains plurality of candidate QoS profiles and the transmission mode indication information from an RIC of the RAN node.

It may be understood that, if the first session includes a plurality of QoS flows that support a plurality of candidate QoS profiles, the first network element sends, to the RAN node, the plurality of candidate QoS profiles supported by the plurality of QoS flows.

It may be understood that the first network element may directly send the plurality of candidate QoS profiles and the transmission mode indication information to the RAN node, or send the plurality of candidate QoS profiles and the transmission mode indication information to the RAN node via at least one intermediate network element.

For example, the first network element is an SMF network element, and the SMF network element may send the plurality of candidate QoS profiles and the transmission mode indication information to the RAN node via an AMF network element.

It may be understood that the plurality of candidate QoS profiles and the transmission mode indication information may be included in one message, or may be included in different messages. This is not limited. For example, both the plurality of candidate QoS profiles and the transmission mode indication information are carried in a session resource setup request message (for example, a PDU session resource setup request message) or a session resource setup modification message (for example, a PDU session resource setup modification message). For another example, the plurality of candidate QoS profiles are carried in the session resource setup request message, and the transmission mode indication information is carried in the session resource setup modification message; or the transmission mode indication information is carried in the session resource setup request message, and the plurality of candidate QoS profiles are carried in the session resource setup modification message.

Optionally, the first network element sends first indication information to the RAN node. Correspondingly, the RAN node receives the first indication information from the first network element. For details, refer to corresponding descriptions in the method shown in FIG. 4.

In a possible implementation, after receiving the plurality of candidate QoS profiles, the RAN node performs mapping from a QoS flow to a DRB. For example, the RAN node performs mapping from a QoS flow to a DRB based on one of the plurality of candidate QoS profiles. The RAN node may further exchange air interface signaling related to a DRB configuration with the terminal.

Optionally, after completing the mapping, the RAN node sends, to the first network element, indication information indicating a resource setup result. It may be understood that, if the plurality of candidate QoS profiles are carried in the session resource setup request message, the indication information indicating the resource setup result may be carried in a session resource setup response message.

It may be understood that the RAN node may directly send, to the first network element, the indication information indicating the resource setup result; or send, to the first network element via at least one intermediate network element, the indication information indicating the resource setup result. For example, if the first network element is an SMF network element, the RAN node sends, to the SMF network element via an AMF network element, the indication information indicating the resource setup result.

S903: The RAN node determines the target QoS profile in the plurality of candidate QoS profiles.

In a possible implementation, the RAN node determines the target QoS profile in the plurality of candidate QoS profiles based on a current network status.

For example, when the current network status of the RAN node cannot satisfy quality of service required by a current QoS profile, for example, cannot meet one or more indicators of a GFBR, a PDB, a PER, a GBR, or a guaranteed transmission data size indicated by the current QoS profile, the RAN node determines a QoS profile that is in the plurality of candidate QoS profiles and that matches the current network status as the target QoS profile.

For example, the RAN node actively determines the target QoS profile in the plurality of candidate QoS profiles based on the current network status. Specifically, refer to the following method shown in FIG. 4.

For example, the RAN node determines the target QoS profile in the plurality of candidate QoS profiles based on the current network status and information included in any candidate QoS profile. Specifically, refer to the method shown in FIG. 5 or FIG. 6.

S904: The RAN node sends the first information to the terminal and/or a computing node based on the transmission mode indication information. Correspondingly, the terminal and/or the computing node receive/receives the first information from the RAN node.

In a possible implementation, if the transmission mode indication information indicates to transmit the first information to the terminal by using the air interface signaling, the RAN node sends the first information to the terminal by using the air interface signaling. For example, the RAN node sends the first information to the terminal by using DCI, a MAC CE, a PDCP control PDU message, or an RRC message, so that the terminal transmits the first information to an access stratum of the terminal, and the access stratum notifies an application layer of the terminal. Optionally, after the application layer of the terminal obtains the first information, a client at the application layer may indicate the first information to the computing node.

Optionally, the transmission mode indication information may include a field corresponding to the air interface signaling, to indicate a type of air interface signaling used by the RAN node to send the first information to the terminal. For example, if the transmission mode indication information includes a field corresponding to the DCI, the RAN node sends the DCI to the terminal, where the DCI includes the first information; if the transmission mode indication information includes a field corresponding to the MAC CE, the RAN node sends the MAC CE to the terminal, where the MAC CE includes the first information; if the transmission mode indication information includes a field corresponding to the PDCP control PDU message, the RAN node sends the PDCP control PDU message to the terminal, where the PDCP control PDU message includes the first information; or if the transmission mode indication information includes a field corresponding to the RRC message, the RAN node sends the RRC message to the terminal, where the RRC message includes the first information.

In a possible implementation, if the transmission mode indication information indicates to transmit the first information to the UPF network element in the user plane manner, the RAN node may include the first information in a header of one or more data packets, to indicate the first information to the UPF network element.

For example, the RAN node sends a first data packet to the UPF network element, where a header of the first data packet includes the first information. Specifically, the RAN node includes the first information in a GTP-U header of the first data packet over an N3 interface, to quickly send the first information. After receiving the first data packet, the UPF network element detects the GTP-U header of the first data packet to obtain the first information, and then sends the first information to the computing node. For example, the UPF sends the first information to the computing node in an API manner via an NEF or a local-NEF. For another example, the UPF network element sends a second data packet to the computing node. Correspondingly, the computing node receives the second data packet from the UPF. The second data packet includes the first information. The second data packet is an RTP data packet, an RTCP data packet, a QUIC data packet, or another data packet of a protocol above an IP layer.

Optionally, the first data packet corresponds to the first session, or the first data packet corresponds to the first QoS flow.

Optionally, the transmission mode indication information may include a field corresponding to the first session, to indicate the RAN node to transmit the first information to the UPF network element by using the data packet corresponding to the first session. Alternatively, the transmission mode indication information may include a field corresponding to the first QoS flow, to indicate the RAN node to transmit the first information to the UPF network element by using the data packet corresponding to the first QoS flow.

In a possible implementation, if the transmission mode indication information indicates to transmit the first information to the terminal by using the air interface signaling and transmit the first information to the UPF network element in the user plane manner, the RAN node sends the first information to the terminal by using the air interface signaling, and the RAN node sends the first data packet to the UPF network element.

It may be understood that for other descriptions of sending the first information by the RAN node to the terminal and/or the computing node, refer to corresponding descriptions in S405 or S505. Details are not described again.

It may be understood that in the method shown in FIG. 9, a device that determines the target QoS profile is the RAN node. During specific application, the device that determines the target QoS profile may alternatively be a device other than the RAN node, for example, any one or more network elements in the core network. This is not limited. After determining the target QoS profile, the device may indicate the target QoS profile and the transmission mode indication information to the RAN node, so that the RAN node transmits the first information.

It may be understood that, in the foregoing embodiments, support for a candidate QoS profile is described at a granularity of a QoS flow. During specific application, support for a candidate QoS profile may alternatively be described by using another granularity, for example, a session granularity, a slice granularity, or a task granularity. This is not limited.

The foregoing mainly describes the solutions provided in this application from a perspective of interaction between network elements. Correspondingly, this application further provides a communication apparatus. The communication apparatus may be the RAN node in the foregoing method embodiments, an apparatus including the foregoing RAN node, or a component that can be used in the RAN node. Alternatively, the communication apparatus may be the first network element in the foregoing method embodiments, an apparatus including the foregoing first network element, or a component that can be used in the first network element. It may be understood that, to implement the foregoing functions, the RAN node, the first network element, or the like includes a corresponding hardware structure and/or software module for performing the functions. A person skilled in the art should be easily aware that, in combination with units and algorithm operations of the examples described in embodiments disclosed in this specification, this application can be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In this application, the RAN node, the first network element, or the like may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It may be understood that division into the modules in this application is an example, and is merely logical function division. During actual implementation, another division manner may be used.

For example, when each functional module is obtained through division in an integrated manner, a structure of the RAN node may be shown in FIG. 7. In other words, the communication apparatus 70 may be configured to implement a function of the RAN node. For example, the communication apparatus 70 is the RAN node in the embodiment shown in FIG. 9.

The processing module 701 is configured to obtain a plurality of candidate quality of service profiles and transmission mode indication information. The transmission mode indication information indicates to transmit first information to a terminal by using air interface signaling, and/or transmit the first information to a user plane function network element in a user plane manner. For example, the processing module 701 is configured to perform S902.

The processing module 701 is further configured to determine a target quality of service profile in the plurality of candidate quality of service profiles. For example, the processing module 701 is configured to perform S903.

The interface module 702 is configured to send the first information based on the transmission mode indication information. The first information indicates the target quality of service profile. For example, the interface module 702 is configured to perform S904.

In a possible implementation, when the transmission mode indication information indicates to transmit the first information to the terminal by using air interface signaling, the interface module 702 is specifically configured to send the first information to the terminal by using the air interface signaling.

In a possible implementation, the air interface signaling includes a radio resource control message, a packet data convergence protocol control protocol data unit message, a medium access control control element, or downlink control information.

In a possible implementation, when the transmission mode indication information indicates to transmit the first information to the user plane function network element in the user plane manner, the interface module 702 is specifically configured to send a first data packet to the user plane function network element, where a header of the first data packet includes the first information.

In a possible implementation, the first data packet corresponds to a first session, and the first session is a session corresponding to the plurality of candidate quality of service profiles; or the first data packet corresponds to a first quality of service flow, and the first quality of service flow is a quality of service flow corresponding to the plurality of candidate quality of service profiles.

In a possible implementation, the first information includes at least one of the following: an index of the target quality of service profile, related information of the target quality of service profile, and a guaranteed flow bit rate, an uplink guaranteed flow bit rate, a downlink guaranteed flow bit rate, a packet error rate, condition information for restricting selection of the target quality of service profile, computation load information of the terminal, a total uplink and downlink packet delay budget, an uplink packet delay budget, or a downlink packet delay budget that is included in the target quality of service profile.

When the communication apparatus is configured to implement the function of the RAN node, for other functions that can be implemented by the communication apparatus 70, refer to related descriptions in the embodiment shown in FIG. 9. Details are not described again.

Alternatively, for example, the communication apparatus 70 is configured to implement a function of a first network element. For example, the communication apparatus 70 is the first network element in the embodiment shown in FIG. 9.

The processing module 701 is configured to obtain a plurality of candidate quality of service profiles. For example, the processing module 701 may be configured to perform S901.

The interface module 702 is configured to send the plurality of candidate quality of service profiles and transmission mode indication information to a radio access network node. The transmission mode indication information indicates to transmit first information to a terminal by using air interface signaling, and/or transmit the first information to a user plane function network element in a user plane manner. The first information indicates a target quality of service profile in the plurality of candidate quality of service profiles. For example, the interface module 702 may be configured to perform S902.

In a possible implementation, the air interface signaling includes a radio resource control message, a packet data convergence protocol control protocol data unit message, a medium access control control element, or downlink control information.

In a possible implementation, transmitting the first information to the user plane function network element in the user plane manner includes transmitting the first information to the user plane function network element by using a data packet corresponding to a first session, where the first session is a session corresponding to the plurality of candidate quality of service profiles; or transmitting the first information to the user plane function network element in the user plane manner includes transmitting the first information to the user plane function network element by using a data packet corresponding to a first quality of service flow, where the first quality of service flow is a quality of service flow corresponding to the plurality of candidate quality of service profiles.

When the communication apparatus is configured to implement the function of the first network element, for other functions that can be implemented by the communication apparatus 70, refer to related descriptions in the embodiment shown in FIG. 9. Details are not described again.

Optionally, this application further provides a chip system, including at least one processor and an interface. The at least one processor is coupled to a memory through the interface. When the at least one processor executes a computer program or instructions in the memory, the method in any one of the foregoing method embodiments is performed. In a possible implementation, the chip system further includes a memory. Optionally, the chip system may include a chip, or may include a chip and another discrete component. This is not specifically limited in this application.

Optionally, this application further provides a computer-readable storage medium. All or some of procedures in the foregoing method embodiments may be implemented by related hardware instructed by a computer program. The program may be stored in the foregoing computer-readable storage medium. When the program is executed, the procedures in the foregoing method embodiments may be included. The computer-readable storage medium may be an internal storage unit of the communication apparatus in any one of the foregoing embodiments, for example, a hard disk drive or a memory of the communication apparatus. Alternatively, the computer-readable storage medium may be an external storage device of the communication apparatus, for example, a plug-in hard disk drive, a smart media card (smart media card, SMC), a secure digital (secure digital, SD) card, or a flash card (flash card) that is configured on the communication apparatus. Further, the computer-readable storage medium may include both an internal storage unit and an external storage device of the communication apparatus. The computer-readable storage medium is configured to store the computer program and store other programs and data that are required by the communication apparatus. The computer-readable storage medium may be further configured to temporarily store data that has been output or is to be output.

Optionally, this application further provides a computer program product. All or some of procedures in the foregoing method embodiments may be implemented by related hardware instructed by a computer program. The program may be stored in the computer program product. When the program is executed, the procedures in the foregoing method embodiments may be included.

Optionally, this application further provides computer instructions. All or some of the processes in the foregoing method embodiments may be implemented by the computer instructions instructing related hardware (for example, a computer, a processor, a RAN node, a terminal, a first network element, a second network element, or a computing node). The program may be stored in the computer-readable storage medium or the computer program product.

Optionally, this application further provides a communication system, including the RAN node in the embodiment shown in FIG. 4 and the first network element in the embodiment shown in FIG. 4. Optionally, the communication system further includes the computing node and/or the terminal in the embodiment shown in FIG. 4.

Optionally, this application further provides a communication system, including the RAN node in the embodiment shown in FIG. 5 and the first network element in the embodiment shown in FIG. 5. Optionally, the communication system further includes the computing node and/or the terminal in the embodiment shown in FIG. 5.

The foregoing descriptions about implementations allow a person skilled in the art to understand that, for the purpose of convenient and brief description, division of the foregoing functional modules is taken as an example for illustration. In actual application, the foregoing functions can be allocated to different functional modules and implemented based on a requirement, that is, an inner structure of an apparatus is divided into different functional modules to implement all or some of the functions described above.

In the several embodiments provided in this application, it should be understood that the disclosed apparatus and method may be implemented in other manners. For example, the described apparatus embodiment is merely an example. For example, the module or division into the units is merely logical function division and may be other division in actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed on different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A communication method, wherein the method comprises:
obtaining a plurality of candidate quality of service profiles;
when a function of actively modifying a quality of service profile is enabled, determining a target quality of service profile based on a current network status and a terminal load corresponding to one or more of the plurality of candidate quality of service profiles; and
sending first information, wherein the first information indicates the target quality of service profile.

2. The method according to claim 1, wherein determining the target quality of service profile based on the current network status and the terminal load corresponding to one or more of the plurality of candidate quality of service profiles comprises:
preferentially determining that the target quality of service profile is a first candidate quality of service profile, wherein the first candidate quality of service profile is a candidate quality of service profile that is in a candidate quality of service profile meeting the current network status in the plurality of candidate quality of service profiles and that corresponds to a highest terminal load; or
determining that the target quality of service profile is a second candidate quality of service profile, wherein the second candidate quality of service profile is a candidate quality of service profile that is in a candidate quality of service profile meeting the current network status in the plurality of candidate quality of service profiles and that does not comprise a candidate quality of service profile with a lowest terminal load.

3. The method according to claim 2, wherein the candidate quality of service profile corresponding to the lowest terminal load is a candidate quality of service profile that meets at least one of the following in the plurality of candidate quality of service profiles: a corresponding priority being the highest, a corresponding uplink guaranteed flow bit rate being the largest, a corresponding downlink guaranteed flow bit rate being the largest, a corresponding terminal computation load being the smallest, a corresponding total uplink and downlink packet delay budget being the largest, a corresponding uplink packet delay budget being the largest, or a corresponding downlink packet delay budget being the largest.

4. The method according to claim 2 or 3, wherein
a maximum selected number of the first candidate quality of service profile in a first time period is less than or equal to a first value;
a maximum selected percentage of the first candidate quality of service profile in the first time period is less than or equal to a second value;
a maximum selected duration of the first candidate quality of service profile in the first time period is less than or equal to a third value;
a maximum selected time of the first candidate quality of service profile in the first time period is less than or equal to a fourth value; and/or
a minimum selected interval of the first candidate quality of service profile in the first time period is greater than or equal to a fifth value.

5. The method according to any one of claims 1 to 4, wherein enabling the function of actively modifying a quality of service profile comprises:
receiving first indication information, wherein the first indication information indicates to actively modify a quality of service profile, and enabling the function based on the first indication information; and/or
receiving second indication information, wherein the second indication information indicates that a terminal is overheating, and enabling the function based on the second indication information.

6. The method according to claim 5, wherein if the second indication information is received, determining the target quality of service profile based on the current network status and the terminal load corresponding to one or more of the plurality of candidate quality of service profiles comprises:
determining that the target quality of service profile is a third candidate quality of service profile, wherein a terminal load corresponding to the third candidate quality of service profile is lower than a current terminal load.

7. The method according to any one of claims 1 to 6, wherein the first information is further for determining a first parameter, and the first parameter comprises at least one of the following: a task split point, a task amount for task processing, a bit rate, a data rate, a frame rate, or resolution.

8. The method according to claim 7, wherein the first parameter is related to first difference information, and the first difference information indicates a difference between the target quality of service profile and a historical quality of service profile determined before the target quality of service profile.

9. A communication method, wherein the method comprises:
receiving information about a first session from a terminal;
obtaining a plurality of candidate quality of service profiles based on the information about the first session; and
sending the plurality of candidate quality of service profiles and first indication information to a radio access network node, wherein the first indication information indicates the radio access network node to actively modify a quality of service profile.

10. The method according to claim 9, wherein the first indication information is carried in a session resource setup request message or a session resource setup modification message.

11. A communication method, wherein the method comprises:
obtaining a plurality of candidate quality of service profiles, wherein any candidate quality of service profile in the plurality of candidate quality of service profiles comprises at least one of the following: condition information for restricting selection of the candidate quality of service profile, computation load information of a terminal, a total uplink and downlink packet delay budget, an uplink packet delay budget, or a downlink packet delay budget;
determining a target quality of service profile in the plurality of candidate quality of service profiles based on a current network status and information comprised in the candidate quality of service profile; and
sending first information, wherein the first information indicates the target quality of service profile.

12. The method according to claim 11, wherein the condition information comprises at least one of the following: a maximum selected percentage in a first time period, a maximum selected time in the first time period, a maximum selected number in the first time period, a maximum selected duration in the first time period, or a minimum selected interval in the first time period.

13. The method according to claim 11 or 12, wherein determining the target quality of service profile in the plurality of candidate quality of service profiles based on the current network status and the information comprised in the candidate quality of service profile comprises:
when the candidate quality of service profile comprises the condition information, the current network status meets a quality of service requirement of the target quality of service profile, and the target quality of service profile meets condition information comprised in the target quality of service profile;
when the candidate quality of service profile comprises the computation load information of the terminal, the current network status meets a quality of service requirement of the target quality of service profile, and computation load information of the terminal comprised in the target quality of service profile meets a current computation load requirement of the terminal;
when the candidate quality of service profile comprises the total uplink and downlink packet delay budget, the current network status meets a quality of service requirement of the target quality of service profile, and a total uplink and downlink packet delay budget provided by the current network status is less than or equal to a total uplink and downlink packet delay budget comprised in the target quality of service profile;
when the candidate quality of service profile comprises the uplink packet delay budget, the current network status meets a quality of service requirement of the target quality of service profile, and an uplink packet delay budget provided by the current network status is less than or equal to an uplink packet delay budget comprised in the target quality of service profile; or
when the candidate quality of service profile comprises the downlink packet delay budget, the current network status meets a quality of service requirement of the target quality of service profile, and a downlink packet delay budget provided by the current network status is less than or equal to a downlink packet delay budget comprised in the target quality of service profile.

14. The method according to any one of claims 11 to 13, wherein the method further comprises:
receiving first indication information, wherein the first indication information indicates to actively modify a quality of service profile; and/or
receiving second indication information, wherein the second indication information indicates that the terminal is overheating.

15. The method according to any one of claims 11 to 14, wherein the first information comprises at least one of the following: an identifier of the target quality of service profile, and the condition information for restricting selection of the target quality of service profile, the computation load information of the terminal, the total uplink and downlink packet delay budget, the uplink packet delay budget, or the downlink packet delay budget that is comprised in the target quality of service profile.

16. The method according to any one of claims 11 to 15, wherein the first information is further for determining a first parameter, and the first parameter comprises at least one of the following: a task split point, a task amount for task processing, a bit rate, a data rate, a frame rate, or resolution.

17. The method according to claim 16, wherein the first parameter is related to first difference information, and the first difference information indicates a difference between the target quality of service profile and a historical quality of service profile determined before the target quality of service profile.

18. A communication method, wherein the method comprises:
receiving information about a first session from a terminal;
obtaining a plurality of candidate quality of service profiles based on the information about the first session, wherein any candidate quality of service profile in the plurality of candidate quality of service profiles comprises at least one of the following: condition information for restricting selection of the candidate quality of service profile, computation load information of the terminal, a total uplink and downlink packet delay budget, an uplink packet delay budget, or a downlink packet delay budget; and
sending the plurality of candidate quality of service profiles to a radio access network node.

19. The method according to claim 18, wherein the condition information comprises at least one of the following: a maximum selected percentage in a first time period, a maximum selected time in the first time period, a maximum selected number in the first time period, a maximum selected duration in the first time period, or a minimum selected interval in the first time period.

20. The method according to claim 18 or 19, wherein the method further comprises:
sending first indication information to the radio access network node, wherein the first indication information indicates the radio access network node to actively modify a quality of service profile.

21. A communication method, wherein the method comprises:
receiving first information from a radio access network node, wherein the first information indicates a target quality of service profile; and
sending metadata, wherein the metadata comprises the first information.

22. The method according to claim 21, wherein the first information comprises at least one of the following: an identifier of the target quality of service profile, and an uplink guaranteed flow bit rate, a downlink guaranteed flow bit rate, a packet error rate, condition information for restricting selection of the target quality of service profile, computation load information of a terminal, a total uplink and downlink packet delay budget, an uplink packet delay budget, or a downlink packet delay budget that is comprised in the target quality of service profile.

23. The method according to claim 22, wherein the condition information comprises at least one of the following: a maximum selected percentage in a first time period, a maximum selected time in the first time period, a maximum selected number in the first time period, a maximum selected duration in the first time period, or a minimum selected interval in the first time period.

24. The method according to any one of claims 21 to 23, wherein the first information is further for determining a first parameter, and the first parameter comprises at least one of the following: a task split point, a task amount for task processing, a bit rate, a data rate, a frame rate, or resolution.

25. The method according to claim 24, wherein the first parameter is related to first difference information, and the first difference information indicates a difference between the target quality of service profile and a historical quality of service profile determined before the target quality of service profile.

26. A communication method, wherein the method comprises:
receiving a first data packet from a radio access network node, wherein a header of the first data packet comprises first information, and the first information indicates a target quality of service profile; and
sending a second data packet, wherein the second data packet comprises the first information, and the second data packet is a real-time transport protocol data packet, a real-time transport control protocol data packet, or a quick user datagram protocol internet connection data packet.

27. The method according to claim 26, wherein the first information comprises at least one of the following: an identifier of the target quality of service profile, and an uplink guaranteed flow bit rate, a downlink guaranteed flow bit rate, a packet error rate, condition information for restricting selection of the target quality of service profile, computation load information of a terminal, a total uplink and downlink packet delay budget, an uplink packet delay budget, or a downlink packet delay budget that is comprised in the target quality of service profile.

28. The method according to claim 27, wherein the condition information comprises at least one of the following: a maximum selected percentage in a first time period, a maximum selected time in the first time period, a maximum selected number in the first time period, a maximum selected duration in the first time period, or a minimum selected interval in the first time period.

29. The method according to claim 27 or 28, wherein the first information is further for determining a first parameter, and the first parameter comprises at least one of the following: a task split point, a task amount for task processing, a bit rate, a data rate, a frame rate, or resolution.

30. The method according to claim 29, wherein the first parameter is related to first difference information, and the first difference information indicates a difference between the target quality of service profile and a historical quality of service profile determined before the target quality of service profile.

31. A communication method, wherein the method comprises:
obtaining a plurality of candidate quality of service profiles and transmission mode indication information, wherein the transmission mode indication information indicates to transmit first information to a terminal by using air interface signaling, and/or transmit the first information to a user plane function network element in a user plane manner;
determining a target quality of service profile in the plurality of candidate quality of service profiles; and
sending the first information based on the transmission mode indication information, wherein the first information indicates the target quality of service profile.

32. The method according to claim 31, wherein when the transmission mode indication information indicates to transmit the first information to the terminal by using the air interface signaling, sending the first information based on the transmission mode indication information comprises:
sending the first information to the terminal by using the air interface signaling.

33. The method according to claim 32, wherein the air interface signaling comprises a radio resource control message, a packet data convergence protocol control protocol data unit message, a medium access control control element, or downlink control information.

34. The method according to any one of claims 31 to 33, wherein when the transmission mode indication information indicates to transmit the first information to the user plane function network element in the user plane manner, sending the first information based on the transmission mode indication information comprises:
sending a first data packet to the user plane function network element, wherein a header of the first data packet comprises the first information.

35. The method according to claim 34, wherein
the first data packet corresponds to a first session, and the first session is a session corresponding to the plurality of candidate quality of service profiles; or
the first data packet corresponds to a first quality of service flow, and the first quality of service flow is a quality of service flow corresponding to the plurality of candidate quality of service profiles.

36. The method according to any one of claims 31 to 35, wherein the first information comprises at least one of the following: an index of the target quality of service profile, related information of the target quality of service profile, and a guaranteed flow bit rate, an uplink guaranteed flow bit rate, a downlink guaranteed flow bit rate, a packet error rate, condition information for restricting selection of the target quality of service profile, computation load information of the terminal, a total uplink and downlink packet delay budget, an uplink packet delay budget, or a downlink packet delay budget that is comprised in the target quality of service profile.

37. A communication method, wherein the method comprises:
obtaining a plurality of candidate quality of service profiles; and
sending the plurality of candidate quality of service profiles and transmission mode indication information to a radio access network node, wherein the transmission mode indication information indicates to transmit first information to a terminal by using air interface signaling, and/or transmit the first information to a user plane function network element in a user plane manner, wherein the first information indicates a target quality of service profile in the plurality of candidate quality of service profiles.

38. The method according to claim 37, wherein the air interface signaling comprises a radio resource control message, a packet data convergence protocol control protocol data unit message, a medium access control control element, or downlink control information.

39. The method according to claim 37 or 38, wherein
transmitting the first information to the user plane function network element in the user plane manner comprises transmitting the first information to the user plane function network element by using a data packet corresponding to a first session, wherein the first session is a session corresponding to the plurality of candidate quality of service profiles; or
transmitting the first information to the user plane function network element in the user plane manner comprises transmitting the first information to the user plane function network element by using a data packet corresponding to a first quality of service flow, wherein the first quality of service flow is a quality of service flow corresponding to the plurality of candidate quality of service profiles.

40. A communication apparatus, comprising a unit or module configured to perform the method according to any one of claims 1 to 8, comprising a unit or module configured to perform the method according to claim 9 or 10, comprising a unit or module configured to perform the method according to any one of claims 11 to 17, comprising a unit or module configured to perform the method according to any one of claims 18 to 20, comprising a unit or module configured to perform the method according to any one of claims 21 to 25, comprising a unit or module configured to perform the method according to any one of claims 26 to 30, comprising a unit or module configured to perform the method according to any one of claims 31 to 36, or comprising a unit or module configured to perform the method according to any one of claims 37 to 39.

41. A communication apparatus, comprising: a processor, wherein the processor is coupled to a memory, and the memory is configured to store a program or instructions; and when the program or the instructions are executed by the processor, the apparatus is enabled to perform the method according to any one of claims 1 to 8, perform the method according to claim 9 or 10, perform the method according to any one of claims 11 to 17, perform the method according to any one of claims 18 to 20, perform the method according to any one of claims 21 to 25, perform the method according to any one of claims 26 to 30, perform the method according to any one of claims 31 to 36, or perform the method according to any one of claims 37 to 39.

42. A computer-readable storage medium, wherein the computer-readable storage medium stores a computer program or instructions; and when the computer program or the instructions are executed, a computer is enabled to perform the method according to any one of claims 1 to 8, perform the method according to claim 9 or 10, perform the method according to any one of claims 11 to 17, perform the method according to any one of claims 18 to 20, perform the method according to any one of claims 21 to 25, perform the method according to any one of claims 26 to 30, perform the method according to any one of claims 31 to 36, or perform the method according to any one of claims 37 to 39.

43. A computer program product, wherein the computer program product comprises computer program code; and when the computer program code is run on a computer, the computer is enabled to implement the method according to any one of claims 1 to 8, implement the method according to claim 9 or 10, implement the method according to any one of claims 11 to 17, implement the method according to any one of claims 18 to 20, implement the method according to any one of claims 21 to 25, implement the method according to any one of claims 26 to 30, implement the method according to any one of claims 31 to 36, or implement the method according to any one of claims 37 to 39.
